(19) Europäisches Patentamt
European Patent Office
Office européen des brevets

(11) Veröffentlichungsnummer: **0 001 451**
**B1**

(12) # EUROPÄISCHE PATENTSCHRIFT

(45) Veröffentlichungstag der Patentschrift: **23.09.81**

(51) Int. Cl.³: **C 09 B 62/00,** C 07 D 403/10, D 06 P 3/66 // C09B47/08

(21) Anmeldenummer: **78101102.8**

(22) Anmeldetag: **09.10.78**

(54) **Wasserlösliche faserreaktive grüne Phthalocyanin-Azofarbstoffe, Verfahren zu ihrer Herstellung und ihre Verwendung.**

(30) Priorität: **12.10.77 DE 2745831**

(43) Veröffentlichungstag der Anmeldung: **18.04.79 Patentblatt 79/8**

(45) Bekanntmachung des Hinweises auf die Patenterteilung: **23.09.81 Patentblatt 81/38**

(84) Benannte Vertragsstaaten: **CH DE FR GB**

(56) Entgegenhaltungen:
**GB-A-1 003 786**
**CHEMICAL ABSTRACTS, vol. 82, no. 26, june 30, 1975, ref. 172392w, IKEDA, Takuo KENMOCHI, HIROTO: »Dyeing textile materials«, Seite 80**

(73) Patentinhaber: **CASSELLA Aktiengesellschaft, Hanauer Landstrasse 526, D-6000 Frankfurt am Main 61 (DE)**

(72) Erfinder: **Aldebert, Friedrich, Dr., Steinauer Strasse 28, D-6000 Frankfurt am Main 61 (DE)**
Erfinder: **Müller, Rolf, Dr., Dornbachweg 3, D-6367 Karben -4 (DE)**
Erfinder: **Ribka, Joachim, Dr., Rügener Strasse 4, D-6050 Offenbach (DE)**

(74) Vertreter: **Urbach, Hans-Georg, Dr. et al, Hanauer Landstrasse 526, D-6000 Frankfurt am Main 61 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

Wasserlösliche faserreaktive grüne Phthalocyanin-Azofarbstoffe,
Verfahren zu ihrer Herstellung und ihre Verwendung

Die vorliegende Erfindung betrifft neue, wertvolle, wasserlösliche faserreaktive grüne Phthalocyanin-Azofarbstoffe der Formel I

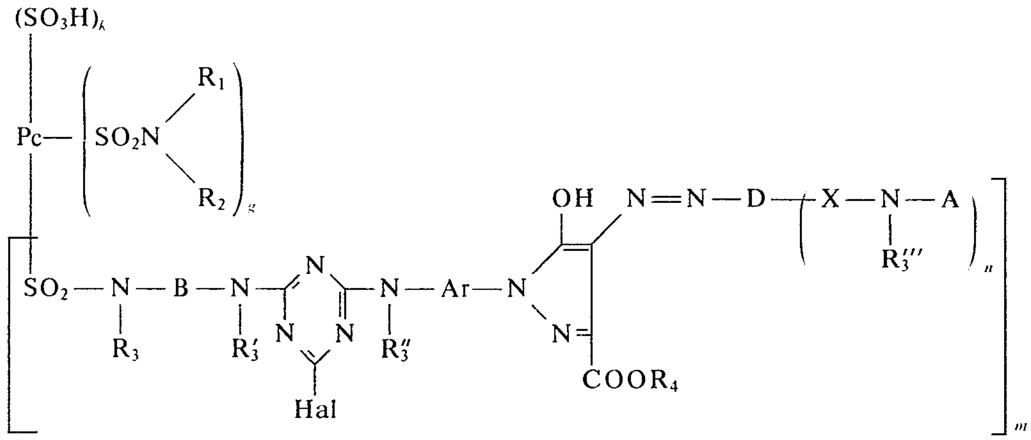

(I)

ihre Alkali-, Ammonium- oder Erdalkalisalze, Verfahren zu ihrer Herstellung und ihre Verwendung zum Färben und Bedrucken von Zellulose und Zellulose enthaltenden Textilmaterialien.

In der Formel I bedeuten

n = 0 oder 1,

Pc den Rest eines metallhaltigen oder metallfreien Phthalocyanins,

D für n = 0 einen Rest aus der Reihe: Phenyl, Naphthal,

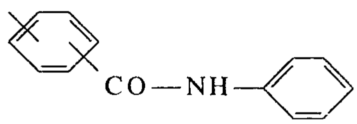

und für n = 1 einen Rest aus der Reihe Phenylen, Naphthylen,

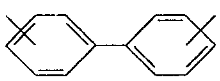 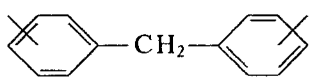 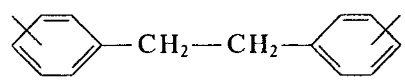

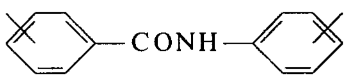 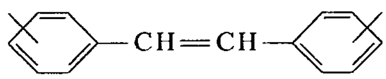 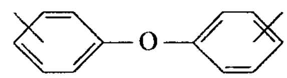

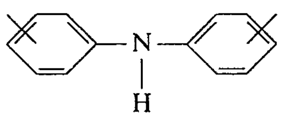 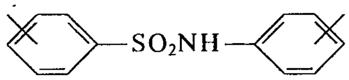 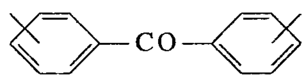

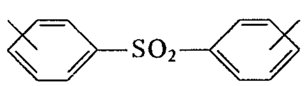 und 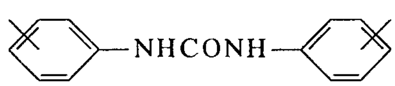

wobei der Rest D gegebenenfalls auch durch eine $SO_3H$-Gruppe substituiert sein kann und pro Kern auch noch zusätzlich durch einen Substituenten der Gruppe Alkoxy mit 1 bis 2 C-Atomen $-SO_2R_5$ oder eine zusätzliche $-SO_3H$-Gruppe, durch einen oder zwei gleiche oder verschiedene Substituenten der Gruppen Halogen,

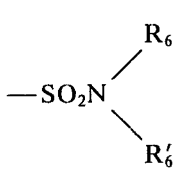 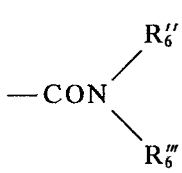 $-COOH$

oder durch ein bis drei gleiche oder verschiedene Alkylreste mit 1 bis 2 C-Atomen substituiert sein

kann, oder einen durch eine Vinylsulfon-, β-Sulfatoäthylsulfon-, β-Phosphatoäthylsulfon- oder β-Thiosulfatoäthylsulfongruppe sowie gegebenenfalls zusätzlich durch eine $-SO_3H$-Gruppe, eine Alkoxygruppe mit 1 oder 2 C-Atomen, einen Alkylrest mit 1 oder 2 C-Atomen oder eine $-COOH$-Gruppe substituierten Rest der Formel

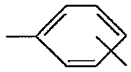 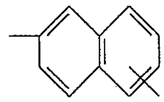 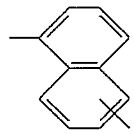 oder 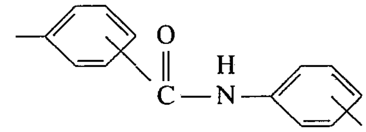

ar einen Rest aus der Reihe Phenylen, Naphthylen,

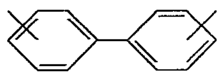 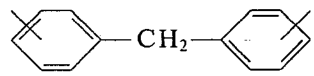 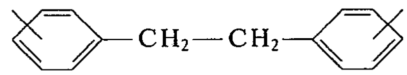

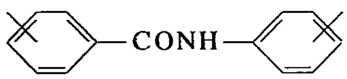 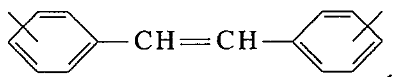 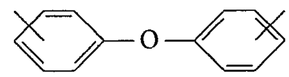

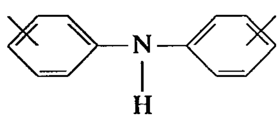 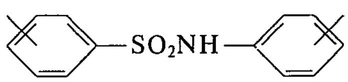 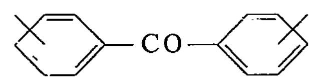

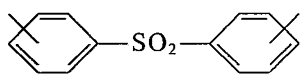 und 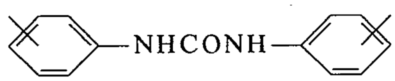

oder 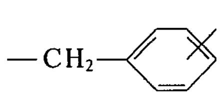 oder 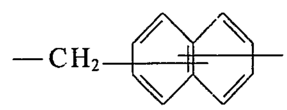

wobei jeder der beiden zuletzt genannten Reste über seine Methylenbrücke an die Gruppe

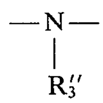

des Cyanurhalogenids gebunden ist und jeder der vorstehend genannten Reste durch eine $-SO_3H$-Gruppe substituiert sein kann und auch noch zusätzlich pro Kern durch einen Substituenten der Gruppen Alkoxy mit 1 bis 2 C-Atomen, $-SO_2R_5$ oder eine zusätzliche $-SO_3H$-Gruppe, durch einen oder zwei gleiche oder verschiedene Substituenten der Gruppen Halogen,

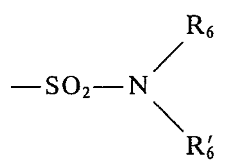 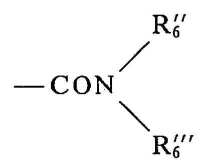 $-COOH$

oder durch ein bis drei gleiche oder verschiedene Alkylreste mit 1 bis 2 C-Atomen substituiert sein kann,

B den Rest eines aliphatischen Kohlenwasserstoffs mit 2 bis 6 C-Atomen, einen gegebenenfalls durch eine $-SO_3H$-Gruppe substituierten Rest aus der Reihe Phenylen, Naphthylen,

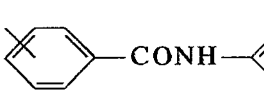 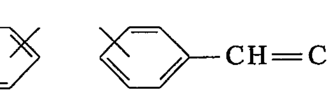 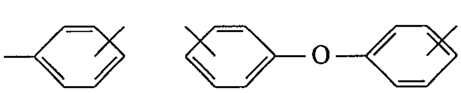

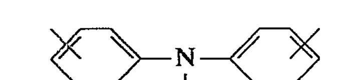 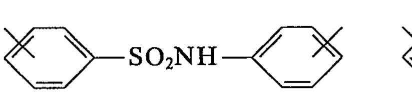 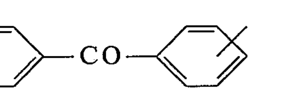

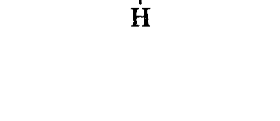  

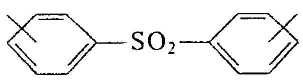 und 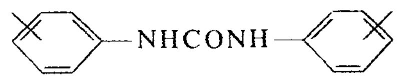

oder 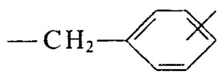 oder 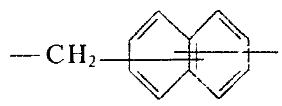

der pro Kern durch einen Substituenten der Gruppen Alkoxy mit 1 bis 2 C-Atomen, $-SO_2R_5$ oder eine zusätzliche $-SO_3H$-Gruppe, durch einen oder zwei gleiche oder verschiedene Substituenten der Gruppen Halogen,

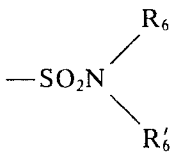 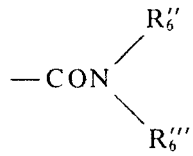 $-COOH$

oder durch ein bis drei gleiche oder verschiedene Alkylreste mit 1 bis 2 C-Atomen substituiert sein kann,
A den Acylrest einer gesättigten oder ungesättigten, gegebenenfalls durch Halogenatome substituierten aliphatischen Carbonsäure mit 2 bis 6 C-Atomen, den Acylrest der Cyclohexancarbonsäure, den gegebenenfalls durch ein bis drei Halogenatome, durch ein bis zwei Alkoxygruppen mit 1 bis 2 C-Atomen oder durch ein bis drei Alkylgruppen mit 1 bis 4 C-Atomen substituierten Acylrest der Benzoesäure oder Benzolsulfonsäure oder insbesondere den Rest einer faserreaktiven Acylierungskomponente aus der Reihe der Triazine, Chinoxaline, Phthalazine, Pyridazine, Pyrimidine oder $\alpha,\beta$-ungesättigten aliphatischen Carbonsäure,
$R_1$ Wasserstoff, Methyl, Carboxymethyl, Sulfomethyl, einen gegebenenfalls durch Cl, Br, OH, Alkoxy mit 1 bis 2 C-Atomen, Alkanoylamino mit 1 bis 2 C-Atomen, vorzugsweise Acetylamino, $-COOH$ oder $-SO_3H$ substituierten Alkylrest mit 2 bis 6 C-Atomen oder Phenyl, wobei der aromatische Kern durch Cl, Alkyl und/oder Alkoxy mit 1 bis 2 C-Atomen, Alkanoylamino mit 1 bis 2 C-Atomen, $-COOH$, $-CONH_2$, $-SO_2NH_2$, $-SO_2R_5$ oder $-SO_3H$ substituiert sein kann,
$R_2$ Wasserstoff, Methyl, Carboxymethyl, Sulfomethyl, einen gegebenenfalls durch Cl, Br, OH, Alkoxy mit 1 bis 2 C-Atomen, Alkanoylamino mit 1 bis 2 C-Atomen, Benzoylamino, $-COOH$ oder $-SO_3H$ substituierten Alkylrest mit 2 bis 6 C-Atomen oder einen unsubstituierten Alkylrest mit 6 bis 20 C-Atomen;
$R_3$, $R_3'$, $R_3''$ und $R_3'''$ unabhängig voneinander Wasserstoff, Methyl, Carboxymethyl, Sulfomethyl oder einen gegebenenfalls durch OH, Alkoxy mit 1 bis 2 C-Atomen, $-COOH$ oder $-SO_3H$ substituierten Äthylrest,
$R_4$ Wasserstoff, Methyl, gegebenenfalls durch OH, Halogen oder Alkoxy mit 1 bis 2 C-Atomen substituiertes Äthyl, Propyl, n- oder iso-Butyl, Pentyl oder Hexyl,
$R_5$ Alkyl mit 1 bis 3 C-Atomen, Carboxymethyl, $\beta$-Hydroxyäthyl oder Phenyl, wobei der Phenylrest durch Alkoxy- oder Alkylgruppen mit 1 bis 2 C-Atomen substituiert sein kann und
$R_6$, $R_6'$, $R_6''$ und $R_6'''$ Wasserstoff, Methyl, Carboxymethyl, Sulfomethyl oder einen gegebenenfalls durch OH, Alkoxy mit 1 bis 2 C-Atomen, $-COOH$ oder $-SO_3H$ substituierten Äthylrest, hal Chlor, Brom oder Fluor,
X eine direkte Bindung, oder für den Fall, daß D einen sich vom Benzol oder Naphthalin ableitenden Rest bedeutet, auch Methylen oder Äthylen,
$k = 1, 2$ oder $3$, $g = 0$ oder $1$, $m = 1, 2$ oder $3$, wobei die Summe von $k + g + m$ $3$ oder $4$ ist.

Bevorzugte Reste Pc sind die Reste des Kobalt- und des Kupferphthalocyanins, insbesondere aber der Rest des Nickelphthalocyanins.

Beispiele für Reste, die für den Fall, daß n = 0 ist, für D stehen können, sind:

Phenyl, 2-, 3- oder 4-Chlorphenyl, 2-, 3- oder 4-Methylphenyl,
2-, 3- oder 4-Sulfamoylphenyl, 2-, 3- oder 4-Carbamoylphenyl,
2-, 3- oder 4-Carbanilidophenyl,
3- oder 4-N-(3'- oder 4'-$\beta$-Sulfatoäthylsulfonyl-phenyl)-carbamoylphenyl,
2-Sulfo-4'-$\beta$-Sulfatoäthylsulfonylphenyl, 2-, 3- oder 4-Sulfophenyl,
2-, 3- oder 4-Carboxyphenyl, 2-Sulfo-4-carboxyphenyl,
2,4- oder 2,5-Disulfophenyl, 2,4- oder 2,5-Dicarboxyphenyl,
2-Sulfo-4-chlorphenyl, 2-Chlor-4-carboxyphenyl, 2-Sulfo-4-methyl-phenyl,
2-Äthyl-4-sulfophenyl, 2,4,6-Trimethyl-3'-sulfophenyl,
3-Methylsulfonyl-phenyl, 3- oder 4-$\beta$-Hydroxyäthylsulfonyl-phenyl,
3- oder 4-$\beta$-Sulfatoäthylsulfonylphenyl, 2-Sulfo-5-$\beta$-sulfatoäthylsulfonyl-phenyl,

2-Methyl-4-$\beta$-sulfatoäthylsulfonyl-phenyl,
2-Methoxy-4- oder -5-$\beta$-sulfatoäthylsulfonyl-phenyl,
2-Carboxy-5-$\beta$-sulfatoäthylsulfonyl-phenyl,
2,5-Dimethoxy-4-$\beta$-sulfatoäthylsulfonyl-phenyl,
4-Vinylsulfonyl-phenyl, 4-$\beta$-Phosphatoäthylsulfonyl-phenyl,
4-$\beta$-Thiosulfatoäthylsulphonylphenyl, 4-$\beta$-Sulfatoäthylsulfonyl-naphthyl-1,
6-$\beta$-Sulfatoäthylsulfonyl-naphthyl-2,
8-Sulfo-6-$\beta$-Sulfatoäthylsulfonyl-naphthyl-2,
N-Dimethyl-3- oder 4-sulfamoyl- oder carbamoyl-phenyl,
2-, 4-, 5-, 6-Sulfonaphthyl-1,
1,5-, 4,8- oder 6,8-Disulfonaphthyl-2 und 3,6,8- oder 4,6,8-Trisulfonaphthyl-2.

Besonders bevorzugt sind die durch eine $\beta$-Sulfatoäthylsulfonylgruppe substituierten Phenyl- oder Naphthylreste.

Beispiele für Reste, die für den Fall, daß n = 1 ist, für D stehen können, sind:

Phenylen(1,4), Phenylen(1,3), 2-Sulfophenylen(1,4), 3-Sulfophenylen(1,4),
4- oder 5-Sulfophenylen(1,3), 2-Carboxyphenylen(1,4), 6-Methoxylphenylen(1,3),
6-Carboxyphenylen(1,3), 6-Carboxy-4-sulfophenylen(1,3), 4,6-Dicarboxyphenylen(1,3),
6-Chlor-4-sulfophenylen(1,3), 2,6-Disulfophenylen(1,4), 2,5-Disulfophenylen(1,4),
4,6-Disulfophenylen(1,3), 5-Sulfo-6-methyl-phenylen(1,3),
2-Methyl-5-carboxyphenylen(1,4), 3-Äthyl-6-sulfophenylen(1,4),
2,4,6-Trimethyl-5-sulfophenylen(1,3), 2-Methylsulfonyl-phenylen(1,4),
2-Carboxymethylsulfonyl-phenylen(1,4), 4-$\beta$-Methoxy-äthylsulfonyl-phenylen(1,3),
2-$\beta$-Hydroxyäthylsulfonylphenylen(1,4), 4-Sulfonaphthylen(1,5),
4,8-Disulfonaphthylen(2,6), 1-Chlor-5-sulfonaphthylen(2,6),
2-Methyl-7-sulfonaphthylen(1,4).

Dabei steht die Azogruppe jeweils in 1-Stellung des Phenylkerns bzw. in 1- oder 2-Stellung des Naphthalinkerns. In der folgenden Liste sind Beispiele für Verbindungen angegeben, von denen sich weitere zweiwertige Reste, die für D stehen, ableiten.

Die Positionen der beiden Bindungen, mit denen die zweiwertigen Reste D einerseits an die Azogruppe (erste Positionsangabe) und andererseits an die Gruppe

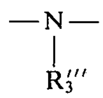

(zweite Positionsangabe) der erfindungsgemäßen Farbstoffe gebunden sind, sind in der zweiten Spalte der Tabelle angegeben.

| Verbindung, von der sich<br>–D– ableitet | Position der Bindungen<br>von –D– |
|---|---|
| Diphenyl | 4,4′ |
| 3,3′-Dichlor-diphenyl | 4,4′ |
| 2,2′-Disulfo-diphenyl | 4,4′ |
| 2,2′-Disulfo-diphenyl-methan | 4,4′ |
| 2,2′-Disulfamido-diphenyl-äthan | 4,4′ |
| Stilben-2,2′-disulfonsäure | 4,4′ |
| 1-Methyl-phenyl-3-sulfonsäure | 4,ω |
| 5-Methyl-naphthalin-1-sulfonsäure | 2,ω |
| 6-Methoxy-diphenylamin-2′-sulfonsäure | 3,4′ |
| 4-Methyl-diphenylamin-2′-sulfonsäure | 3,4′ |
| 2-Sulfo-diphenyläther | 4,4′ |
| Diphenylketon-5,5′-disulfonsäure | 3,3′ |
| 4,4′-Dichlor-diphenylsulfon | 3,3′ |
| 4-Methyl-5-sulfo-diphenylsulfon | 3,3′ |
| 3-Sulfo-benzoylanilid | 4,4′ |
| 4-Sulfo-benzoylanilid | 3,4′ |
| Benzolsulfanilid | 4,4′ |
| 3,3′-Disulfo-diphenylharnstoff | 4,4′ |
| 2,2′-Disulfo-diphenylharnstoff | 4,4′ |

Besonders bevorzugt sind die gegebenenfalls substituierten Reste Phenylen, Naphthylen, Stilben und Diphenylharnstoff und insbesondere die Reste der Formeln:

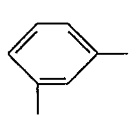
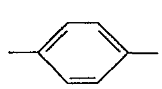
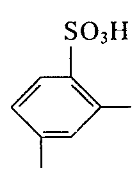
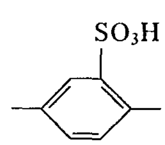
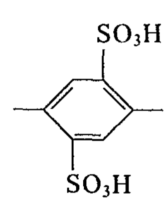

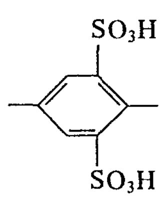
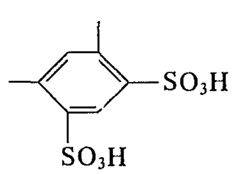
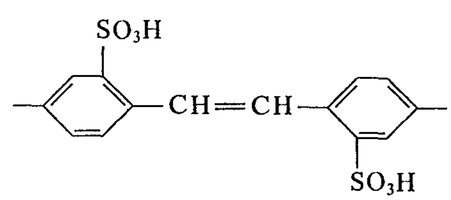

und

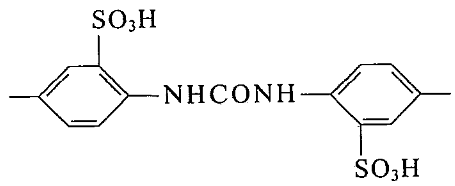

wobei die hier wiedergegebene Stellung der Stellung in der allgemeinen Formel entspricht.

Von den Farbstoffen der Formel I, die in D eine

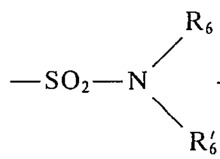 -Gruppe

oder eine

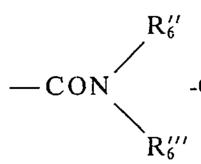 -Gruppe

tragen, sind solche bevorzugt, in denen die Reste $R_6$, $R_6'$, $R_6''$ und $R_6'''$ für Wasserstoff stehen.

Von den Farbstoffen der Formel I, die bei n = 1 in D eine $-SO_2R_5$-Gruppe enthalten, sind diejenigen bevorzugt, bei denen $R_5$ Methyl, Äthyl oder $\beta$-Hydroxyäthyl ist.

Besonders bevorzugt sind auch solche Farbstoffe der Formel I bei denen n = 1 ist, die in D außer Carbon- und/oder Sulfonsäureresten keine weiteren Substituenten enthalten.

Beispiele für Reste, die für ar stehen können, sind:

Phenylen(1,4), Phenylen-(1,3), 2-Sulfophenylen(1,4), 3-Sulfophenylen(1,4), 4- oder 5-Sulfophenylen(1,3), 2-Carboxyphenylen(1,4), 6-Methoxylphenylen(1,3), 6-Carboxyphenylen(1,3), 6-Carboxy-4-sulfophenylen(1,3), 4,6-Dicarboxyphenylen(1,3), 6-Chlor-4-sulfophenylen(1,3), 2,6-Disulfophenylen(1,4), 2,5-Disulfophenylen(1,4), 4,6-Disulfophenylen(1,3), 5-Sulfo-6-methyl-phenylen(1,3), 2-Methyl-5-carboxyphenylen(1,4), 3-Äthyl-6-sulfophenylen(1,4), 2,4,6-Trimethyl-5-sulfophenylen(1,3), 2-Methylsulfonylphenylen(1,4), 2-Carboxymethylsulfonylphenylen(1,4), 4-$\beta$-Methoxy-äthylsulfonyl-phenylen(1,3), 2-$\beta$-Hydroxyäthylsulfonylphenylen(1,4), 4-Sulfonaphtylen-(1,5), 4,8-Disulfonaphthylen(2,6), 1-Chlor-5-sulfonaphthylen(2,6), 2-Methyl-7-sulfonaphthylen(1,4).

Dabei steht die Pyrazolongruppe jeweils in 1-Stellung des Phenylkerns bzw. in 1- oder 2-Stellung des Naphthalinkerns. In der folgenden Liste sind Beispiele für Verbindungen angegeben, von denen sich weitere zweiwertige Reste, die für ar stehen, ableiten.

Die Positionen der beiden Bindungen, mit denen die zweiwertigen Reste ar einerseits an die Pyrazolongruppe (erste Positionsangabe) und andererseits an die Gruppe

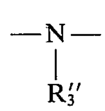

(zweite Positionsangabe) drer erfindungsgemäßen Farbstoffe gebunden sind, sind in der zweiten Spalte der Tabelle angegeben.

| Verbindung, von der sich —ar— ableitet | Position der Bindungen von —ar— |
|---|---|
| Diphenyl | 4,4′ |
| 3,3′-Dichlor-diphenyl | 4,4′ |
| 2,2′-Disulfo-diphenyl | 4,4′ |
| 2,2′-Disulfo-diphenyl-methan | 4,4′ |
| 2,2′-Disulfamido-diphenyl-äthan | 4,4′ |
| Stilben-2,2′-disulfonsäure | 4,4′ |
| 1-Methyl-phenyl-3-sulfonsäure | 4,ω |
| 5-Methyl-naphthalin-1-sulfonsäure | 2,ω |
| 6-Methoxy-diphenylamin-2′-sulfonsäure | 3,4′ |
| 4-Methyl-diphenylamin-2′-sulfonsäure | 3,4′ |
| 2-Sulfo-diphenyläther | 4,4′ |
| Diphenylketon-5,5′-disulfonsäure | 3,3′ |
| 4,4′-Dichlor-diphenylsulfon | 3,3′ |
| 4-Methyl-5-sulfo-diphenylsulfon | 3,3′ |
| 3-Sulfo-benzoylanilid | 4,4′ |
| 4-Sulfo-benzoylanilid | 3,4′ |
| Benzolsulfanilid | 4,4′ |
| 3,3′-Disulfo-diphenylharnstoff | 4,4′ |
| 2,2′-Disulfo-diphenylharnstoff | 4,4′ |

Besonders bevorzugt sind die gegebenenfalls substituierten Reste Phenylen, Naphthylen, Stilben und Diphenylenharnstoff und insbesondere die Reste der Formeln:

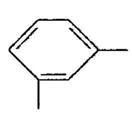
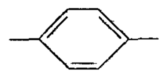
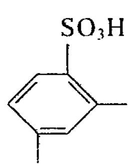
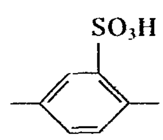
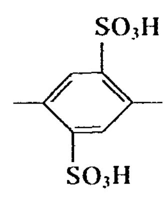
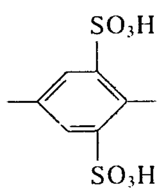
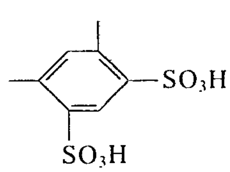
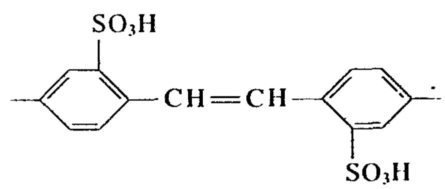

und

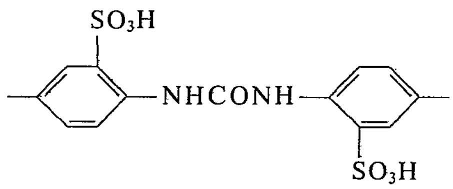

wobei die hier wiedergegebene Stellung der Stellung in der allgemeinen Formel entspricht.

Von den Farbstoffen der Formel I, die in ar eine

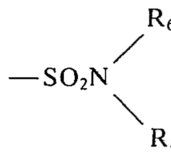 -Gruppe

oder eine

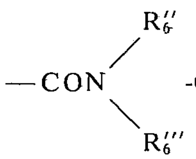 -Gruppe

tragen, sind solche bevorzugt, in denen die Reste $R_6$, $R_6'$, $R_6''$ und $R_6'''$ für Wasserstoff stehen. Von den Farbstoffen der Formel, die in ar eine $-SO_2R_5$-Gruppe enthalten, sind diejenigen bevorzugt, bei denen $R_5$ Methyl, Äthyl oder $\beta$-Hydroxyäthyl ist. Besonders bevorzugt sind auch solche Farbstoffe der Formel I, die in ar außer Carbon und/oder Sulfonsäureresten keine weiteren Substituenten enthalten.

Beispiele für aliphatische Kohlenwasserstoffreste mit 2 bis 6 C-Atomen sind: Äthylen, Tri-, Tetra- und Hexamethylen. Besonders bevorzugt ist der Äthylenrest. Weitere Beispiele für B sind:

Phenylen(1,4), Phenylen(1,3), 2-Sulfophenylen(1,4), 3-Sulfophenylen(1,4),
4- oder 5-Sulfophenylen(1,3), 2-Carboxyphenylen-(1,4), 6-Methoxylphenylen(1,3),
6-Carboxyphenylen(1,3), 6-Carboxy-4-sulfophenylen(1,3), 4,6-Dicarboxyphenylen(1,3),
6-Chlor-4-sulfophenylen(1,3), 2,6-Disulfophenylen(1,4), 2,5-Disulfophenylen(1,4),
5-Sulfo-6-methylphenylen(1,3), 2-Methyl-5-carboxyphenylen(1,4),
3-Äthyl-6-sulfophenylen(1,4), 2,4,6-Trimethyl-5-sulfophenylen(1,3),
2-Methylsulfonyl-phenylen(1,4), 2-Carboxymethylsulfonyl-phenylen(1,4),
4-$\beta$-Methoxy-äthylsulfonyl-phenylen(1,3), 2-$\beta$-Hydroxyäthylsulfonylphenylen(1,4),
4-Sulfonaphthylen(1,5), 4,8-Disulfonaphthylen(2,6),
1-Chlor-5-Sulfonaphthylen(2,6), 2-Methyl-7-sulfonaphthylen(1,4).

Dabei steht die Sulfonamidgruppe jeweils in 1-Stellung des Phenylkerns bzw. in 1- oder 2-Stellung des Naphthalinkerns. In der folgenden Liste sind Beispiele für Verbindungen angegeben, von denen sich weitere zweiwertige Reste, die für B stehen, ableiten.

Die Positionen der beiden Bindungen, mit denen die zweiwertigen Reste B einerseits an die Sulfonamidgruppe (erste Positionsangabe) und andererseits an die Gruppe

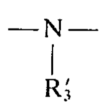

(zweite Positionsangabe) der erfindungsgemäßen Farbstoffe gebunden sind, sind in der zweiten Spalte der Tabelle angegeben.

| Verbindung, von der sich —B— ableitet | Position der Bindungen von —B— |
|---|---|
| Diphenyl | 4,4′ |
| 3,3′-Dichlor-diphenyl | 4,4′ |
| 2,2′-Disulfo-diphenyl | 4,4′ |
| 2,2′-Disulfo-diphenyl-methan | 4,4′ |
| 2,2′-Disulfamido-diphenyl-äthan | 4,4′ |
| Stilben-2,2′-disulfonsäure | 4,4′ |
| 1-Methyl-phenyl-3-sulfonsäure | 4,ω |
| 5-Methyl-naphthalin-1-sulfonsäure | 2,ω |
| 6-Methoxy-diphenylamin-2′-sulfonsäure | 3,4′ |
| 4-Methyl-diphenylamin-2′-sulfonsäure | 3,4′ |
| 2-Sulfo-diphenyläther | 4,4′ |
| Diphenylketon-5,5′-disulfonsäure | 3,3′ |
| 4,4′-Dichlor-diphenylsulfon | 3,3′ |
| 4-Methyl-5-sulfo-diphenylsulfon | 3,3′ |
| 3-Sulfo-benzoylanilid | 4,4′ |
| 4-Sulfo-benzoylanilid | 3,4′ |
| Benzolsulfanilid | 4,4′ |
| 3,3′-Disulfo-diphenylharnstoff | 4,4′ |
| 2,2′-Disulfo-diphenylharnstoff | 4,4′ |

Besonders bevorzugt sind die gegebenenfalls substituierten Reste Phenylen, Naphthylen, Stilben und Diphenylenharnstoff und insbesondere die Reste der Formeln:

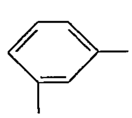
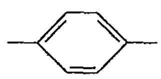
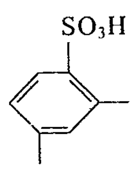
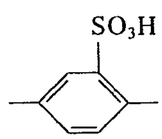
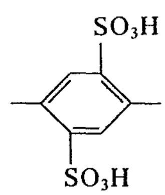

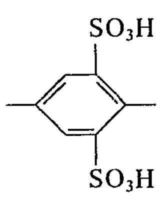
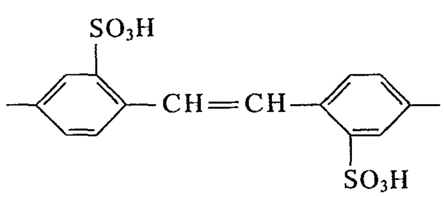

und

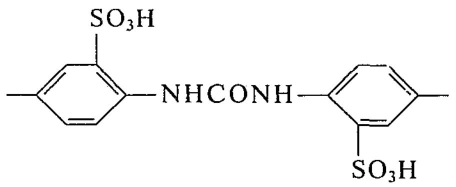

wobei die hier wiedergegebene Stellung der Stellung in der allgemeinen Formel entspricht.

Von den Farbstoffen der Formel I, die in B eine

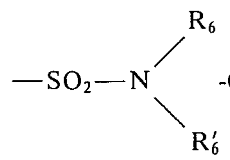 -Gruppe

oder eine

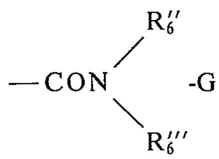 -Gruppe

tragen, sind solche bevorzugt, in denen die Reste $R_6$, $R_6'$, $R_6''$ und $R_6'''$ für Wasserstoff stehen.

Von den Farbstoffen der Formel I, die in B eine $-SO_2R_5$-Gruppe enthalten, sind diejenigen bevorzugt, bei denen $R_5$ Methyl, Äthyl oder $\beta$-Hydroxyäthyl ist.

Besonders bevorzugt sind auch solche Farbstoffe der Formel I, die in B außer Carbon- und/oder Sulfonsäureresten keine weiteren Substituenten enthalten.

Bevorzugte Reste, die für $R_1$, $R_2$, $R_3$ und $R_4$ stehen sind Wasserstoff, Methyl und Äthyl. Besonders bevorzugt ist der Wasserstoff.

Die bevorzugte Herstellung der Farbstoffe der Formel I erfolgt durch Azokupplung. Darüber hinaus können die Farbstoffe auch durch Kondensation zweier Teilstücke hergestellt werden.

Bei der Herstellung durch Azokupplung werden m-Mole eines Amins der Formel II

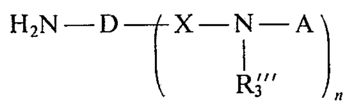 (II)

in der D, A, $R_3'''$, X und n die oben angegebene Bedeutung haben, diazotiert und auf 1 Mol eines Pyrazolons der allgemeinen Formel III

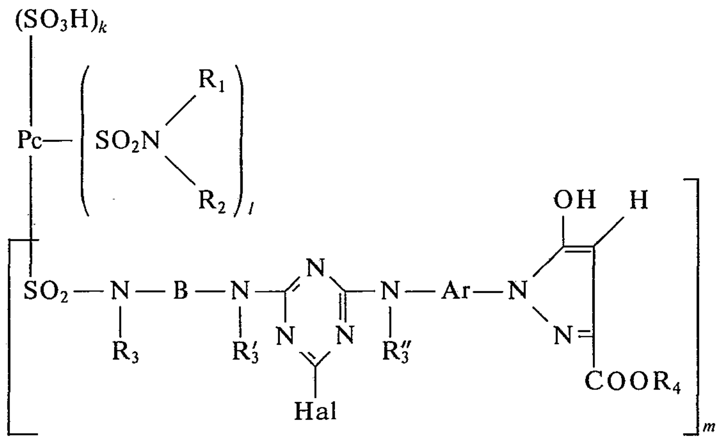 (III)

worin Pc, B, ar, $R_1$, $R_2$, $R_3$, $R_3'$, $R_3''$, $R_4$, k, l, m und hal die oben angegebene Bedeutung haben, gekuppelt.

Bei der Herstellung durch Kondensationsreaktion können die Farbstoffe entsprechend dem folgenden Schema Ia auf zwei Wegen (I oder II) aus den zwei rechts und links der gestrichelten

Trennlinien liegenden Teilstücken $a_I$ und $b_I$ oder $a_{II}$ und $b_{II}$, von denen jeweils das eine eine

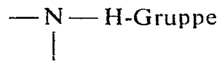

das andere einen Dihalogentriazinrest enthält, unter Abspaltung von hal-H erhalten werden. Dabei haben Pc, B, ar, D, $R_1$, $R_2$, $R_3$, $R_3'$, $R_3''$, $R_3'''$, $R_4$, k, l, m, n und A die oben angegebene Bedeutung mit der Ausnahme, daß A nicht die Bedeutung eines Dihalogentriazinrestes hat.

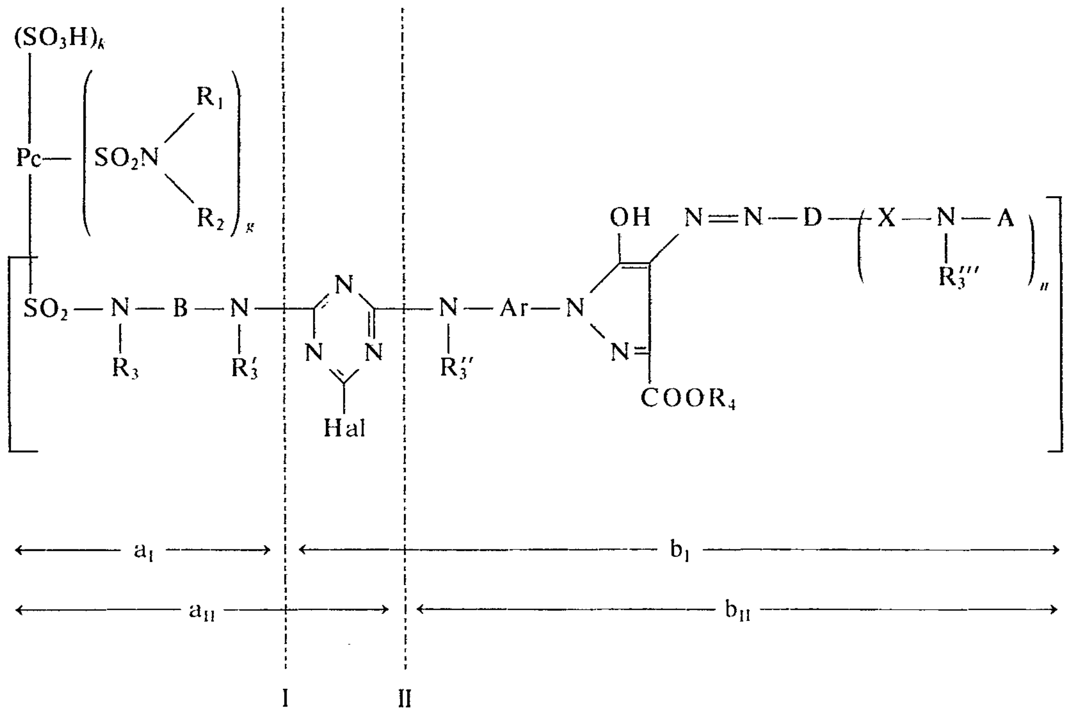

(Ia)

Bei der Herstellung der erfindungsgemäßen Farbstoffe aus den Teilstücken $a_I$ und $b_I$ (Ausführungsform I) werden m-Mole eines dihalogentriazinhaltigen Azofarbstoffs der allgemeinen Formel IV

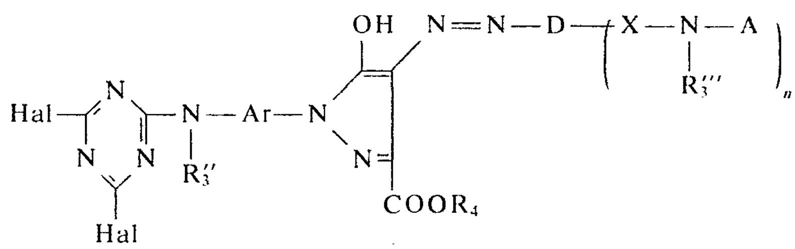

(IV)

in der ar, D, A, $R_3''$, $R_3'''$, $R_4$, hal, X und n die oben angegebene Bedeutung haben mit der Ausnahme, daß A nicht für den Rest eines Dihalogentriazins steht, mit 1 Mol eines Phthalocyaninderivats der Formel V kondensiert.

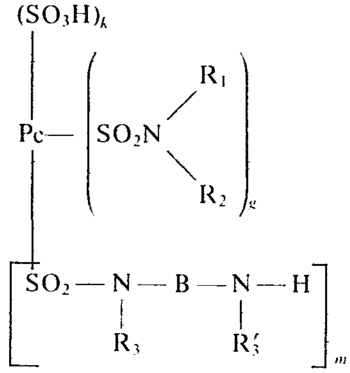

(V)

worin Pc, B, $R_1$, $R_2$, $R_3$, $R_3'$, k, g und m die oben angegebene Bedeutung haben.

Zur Herstellung der erfindungsgemäßen Farbstoffe aus den Teilstücken $a_{II}$ und $b_{II}$ (Ausführungsform II) werden m Mole eines Aminoazofarbstoffes der allgemeinen Formel VI

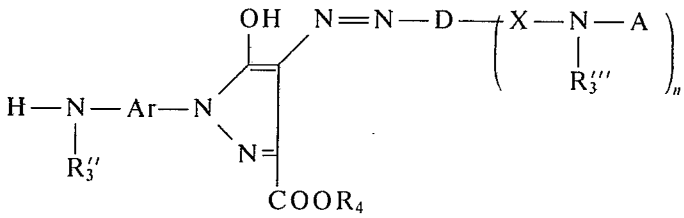

(VI)

in der ar, D, A, $R_3''$, $R_3'''$, $R_4$, X und n die oben angegebene Bedeutung haben mit der Ausnahme, daß A nicht für den Rest eines Dihalogentriazins steht, mit einem Dihalogentriazinderivat der VII kondensiert

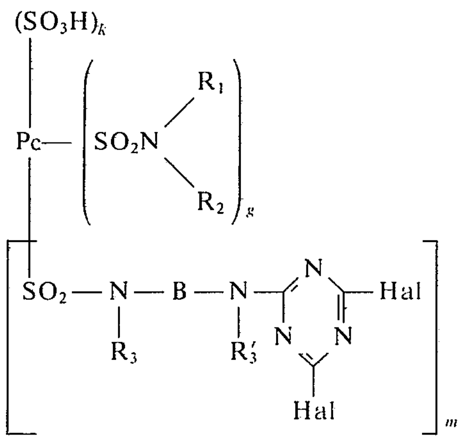

(VII)

worin Pc, B, $R_1$, $R_2$, $R_3$, $R_3'$, hal, k, g und m die oben angegebene Bedeutung haben.

Die Amine der Formel II werden sowohl zur Herstellung der erfindungsgemäßen Farbstoffe der Formel I als auch zur Herstellung der nicht erfindungsgemäßen Teilstücke der Formeln IV und VI benötigt.

Für den Fall, daß n = 0 ist, sind hierfür z. B. folgende Amine geeignet:

Anilin; o-, m-, p-Toluidin; o-, m-, p-Anisidin; o-, m-, p-Chloranilin;
Anilin-2-, -3-, -4-carbonsäure oder -sulfonsäure;
Anilin-2,4-,-2,5-dicarbonsäure oder -disulfonsäure;
3-Chlor-4-aminobenzolsulfonsäure;
4-Aminoanisol-2-sulfonsäure;
4-Aminotoluol-2-sulfonsäure; 4-Amino-phenetol-3-sulfonsäure;
2-Amino-phenetol-4-sulfonsäure; 2-Amino-toluol-3,5-disulfonsäure;
4-Amino-1,3-dimethyl-benzol-5-sulfonsäure; 2-,3- oder 4-Carbamoylanilin,
2-, 3- oder 4-Sulfamoylanilin; 3-Methylsulfonylanilin;
3- oder 4-β-Hydroxyäthylsulfonylanilin;
4-Amino-2-sulfo-2'- oder 4'-methoxy-diphenylamin; 2-Amino-diphenyläther;
2-Naphthylamin-1-, -5-, -6-, -7- oder -8-sulfonsäure;
2-Naphthylamin-1,5, -3,6-, oder 6,8-disulfonsäure;
2-Naphthylamin-1,5,7-, -3,6,8- oder -4,6,8-trisulfonsäure;
1-Naphthylamin-4- oder -7-sulfonsäure;
1-Naphthylamin-2,3,6-,-3,6,8- oder -4,6,8-trisulfonsäure;
3-Aminophenyl-β-sulfatoäthyl-sulfon;
3-Amino-4-methoxyphenyl-β-sulfatoäthyl-sulfon:
4-Amino-3-methoxyphenyl-β-sulfatoäthyl-sulfon;
3-Amino-4-methylphenyl-β-sulfatoäthyl-sulfon;
3-Amino-4-sulfophenyl-β-sulfatoäthyl-sulfon;
4-Aminophenyl-β-sulfatoäthylsulfon;
4-Aminophenyl-β-phosphatoäthylsulfon;
4-Aminophenyl-β-thiosulfatoäthyl-sulfon;
4-Aminophenyl-vinyl-sulfon;
3-(4'-Aminobenzoyl)-amino-phenyl-β-sulfatoäthylsulfon;

4-Aminonaphthyl-(1)-β-sulfatoäthylsulfon,
6-Aminonaphthyl-(2)-β-sulfatoäthyl-sulfon;
6-Amino-4-sulfonaphthyl-(2)-β-sulfatoäthylsulfon;
8-Amino-6-sulfo-naphthyl-(2)-β-sulfatoäthylsulfon.

Beispiele für Amine der Formel II mit der Bedeutung von n = 1 sind in der folgenden Tabelle angegeben:

| 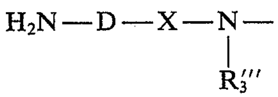 | A | X′ |
|---|---|---|
| 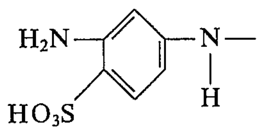 | 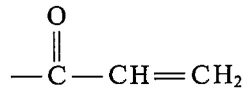 | |
| 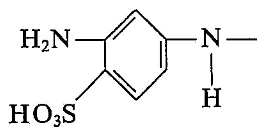 | 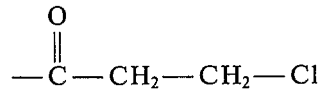 | |
| 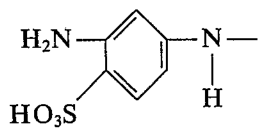 | 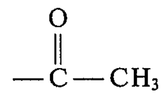 | |
| 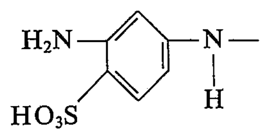 | 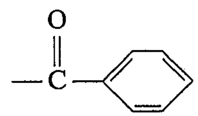 | |
| 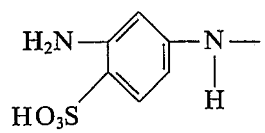 | 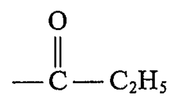 | |
| 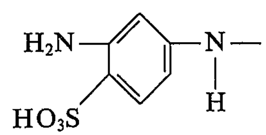 | 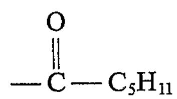 | |

Fortsetzung

| 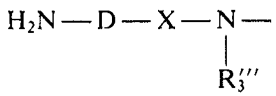 | A | X′ |
|---|---|---|
| 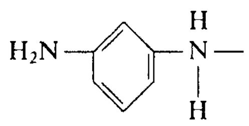 | 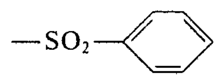 | |
| 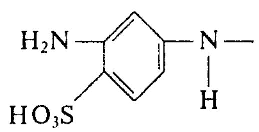 | 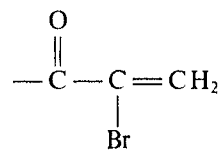 | |
| 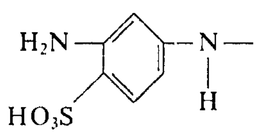 | 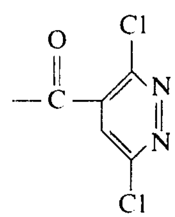 | |
| 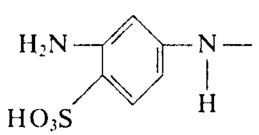 | 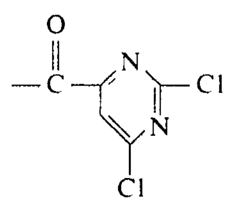 | |
| 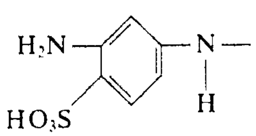 | 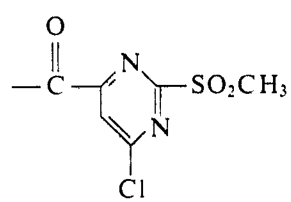 | |

Fortsetzung

| $H_2N-D-X-N(R_3''')-$ | A | X′ |
|---|---|---|
| 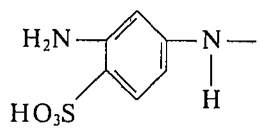 | 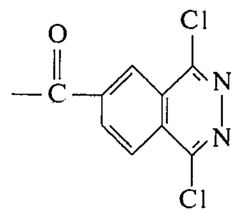 | |
| 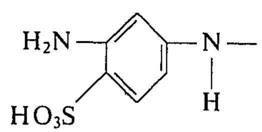 | 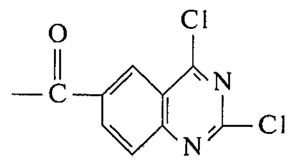 | |
| 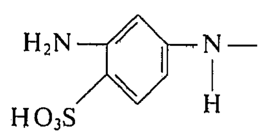 | 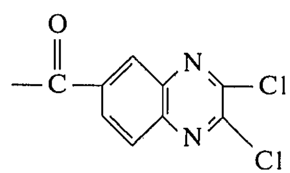 | |
| 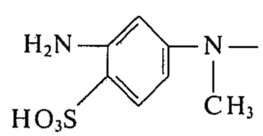 | 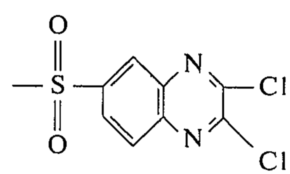 | |
| 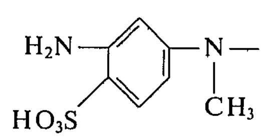 | 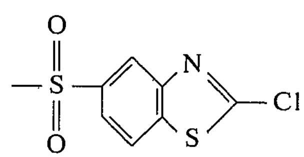 | |

Fortsetzung

| 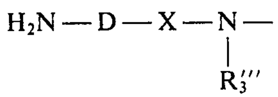 | A | X′ |
|---|---|---|
| 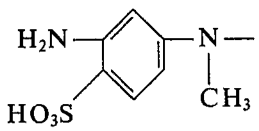 | 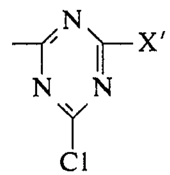 | Cl |
| 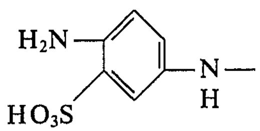 | 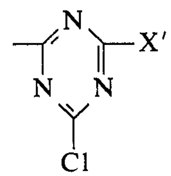 | Cl |
| 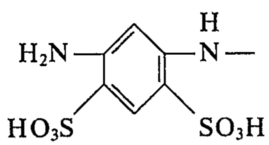 | 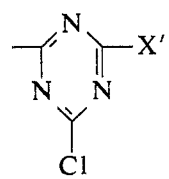 | Cl |
| 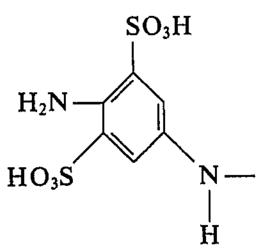 | 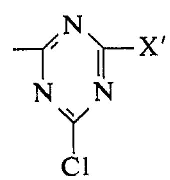 | Cl |
| 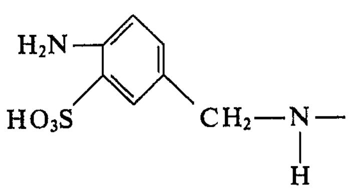 | 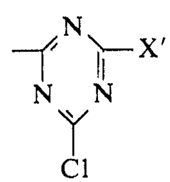 | Cl |

Fortsetzung

| 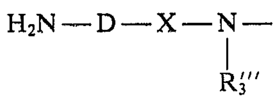 | A | X′ |
|---|---|---|
| 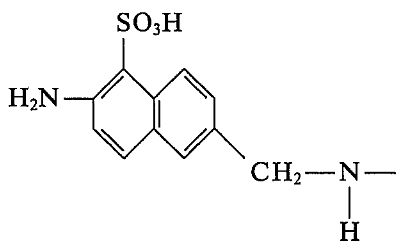 | 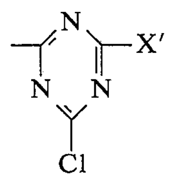 | Cl |
| 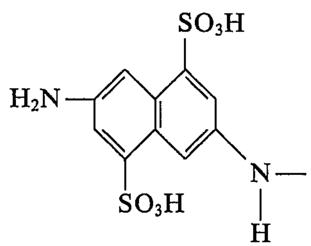 | 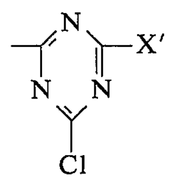 | Cl |
| 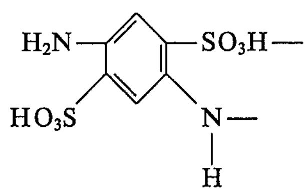 | 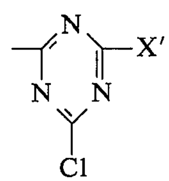 | Cl |
| 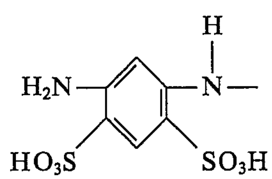 | 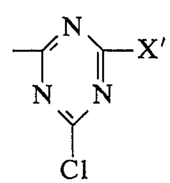 | $—NH_2$ |

Fortsetzung

| 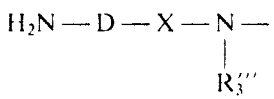 | A | X′ |
|---|---|---|
| 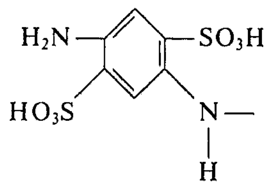 | 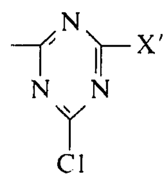 | 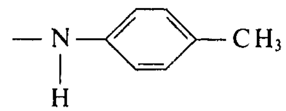 |
| 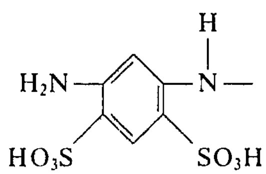 | 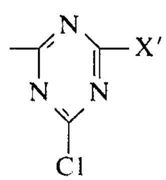 | 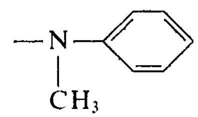 |
| 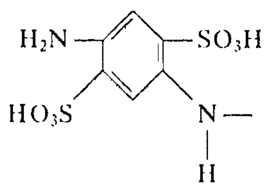 | 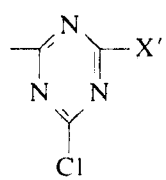 | 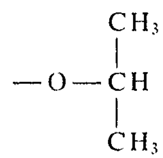 |
| 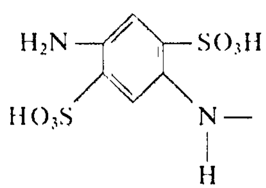 | 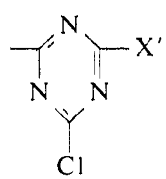 | $—O—CH_2—CH_2—O—CH_3$ |
| 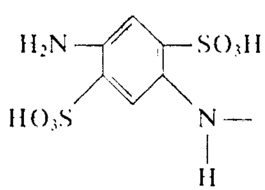 | 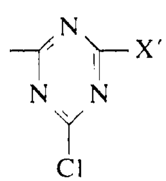 | 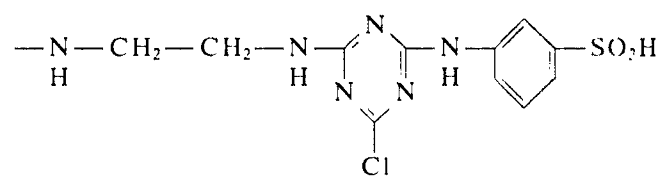 |

Fortsetzung

| 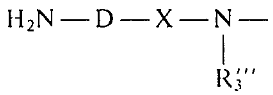 | A | X′ |
|---|---|---|
| 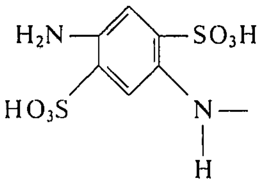 | 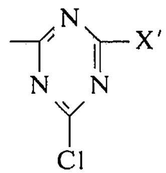 | 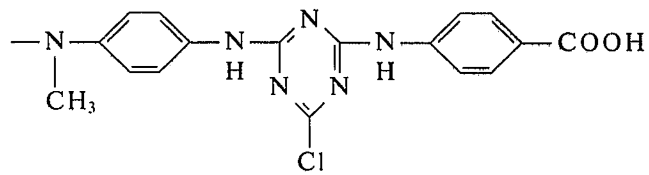 |
| 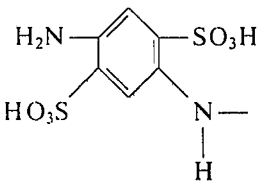 | 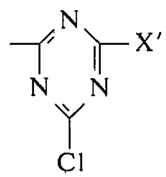 | 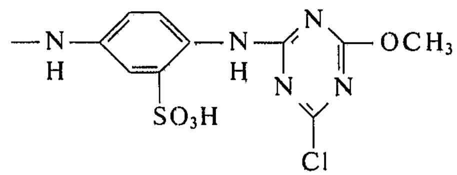 |
| 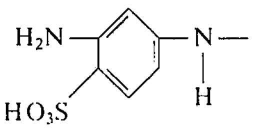 | 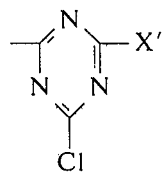 | 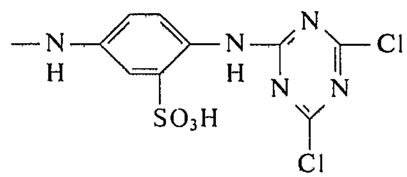 |
| 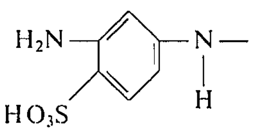 | 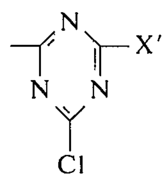 | Cl |
| 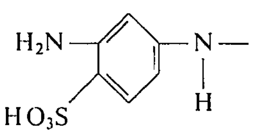 | 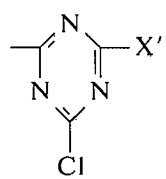 | 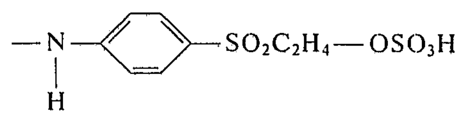 |

Fortsetzung

| 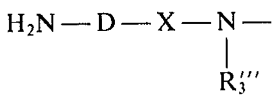 | A | X' |
|---|---|---|
| 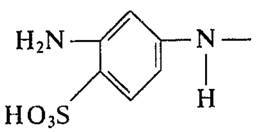 | 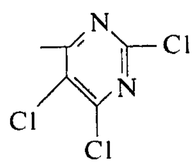 | |
| 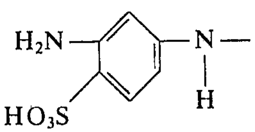 | 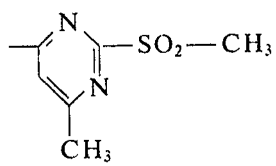 | |
| 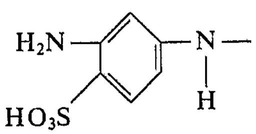 | 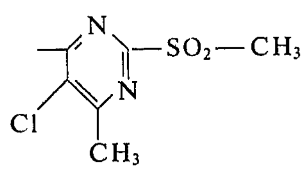 | |

Fortsetzung

| 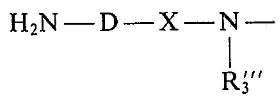 | A | X′ |
|---|---|---|
| 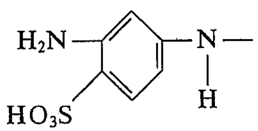 | 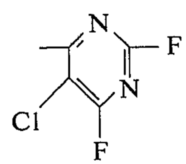 | |
| 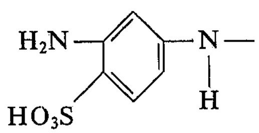 | 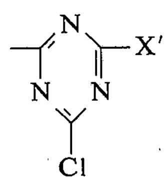 | 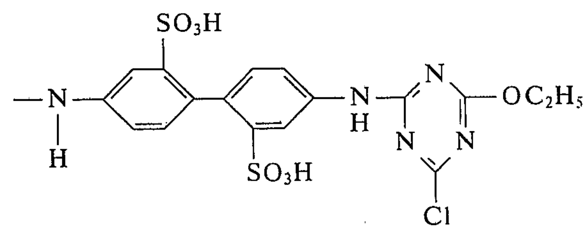 |
| 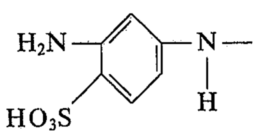 | 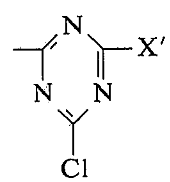 | 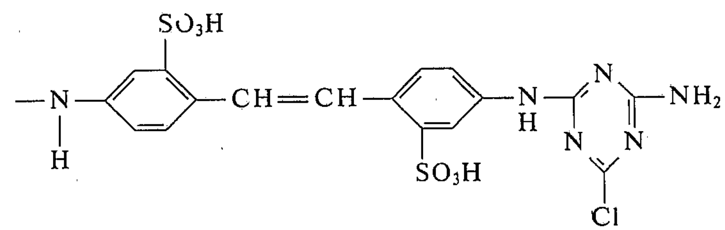 |

Die Amine der Formel II werden in an sich bekannter Weise hergestellt durch Acylierung von Diaminen der Formel IIa mit Acylierungsmitteln der Formel IX,

$$\mathrm{Hal'A} \qquad \text{(IX)}$$

in der A die oben gegebene Bedeutung hat und hal' außer der oben für hal gegebenen Bedeutung auch noch die eines sonstigen abspaltbaren Restes, z. B. einer Acetylgruppe, hat, gemäß dem Reaktionsschema

$$\underset{\text{(IIa)}}{H_2N-D-X-\underset{\displaystyle R_3'''}{\underset{|}{N}}-H} + \underset{\text{(IX)}}{\mathrm{Hal'A}} \longrightarrow \underset{\text{(II)}}{H_2N-D-X-\underset{\displaystyle R_3'''}{\underset{|}{N}}-A} + \mathrm{HHal}$$

Beispiele für Diamine IIa, die nach der Umsetzung gemäß obigem Schema zu Aminen der Formel II führen, gibt die folgende Liste:

p-Phenylendiamin
N-Methyl-p-phenylendiamin
N-Carboxymethyl-p-phenylendiamin
m-Phenylendiamin
N-$\beta$-Hydroxyäthyl-m-phenylendiamin
1,4-Phenylendiamin-2-sulfonsäure
1-Amino-4-N-sulfomethylamino-phenylen-2-sulfonsäure
1,4-Phenylendiamin-2,5- oder 2,6-disulfonsäure
1-Amino-4-N-methylamino-phenylen-2,6-disulfonsäure
1,3-Phenylendiamin-4-sulfonsäure
1,3-Phenylendiamin-4,6-disulfonsäure
2,4-Diamino-toluol-5- oder 6-sulfonsäure
2,6-Diamino-toluol-4-sulfonsäure
2,5-Diamino-1,3,5-trimethylbenzol-4-sulfonsäure
2,6-Diamino-1,3-diäthylbenzol-4-sulfonsäure
2,4-Diamino-1-chlorbenzol-6-sulfonsäure
2,4-Diaminotoluol 5- oder 6-sulfamid
2,6-Diaminotoluol-4-äthanol- oder diäthanolsulfamid
1,4-Diaminophenylen-2-dimethylsulfamid
1,3-Diaminophenylen-4-sulfanilid
1,3-Diaminophenylen-4-$\beta$-hydroxyäthylsulfon
N-Äthyl-p-phenylendiamin
1-N-Methyl-3-amino-benzol-4-sulfonsäure
2,4-Diamino-1-methoxybenzol-5-sulfonsäure
1,5-Diaminonaphthalin-2-sulfonsäure
1,4-Diaminonaphthalin-2-sulfonsäure
2,6-Diaminonaphthalin-8-sulfonsäure
2,6-Diaminonaphthalin-4,8-disulfonsäure
1,5-Diaminonaphthalin-3,7-disulfonsäure
1,4-Diaminonaphthalin-2-carbonsäure
2,2'-Dimethyl-4,4'-diaminodiphenyl
4,4'-Diaminodiphenyl-2,2'-disulfonsäure
1-Amino-4-aminomethyl-benzol
1-Amino-4-aminomethyl-benzol-3-sulfonsäure
2-Amino-5-aminomethyl-naphthalin-1-sulfonsäure
4,4'-Diamino-diphenylmethan-2,2'-disulfonsäure
4,4'-Diamino-diphenyläthan-2,2'-disulfonsäure
4,4'-Diamino-diphenyläthan-mono-sulfamid
4,4'-Diaminostilben-2,2'-disulfonsäure
4,4'-Diamino-diphenyläthan-di-$\beta$-hydroxyäthylsulfamid
4,4'-Diamino-diphenylamin-3-sulfonsäure
3,4'-Diamino-6-methoxy-diphenylamin-2'-sulfonsäure
3,4'-Diamino-4-methyl-diphenylamin-2'-sulfonsäure
3,3'-Diaminobenzophenon-5,5'-disulfonsäure
4,4'-Diamino-diphenylsulfon
4,4'-Diamino-3-sulfo-benzoylanilid
3,4'-Diamino-4-sulfo-benzoylanilid

4,4'-Diamino-3,3'-disulfo-diphenylharnstoff
4,4'-Diamino-2,2'-disulfo-diphenylharnstoff
3,3'-Diamino-4-methyl-diphenylsulfon-5-sulfonsäure

Unter den Acylierungsmitteln der Formel IX, die gemäß obigem Schema mit Diaminen der Formel IIa zu den Aminen der Formel II umgesetzt werden können, sind diejenigen bevorzugt, bei denen A für einen faserreaktiven Rest steht. Derartige Acylierungsmittel sind in der Literatur in großer Zahl beschrieben. Ein Überblick ist gegeben in »K. Venkataraman: The Chemistry of Synthetic Dyes«, Band VI, S. 4—182, Academic Press 1972. Die wichtigsten derartigen Acylierungsmittel gehören zur KLasse der Triazine, Chinoxaline, Phthalazine, Pyridazine, Pyrimidine oder der $\alpha,\beta$-ungesättigten aliphatischen Karbonsäuren. Im folgenden seien die wichtigsten Individuen stellvertretend für die gesamte Klasse genannt:

Cyanurchlorid, Cyanurbromid, Cyanurfluorid, Dihalogen-monoamino-triazine, wie 2,6-Dichlor-4-amino-triazin, 2,6-Dichlor-4-methylamino-triazin, 2,6-Dichlor-4-oxäthylaminotriazin, 2,6-Dichlor-4-phenylaminotriazin, 2,6-Dichlor-4-(o-, m- oder p-sulfophenyl)-aminotriazin, 2,6-Dichlor-4-(2-2',4'-, oder -2',5'-disulfophenyl)-aminotriazin sowie die entsprechenden Dibrom- und Difluor-Derivate, ferner Dihalogen-mono-amino-triazine, die über einen Aminoalkylrest mit 2—6 C-Atomen oder über einen Aminophenylrest oder einen Amino-sulfophenylrest einen weiteren mono- oder Dihalogen-Triazinring tragen, wie zum Beispiel 1-Dichlortriazinylamino-2-(Amino-chlortriazinyl-)-amino-äthan oder 1-Dichlortriazinylamino-2-sulfo-4-(methoxy-chlortriazinyl-)aminobenzol, Dihalogen-alkoxy- und -aryloxy-sym.-triazine, wie 2,6-Dichlor-4-methoxytriazin, 2,6-Dichlor-4-i-propoxytriazin, 2,6-Dichlor-4-phenoxytriazin, Tetrahalogenpyrimidine, wie Tetrachlor-, Tetrabrom- oder Tetrafluor-pyrimidin, 2,4,6-Trihalogenpyrimidine, wie 2,4,6-Trichlor-, Tribrom- oder -Trifluorpyrimidin, 2,4,6-Trichlor-5-nitro- oder -5-methyl- oder -5-carbomethoxy- oder -5-cyano-pyrimidin, 2,6-Difluor-4-methyl-5-chlor-pyrimidin, 2,4-Difluor-pyrimidin-5-äthylsulfon, 2,6-Difluor-4-chlorpyrimidin, 2,4,6-Trifluor-5-chlorpyrimidin, 4,6-Difluor-2,5-dichlor- oder -dibrompyrimidin, 2-Methylsulfonyl-4-chlor-6-methylpyrimidin, 2,6-Bis-methylsulfonyl-4,5-dichlorpyrimidin, 2-Methylsulfonyl-4,5-dichlor-6-methylpyrimidin, 2-Äthylsulfonyl-4,6-dichlorpyrimidin, Derivate heterocyclischer Carbon- oder Sulfonsäuren wie 3,6-Dichlorpyridazin-4-carbonsäurechlorid, 2,4-Dichlorpyrimidin-5-carbonsäurechlorid, 2,4,6-Trichlorpyrimidin-5-carbonsäurechlorid, 2-Methyl-4-chlorpyrimidin-5-carbonsäurechlorid, 2-Chlor-4-methylpyrimidin-5-carbonsäurechlorid, 2,6-Dichlorpyrimidin-4-carbonsäurechlorid, 2-Methylsulfonyl-6-chlorpyrimidin-4- oder -5-carbonsäurechlorid, 2-Äthylsulfonyl-6-chlorpyrimidin-4- oder -5-carbonsäurechlorid, 2,6-Bis-(methylsulfonyl)-pyrimidin-4-carbonsäurechlorid, 2-Methylsulfonyl-6-methyl-4-chlor- oder -4-brompyrimidin-5-carbonsäurechlorid oder -bromid, 2,6-Bis-(methylsulfonyl)-4-chlorpyrimidin-5-carbonsäurechlorid, 2- oder 3-Monochlorchinoxalin-6-carbonsäurechlorid oder -6-sulfonsäurechlorid, 2- oder 3-Monobromchinoxalin-6-carbonsäurebromid oder-6-sulfonsäurebromid, 2,3-Dichlorchinoxalin-6-carbonsäurechlorid oder -6-sulfonsäurechlorid, 2,3-Dibromchinoxalin-6-carbonsäurebromid oder -6-sulfonsäurebromid, 1,4-Dichlorphthalazin-6-carbonsäurechlorid oder -6-sulfonsäurechlorid sowie die entsprechenden Bromverbindungen, 2,4-Dichlorchinazolin-6- oder -7-carbonsäurechlorid oder -sulfonsäurechlorid sowie die entsprechenden Bromverbindungen, N-Methyl-N-(2,4-dichlortriazinyl-6)-aminoacetylchlorid, 2-Chlor-benzthiazol-5- oder -6-carbonsäurechlorid oder -5- oder -6-sulfonsäurechlorid und die entsprechenden Bromverbindungen 2-Methylsulfonyl- oder 2-Äthylsulfonyl- oder 2-Phenylsulfonylbenzthiazol-5- oder -6-sulfonsäurechlorid, aliphatische Reaktivkomponenten wie Acrylsäurechlorid, Mono- Di- oder Trichloracrylsäurechlorid, 3-Chlorpropionsäurechlorid, 3-Phenylsulfonyl-propionsäurechlorid, 3-Methylsulfonyl-propionsäurechlorid, 3-Äthylsulfonyl-propionsäurechlorid, 3-Chloräthansulfochlorid, $\alpha$-Methylsulfonylacrylsäurechlorid und $\alpha$-Bromacrylsäurechlorid.

Die Acylierung der Diamine der Formel IIa mit den Verbindungen der Formel IX gemäß obigem Schema erfolgt in an sich bekannter Weise in wäßrigem, wäßrig-organischem oder organischem Lösungsmittel nach Art einer Schotten-Baumann-Reaktion, bei Temperaturen zwischen 0 und 80°C, bevorzugt zwischen 10 und 25°C, wobei man zweckmäßigerweise die frei werdende Säure durch Zusatz von Alkali wie z. B. Natriumbicarbonat, Soda, Natronlauge oder Natriumacetat neutralisiert bzw. abpuffert. Als organische Lösungsmittel kommen vor allem Aceton, Chlorkohlenwasserstoffe wie Äthylenchlorid oder Chlorbenzol oder auch aprotische polare Lösungsmittel wie Dimethylformamid in Betracht.

Die Diazotierung der Amine der Formel II erfolgt in an sich bekannter Weise in wäßrigem Medium durch Umsetzung mit 1 Mol salpetriger Säure bzw. eines salpetrige Säure abspaltenden Agens in Gegenwart von mindestens 2 Äquivalenten, vorzugsweise ca. 2,5 Äquivalenten einer starken Säure bezogen auf 1 Mol des Amins. Als salpetrige Säure abspaltendes Agens wird in mineralsaurem Medium im allgemeinen ein Satz der salpetrigen Säure, insbesondere ein Alkalisalz wie Natrium- oder Kaliumnitrit eingesetzt.

Die zur erfindungsgemäßen Herstellung der Farbstoffe der Formel I durch Azokupplung benötigten

Phthalocyaninpyrazolone der Formel III sind neu. Zu ihrer Herstellung wird ein Amin der allgemeinen Formel X, wobei die freie Aminogruppe an ein aromatisches C-Atom des Restes ar gebunden ist

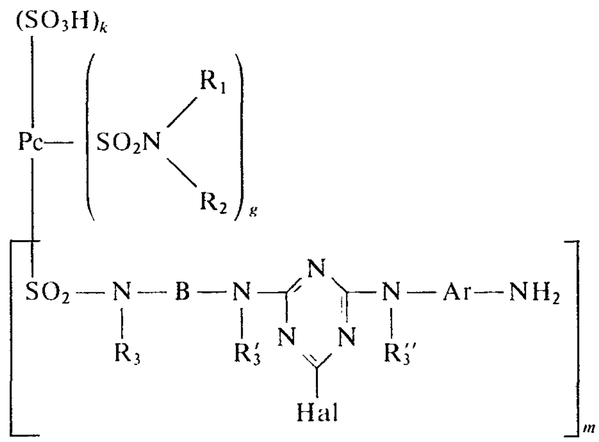

(X)

und worin Pc, B, ar, $R_1$, $R_2$, $R_3$, $R_3'$, $R_3''$, k, g, m und hal die oben genannten Bedeutungen haben, diazotiert und in wäßrigem Medium bei einem pH-Wert zwischen 3 und 8 mit einem Bernsteinsäurederivat der Formel XI

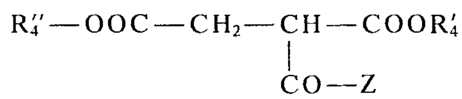

(XI)

worin $R_4'$ und $R_4''$ die oben genannten Bedeutungen außer der von Wasserstoff haben und Z Wasserstoff, Methyl, Äthyl, Phenyl oder Alkoxycarbonyl mit 1—2 C-Atomen bedeutet, gekuppelt.

Besonders bevorzugt sind Bernsteinsäurederivate der Formel XI in denen $R_4'$ und $R_4''$ gleich sind und Methyl oder Äthyl bedeuten und Z für eine Methylgruppe steht.

Die Kupplung erfolgt bei einem pH-Wert zwischen 3 und 8, vorzugsweise 4,5—5,5.

Das auf diese Weise entstandene Phthalocyaninhydrazon der Formel XII

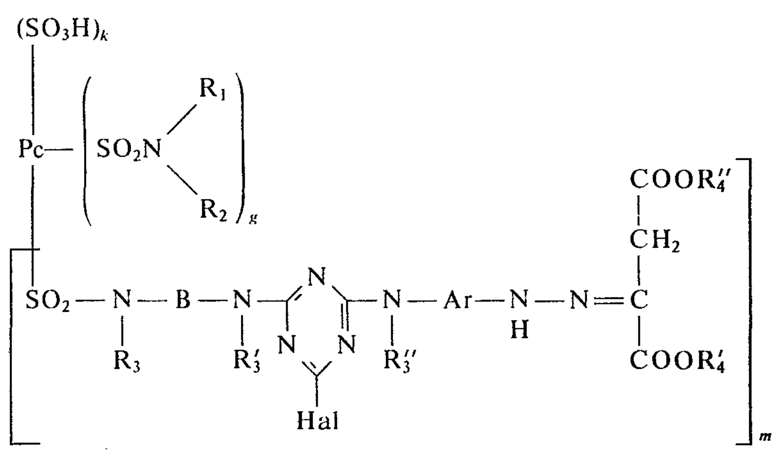

(XII)

in der Pc, B, ar, $R_1$, $R_2$, $R_3$, $R_3'$, $R_3''$, $R_4'$, $R_4''$, hal, k, g und m die obige Bedeutung haben, wird in einem zweiten Reaktionsschritt überaus leicht durch alkalische Behandlung der wäßrigen Lösung der Hydrazone der Formel XII bei Temperaturen zwischen 0 und 100°C, bevorzugt 15 bis 30°C bei einem pH-Wert zwischen 8 und 14 unter Abspaltung des Alkohols der Formel $R_4''OH$ cyclisiert. Die Cyclisierung kann mit einer Verseifung der Gruppe $-COOR'_4$ des entstandenen Pyrazolons zur freien Carboxylgruppe gekoppelt werden. Hierzu ist es nur erforderlich, in der Nähe der oberen Grenze des angegebenen pH-Wert-Bereichs, beispielsweise bei pH-Werten von 10 bis 14, zu arbeiten. Zweckmäßigerweise wird die Cyclisierung direkt in der bei der Kupplung anfallenden Reaktionslösung der Hydrazone der Formel XII durch Erhöhen ihres pH-Wertes auf 10 bis 14, wobei in der Regel Raumtemperatur genügt, ausgeführt. Die so erhaltene Lösung des Pyrazolons III wird zweckmäßigerweise ohne Isolierung des Pyrazolons zur Azokupplung eingesetzt. Das Pyrazolon kann jedoch gewünschtenfalls auch abgeschieden werden.

Das zur Herstellung des Phthalocyaninpyrazolons III seinerseits benötigte Amin der Formel X wird in drei an sich bekannten Reaktionsschritten hergestellt.

Der erste Schritt erfolgt, für den Fall, daß 1 für 0 steht, durch Umsetzung von Phthalocyanin-3- oder -4-di-, tri- oder bevorzugt tetrasulfochloriden mit Aminen der allgemeinen Formel XIII

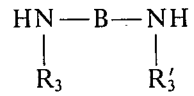

(XIII)

worin $R_3$ und B die oben angegebenen Bedeutungen haben. Anstelle der Amine der Formel XIII können auch mono-acylierte Amine, z. B. acetylierte Amine der Formel XIIIa

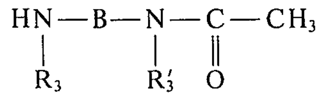

(XIIIa)

eingesetzt werden. In diesem Fall wird das entstandene Kondensationsprodukt mit Phthalocyaninsulfochlorid anschließend verseift.

Steht 1 in Formel I bzw. X für die Zahl 1, so wird zur Gewinnung der Amine der Formel X das Phthalocyanin-3- oder -4-sulfochlorid in beliebiger Reihenfolge mit einem Amin der allgemeinen Formel XIV

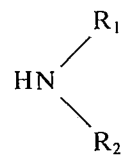

(XIV)

in der $R_1$ und $R_2$ die oben angegebenen Bedeutungen haben, und mit einem Amin der Formel XIII oder mit einer Mischung der beiden Amine umgesetzt.

Das entstandene Kondensationsprodukt entspricht der allgemeinen Formel V.

Derartige Reaktionen sind z. B. beschrieben in DAS 1 769 398 und DAS 1 289 206.

Es ist möglich, die Amine der Formel V direkt in der wäßrigen Lösung, in der sie anfallen, weiterzuverarbeiten, jedoch ist es in aller Regel vorteilhaft, sie zu isolieren, um sie von einem eventuell noch vorliegenden Anteil an nicht umgesetzten Amin der Formel XIII und/oder XIV zu befreien.

Als Amine der Formel XIV, die zur Herstellung der Amine der Formel V verwendet werden können, seien die folgenden genannt:

Ammoniak, Methylamin, Dimethylamin, Äthylamin, Diäthylamin, $\beta$-Hydroxyäthylamin, $\beta$-Methoxyäthylamin, Bis-($\beta$-hydroxyäthyl-)amin, Aminoessigsäure, Butylamin, Caprylamin, Laurylamin, Anilin, Toluidin, Chloranilin, Anilin o-, m- oder p-sulfonsäure, Anilin o-, m- oder p-carbonsäure, N-Methylanilin, N-Äthylanilin, o-, m- oder p-sulfonsäure, Anilin-$\omega$-methan-sulfonsäure, Benzylamin, Taurin, N-Methyltaurin, $\beta$-Acetylamino-äthylamin.

Als Beispiele für Amine der Formel XIII, die auch in Form der mono-Acylverbindung eingesetzt werden können, seien die folgenden genannt:

p-Phenylendiamin
N-Methyl-p-phenylendiamin
N-Carboxymethyl-p-Phenylendiamin
m-Phenylendiamin
N-$\beta$-Hydroxyäthyl-m-phenylendiamin
1,4-Phenylendiamin-2-sulfonsäure
1-Amino-4-N-sulfomethylamino-phenylen-2-sulfonsäure
1,4-Phenylendiamin-2,5- oder 2,6-disulfonsäure
1-Amino-4-N-methylamino-phenylen-2,6-disulfonsäure
1,3-Phenylendiamin-4-sulfonsäure
1,3-Phenylendiamin-4,6-disulfonsäure
2,4-Diamino-toluol-5- oder 6-sulfonsäure
2,6-Diamino-toluol-4-sulfonsäure
2,5-Diamino-1,3,5-trimethylbenzol-4-sulfonsäure
2,6-Diamino-1,3-diäthylbenzol-4-sulfonsäure
2,4-Diamino-1-chlorbenzol-6-sulfonsäure
2,4-Diaminotoluol-5- oder 6-sulfamid
2,6-Diaminotoluol-4-äthanol- oder diäthanolsulfamid
1,4-Diaminophenylen-2-dimethylsulfamid
1,3-Diaminophenylen-4-sulfanilid

1,3-Diaminophenylen-4-$\beta$-hydroxyäthylsulfon
N-Äthyl-p-phenylendiamin
1-N-Methylamino-3-amino-benzol-4-sulfonsäure
2,4-Diamino-1-methoxybenzol-5-sulfonsäure
1,5-Diaminonaphthalin-2-sulfonsäure
1,4-Diaminonaphthalin-2-sulfonsäure
2,6-Diaminonaphthalin-8-sulfonsäure
2,6-Diaminonaphthalin-4,8-disulfonsäure
1,5-Diaminonaphthalin-3,7-disulfonsäure
1,4-Diaminonaphthalin-2-carbonsäure
2,2'-Dimethyl-4,4'-diaminodiphenyl
4,4'-Diaminodiphenyl-2,2'-disulfonsäure
1-Amino-4-aminomethyl-benzol
1-Amino-4-aminomethyl-benzol-3-sulfonsäure
2-Amino-5-aminomethyl-naphthalin-1-sulfonsäure
4,4'-Diamino-diphenylmethan-2,2'-disulfonsäure
4,4'-Diamino-diphenyläthan-2,2'-disulfonsäure
4,4'-Diamino-diphenyläthan-mono-sulfamid
4,4'-Diaminostilben-2,2'-disulfonsäure
4,4'-Diamino-diphenyläthan-di-$\beta$-hydroxyäthylsulfamid
4,4'-Diamino-diphenylamin-3-sulfonsäure
3,4'-Diamino-6-methoxy-diphenylamin-2'-sulfonsäure
3,4'-Diamino-4-methyl-diphenylamin-2'-sulfonsäure
3,3'-Diaminobenzophenon-5,5'-disulfonsäure
4,4'-Diamino-diphenylsulfon
4,4'-Diamino-3-sulfo-benzoylanilid
3,4'-Diamino-4-sulfo-benzoylanilid
4,4'-Diamino-3,3'disulfo-diphenylharnstoff
4,4'-Diamino-2,2'-disulfo-diphenylharnstoff
3,3'-Diamino-4-methyl-diphenylsulfon-5-sulfonsäure

Der zweite Schritt zur Herstellung des Amins der allgemeinen Formel X ist die Kondensation des Amins der Formel V mit Trifluortriazin, Tribromtriazin oder bevorzugt Trichlortriazin zu dem Phthalocyaninderivat der Formel VII.

Derartige Kondensationsreaktionen sind bekannt.

Sie werden in Wasser oder Mischungen aus Wasser oder einem organischen Lösungsmittel, z. B. Aceton, durchgeführt bei Temperaturen zwischen 0° und 10° und bei pH-Werten zwischen 4 und 8. Die frei werdende Halogenwasserstoffsäure wird durch Zugabe von Alkali wie z. B. Natriumbicarbonat, Soda oder Natronlauge neutralisiert.

Die so erhaltene Lösung wird zweckmäßigerweise direkt weiterverarbeitet, jedoch kann das Produkt der Formel VII gewünschtenfalls auch isoliert werden.

Der dritte Schritt zur Herstellung des Amins der Formel X ist die Kondensation des Phthalocyaninderivats der Formel VII mit einem Diamin der Formel XV

$$\underset{\displaystyle R_3''}{\underset{|}{HN}}-Ar-NH_2 \qquad (XV)$$

in der $R_3''$ und ar die oben gegebene Bedeutung haben.

Anstelle des Diamins der Formel XV kann auch ein Nitrogruppenhaltiges Amin der Formel XVa

$$\underset{\displaystyle R_3''}{\underset{|}{HN}}-Ar-NO_2 \qquad (XVa)$$

eingesetzt werden, wobei dann im Anschluß an die Kondensation die Nitrogruppe in üblicher Weise, z. B. durch Reduktion mit Natriumsulfhydrat, zur Aminogruppe reduziert wird. Auch diese Kondensationsreaktion ist an sich bekannt. Sie wird unter den oben genannten Bedingungen, jedoch bei leicht erhöhter Temperatur etwa bei 20—55°, vorzugsweise 30—45° durchgeführt.

Als Beispiele für Amine der Formel XV, die auch in Form der Nitrogruppenhaltigen Verbindung XVa eingesetzt werden können, seien die folgenden genannt:

p-Phenylendiamin
m-Phenylendiamin
1,4-Phenylendiamin-2-sulfonsäure

1,4-Phenylendiamin-2,5- oder 2,6-disulfonsäure
1,3-Phenylendiamin-4-sulfonsäure
1,3-Phenylendiamin-4,6-disulfonsäure
2,4-Diamino-toluol-5- oder 6-sulfonsäure
2,6-Diamino-toluol-4-sulfonsäure
2,5-Diamino-1,3,5-trimethylbenzol-4-sulfonsäure
2,6-Diamino-1,3-diäthylbenzol-4-sulfonsäure
2,4-Diamino-1-chlorbenzol-6-sulfonsäure
2,4-Diaminotoluol-5- oder 6-sulfamid
2,6-Diaminotoluol-4-äthanol- oder diäthanolsulfamid
1,4-Diaminophenylen-2-dimethylsulfamid
1,3-Diaminophenylen-4-sulfanilid
1,3-Diaminophenylen-4-β-hydroxyäthylsulfon
4-Nitro-N-äthyl-anilin
4-Nitro-2-sulfo-N-äthyl-anilin
4-Nitro-2-sulfo-N-methyl-anilin
3-Nitro-N-carboxymethyl-anilin
1-N-Methyl-3-amino-benzol-4-sulfonsäure
2,4-Diamino-1-methoxybenzol-5-sulfonsäure
1,5-Diaminonaphthalin-2-sulfonsäure
1,4-Diaminonaphthalin-2-sulfonsäure
2,6-Diaminonaphthalin-8-sulfonsäure
2,6-Diaminonaphthalin-4,8-disulfonsäure
1,5-Diaminonaphthalin-3,7-disulfonsäure
1,4-Diaminonaphthalin-2-carbonsäure
2,2'-Dimethyl-4,4'-diaminodiphenyl
4,4'-Diaminodiphenyl-2,2'-disulfonsäure
1-Amino-4-aminomethyl-benzol
1-Amino-4-aminomethyl-benzol-3-sulfonsäure
2-Amino-5-aminomethyl-naphthalin-1-sulfonsäure
4,4'-Diamino-diphenylmethan-2,2'-disulfonsäure
4,4'-Diamino-diphenyläthan-2,2'-disulfonsäure
4,4'-Diamino-diphenyläthan-mono-sulfamid
4,4'-Diaminostilben-2,2'-disulfonsäure
4,4'-Diamino-diphenyläthan-di-β-hydroxyäthylsulfamid
4,4'-Diamino-diphenylamin-3-sulfonsäure
3,4'-Diamino-6-methoxy-diphenylamin-2'-sulfonsäure
3,4-Diamino-4-methyl-diphenylamin-2'-sulfonsäure
3,3'-Diaminobenzophenon-5,5'-disulfonsäure
4,4'-diamino-diphenylsulfon
4,4'-Diamino-3-sulfo-benzoylanilid
3,4'-Diamino-4-sulfo-benzoylanilid
4,4'-Diamino-3,3'-disulfo-diphenylharnstoff
4,4'-Diamino-2,2'-disulfo-diphenylharnstoff
3,3'-Diamino-4-methyl-diphenylsulfon-5-sulfonsäure

Im Falle der Verwendung eines Amins der Formel XVa können die Reaktionsschritte 2 und 3 zur Herstellung des Amins der Formel X auch in umgekehrter Reihenfolge durchgeführt werden, d. h. es wird zunächst bei ca. 0—5°C ein Amin der Formel XVa mit einem Trihalogentriazin und dann das so entstandene Reaktionsprodukt bei etwa 25—55°C mit einem Amin der Formel V kondensiert. Das Amin der Formel X erhält man dann im Anschluß daran durch Reduktion.

Wird bei dem erfindungsgemäßen Herstellungsverfahren die Diazoniumverbindung eines Amins der Formel II auf das Pyrazolon III gekuppelt, so ist nach Ablauf der Kupplungsreaktion die erfindungsgemäße Herstellung der wasserlöslichen, faserreaktiven Phthalocyanin-azofarbstoffe beendet.

Aus den so erhaltenen wäßrigen Lösungen der Phthalocyanin-azofarbstoffe kann der Farbstoff dann durch Aussalzen isoliert werden, oder er kann in Form eines festen Farbstoffpräparats durch Sprühtrocknung der Lösungen erhalten werden.

Wie bereits dargestellt, können die erfindungsgemäßen Farbstoffe außer durch Azokupplung auch durch Kondensationsreaktion entsprechend dem oben angegebenen Schema Ia aus Teilstücken, die eine acylierbare Aminogruppe enthalten, hergestellt werden.

I. Durch Kondensation des Amins der Formel V mit einem einen Dihalogentriazinrest enthaltenden Azofarbstoff der Formel IV

Die Herstellung des Amins der Formel V ist oben bereits im einzelnen dargestellt als erster Reaktionsschritt zur Herstellung des Amins der Formel X.

Die Herstellung des Azofarbstoffs der Formel IV erfolgt in zwei an sich bekannten Reaktionsschritten.

Im ersten Schritt wird ein Amin der allgemeinen Formel II, dessen Herstellung und Diazotierung im einzelnen bereits oben beschrieben ist, auf ein Pyrazolon der allgemeinen Formel XVI.

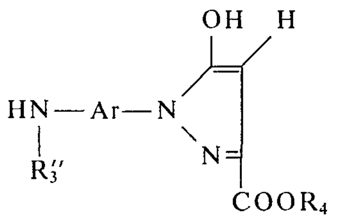

(XVI)

in der ar, $R_3''$ und $R_4$ die oben angegebene Bedeutung haben unter Bildung des Azofarbstoffs der Formel VI gekuppelt. Beispiele für geeignete Amine der Formel II sind die bereits oben angegebenen mit Ausnahme derer, bei denen A für den Rest eines Dihalogen-triazins steht.

Geeignete Pyrazolone der Formel XVI sind solche, in denen der Rest ar einer der oben als bevorzugt für ar angegebenen Reste ist. In der folgenden Liste sind Beispiele für besonders geeignete Pyrazolone angegeben:

1-3'-Aminophenyl-pyrazolon-(5)-3-carbonsäure
1-4'-Aminophenyl-pyrazolon-(5)-3-carbonsäure
1-2'-Sulfo-5'-aminophenyl-pyrazolon-(5)-3-carbonsäure
1-2'-Sulfo-4'-aminophenyl-pyrazolon-(5)-3-carbonsäure
1-2'-Methyl-3'-amino-5'-sulfophenyl-pyrazolon-(5)-3-carbonsäure
1-2'-Methyl-3'-sulfo-5'-amino-pyrazolon-(5)-3-carbonsäure
1-2',5'-Disulfo-4-aminophenyl-pyrazolon-(5)-3-carbonsäure
1-2',6'-Disulfo-4-aminophenyl-pyrazolon-(5)-3-carbonsäure
1-[4-N'-(4-Amino-2-sulfo-phenyl)-ureido-3-sulfo-phenyl]-pyrazolon-(5)-3-carbonsäure
1-[4-N'-(4-Amino-3-sulfo-phenyl)-ureido-2-sulfo-phenyl]-pyrazolon-(5)-3-carbonsäure
1-(4'-Amino-2,2'-disulfo-stilbenyl)-pyrazolon-(5)-3-carbonsäure.

Im zweiten Schritt wird der Azofarbstoff der Formel VI mit Trifluortriazin, Tribromtriazin oder bevorzugt Trichlortriazin zu dem Azofarbstoff der Formel IV kondensiert unter Bedingungen, die den oben bei der Herstellung des Phthalocyaninderivats der Formel VII entsprechen.

II. Durch Kondensation des eine acylierbare Aminogruppe enthaltenden Azofarbstoffs der Formel VI mit einem einen Dihalogentriazinrest enthaltenden Phthalocyaninderivat der Formel VII

Die Herstellung des Azofarbstoffs der Formel VI, Beispiele für geeignete Pyrazolone der Formel XVI sowie geeigneter Amine der Formel II sind bereits oben angegeben, mit Ausnahme der Amine, bei denen A in Formel II für den Rest eines Dihalogentriazins steht. Auch die Herstellung des Phthalocyaninderivats der Formel VII sowie Beispiele von dafür geeigneten Diaminen sind oben bereits angegeben. Die Kondensation der beiden Teilstücke VI und VII erfolgt in an sich bekannter Weise wie sie oben zur Herstellung des Amins der Formel X angegeben ist.

Auch aus den durch Kondensationsreaktionen erhaltenen wäßrigen Lösungen kann der Farbstoff durch Aussalzen isoliert oder durch Sprühtrocknung in ein festes Farbstoffpräparat überführt werden.

Die erfindungsgemäßen wasserlöslichen faserreaktiven Farbstoffe sind hervorragend geeignet zum Färben und Bedrucken von Materialien faseriger Struktur, insbesondere von Wolle, Polyamid, Zellulose oder zellulosehaltigen Materialien.

Die erfindungsgemäßen Farbstoffe, in denen A ein reaktiver Rest ist oder D durch einen Vinylsulfon-, β-Sulfato-, β-Phosphato- oder β-Thiosulfatoäthylsulfonrest substituiert ist, sind besonders bevorzugt. Sie zeichnen sich durch eine hohe Fixierausbeute auf Zellulose, insbesondere bei Druckverfahren und Fixierung durch Trockenhitze und gute Auswaschbarkeit des nicht fixierten Farbstoffanteils aus und liefern gelb- bis blaustichig grüne Färbungen und Drucke von hoher Brillanz und Farbstärke mit sehr guter Lichtechtheit, guten Naßechtheiten wie Wäsche 60°C und 95°C, Seewasserechtheit, Schweißechtheit sauer und alkalisch, Chlorbadewasserechtheit, Peroxidechtheit, Rauchgasechtheit.

Auch Gemische erfindungsgemäßer Farbstoffe, insbesondere solche, in denen die Bedeutungen von k und/oder l und/oder m in den Einzelkomponenten verschieden sind, sind zum Färben und Bedrucken von Zellulosematerialien hervorragend geeignet und weisen dieselben vorteilhaften Eigenschaften auf wie die Einzelfarbstoffe.

Aus der GB-A-1 003 786 sind wasserlösliche faserreaktive Phthalocyaninazofarbstoffe bekannt, bei denen der Rest eines substituierten Pyrazolons ein an die Azobindung gebundenes Endglied der Farbstoffe darstellt. Aus C. A. 82, (1975), Seite 80, 172 492w, sind faserreaktive Phthalocyaninazofarbstoffe bekannt, bei denen ein Pyrazolonrest zwischen der Azogruppe und dem die Phthalocyaningruppierung tragenden Teil des Farbstoffmoleküls angeordnet ist, die jedoch kein Cyanurhalogenid-Zwischenglied enthalten.

Überraschenderweise zeigen die erfindungsgemäßen Farbstoffe gegenüber den nächstvergleichbaren Farbstoffen der GB-A-1 003 786 ein deutlich verbessertes anwendungstechnisches Verhalten und gegenüber den nächstvergleichbaren Farbstoffen aus C. A. 82 (1975), Seite 80, 172 492w, deutlich überlegene coloristische Eigenschaften. Die erfindungsgemäßen Farbstoffe zeigen gegenüber den Farbstoffen der GB-A-1 003 786 beim Druck auf Baumwolle eine höhere Farbstärke. Beim Färben ist ihre Farbstärke sogar deutlich höher. Außerdem sind bei den erfindungsgemäßen Farbstoffen die Farbtonunterschiede der Färbung zum Druck deutlich geringer als bei den bekannten Farbstoffen. Gegenüber den aus C. A. 82 (1975), Seite 80, 172 492w, bekannten Farbstoffen besitzen die erfindungsgemäßen Farbstoffe wesentlich bessere Farbreinheit, Brillanz und Farbstärke.

In den folgenden Ausführungsbeispielen sind alle Temperaturen in °C angegeben worden.

## Beispiel 1

188 g m-Phenylendiamin-sulfonsäure werden neutral in etwa 6000 ml Wasser gelöst. Zu dieser Lösung gibt man bei 0—5°C 190 g Cyanurchlorid, gelöst in Aceton, und hält gleichzeitig mit etwa 100 ml 10n Natronlauge den pH zwischen 6 und 7. Wenn keine m-Phenylendiaminsulfonsäure mehr nachweisbar ist, wird die neutrale Lösung mit 70 g Natriumnitrit versetzt und dann bei 0—3°C in 250 ml 10n Salzsäure eingerührt. Ist die Diazotierung beendet, gibt man die Diazosuspension zu einer neutralen Lösung von 1473 g 3-[4-Sulfo-3{4-chlor-6-[4-sulfo-3-(3-carboxy-5-hydroxy-1-pyrazolyl)-phenylamino]-s-triazinyl-(2)-amino}-phenyl]-aminosulfonyl-nickelphthalocyanin-3',3'',3'''-trisulfonsäure in etwa 9000 ml Wasser, der zuvor 100 g Bicarbonat zugesetzt worden waren. Die Kupplung ist in wenigen Minuten beendet. Der entstandene grüne Phthalocyanin-azo-farbstoff kann durch Aussalzen oder Sprühtrocknen isoliert werden.

Die zur Kupplung benötigte Lösung der Phthalocyaninpyrazolons kann auf folgende Weise erhalten werden:

1060 g 3-[(3-Amino-4-sulfo-phenyl)-amino-sulfonyl-]nickelphthalocyanin-3',3'',3'''-trisulfonsäure, hergestellt in üblicher Weise durch Kondensation von Nickelphthalocyanintetrasulfochlorid mit 1,3-Diaminobenzol-4-sulfonsäure, werden mit 7000 ml Wasser verrührt und durch Zugabe von 400 ml 10n Natronlauge gelöst.

Zu dieser Lösung gibt man bei 0—5°C 190 g Cyanurchlorid, gelöst in Aceton, und hält gleichzeitig mit etwa 100 ml 10n Natronlauge den pH-Wert zwischen 6 und 7. Wenn keine freien Aminogruppen mehr nachweisbar sind, wird die neutrale Lösung mit einer neutralen Lösung von 195 g m-Phenylendiaminsulfonsäure in etwa 3000 ml Wasser versetzt und auf etwa 45°C erwärmt. Gleichzeitig hält man mit weiteren 100 ml 10n Natronlauge den pH-Wert zwischen 6 und 7. Wenn der pH-Wert konstant bleibt, ist die Reaktion beendet, und nicht umgesetzte Metaminsäure läßt sich in einem Chromatogramm nur noch spurenweise nachweisen. Das entstandene Amin entspricht der allgemeinen Formel X. Es wird durch Zugabe von Steinsalz abgeschieden und durch Waschen mit 20%igem Salzwasser von eventuell nicht umgesetzter Metaminsäure befreit.

Es wird dann erneut mit etwa 8000 ml Wasser neutral gelöst, mit 72 g Natriumnitrit versetzt und in eine Mischung aus 300 ml 10n Salzsäure und 2000 g Eis bei 0—5°C eingerührt.

Nach kurzer Zeit wird ein eventueller Überschuß von Nitrit durch Zugabe von Aminosulfosäure zerstört. In die so erhaltene Diazosuspension werden 210 g Acetylbernsteinsäuredimethylester eingegossen. Anschließend wird der pH-Wert zunächst durch Einstreuen von ca. 130 g Soda auf 5,5 und dann mit ca. 84 g Natriumbicarbonat bei 5 bis 6 gehalten. Man rührt anschließend ca. 1 Stunde nach. Das Ende der Reaktion erkennt man daran, daß der pH konstant bleibt und daß beim Versetzen einer Probe mit einer Lösung von H-Säure in 2n Soda keine Farbtonveränderung eintritt.

Die so erhaltene Lösung des Oxalessigsäuredimethylester-{2-sulfo-5[4-chlor-6-(2-sulfo-5-[trisulfo-Ni-Pc-sulfonamido]-phenyl)-s-triazinyl-(2)]-phenyl}-hydrazons wird mit 350 ml 10n Lauge versetzt, wodurch der pH auf Werte von 12 bis 13 ansteigt. Man rührt einige Stunden, am besten über Nacht bei Raumtemperatur. Der Ringschluß zum entsprechenden 3-Carboxy-pyrazolon-5 ist dann abgeschlossen. Der pH-Wert wird mit etwas Salzsäure auf 8 zurückgestellt und die erhaltene Rohlösung direkt zur Kupplung eingesetzt.

Ersetzt man bei der Herstellung der Kupplungskomponente das Cyanurchlorid durch molare

Mengen von Cyanurbromid oder Cyanurfluorid und verfährt im übrigen wie oben beschrieben, so erhält man ebenfalls wertvolle grüne Reaktivfarbstoffe.

Ersetzt man bei der Herstellung der Diazokomponente die 1,3-Diaminobenzolsulfonsäure durch eine der im folgenden genannten Verbindungen und verfährt im übrigen wie oben beschrieben, so erhält man ebenfalls wertvolle grüne Reaktivfarbstoffe:

1,4-Diaminobenzolsulfonsäure
1,4-Diaminobenzol 2,5- oder 2,6-disulfonsäure
1,3-Diaminobenzol-2,6-disulfonsäure
4,4'-Diaminostilben-2,2'-disulfonsäure
4,4'-Aminobenzoylamino-2-sulfo-anilin
4,4'-Diamino-3,3'-disulfo-diphenyl-harnstoff.

Ersetzt man bei der Herstellung der Diazokomponente das Cyanurchlorid durch eine molare Menge eines der folgenden Acylierungsmittel und verfährt im übrigen wie oben beschrieben, so erhält man ebenfalls wertvolle grüne Reaktivfarbstoffe:

β-Chlorpropionsäurechlorid
α,β-Dibrompropionsäurechlorid
Kondensationsprodukt aus 1 Mol Cyanurchlorid und
1 Mol 2-3'-Amino-4'-sulfo-phenylamino-4-4''-sulfo-phenylamino-6-chlortriazin-1-3-5
Acrylsäurechlorid
α-Bromacrylsäurechlorid
3-β-Chloräthylsulfonylbenzoesäurechlorid
4-Vinylsulfonylcyclohexancarbonsäurechlorid
Kondensationsprodukt aus Cyanurchlorid und
Bis-[β-(β-chloräthyl)-sulfonyläthyl]-amin (Molverhältnis 1 : 1)
ω-(β-Chloräthylsulfonyl)-buttersäurechlorid
2,4-Dichlor-pyrimidin-5-carbonsäurechlorid
2,4-Dibrom-pyrimidin-5-carbonsäurebromid
2,4-Difluor-pyrimidin-5-carbonsäurechlorid
2,6-Dichlor-pyrimidin-4-carbonsäurechlorid
2,3-Dichlorchinoxalin-6-carbonsäurechlorid
2,3-Dichlorchinoxalin-6-sulfonsäurechlorid
1,4-Dichlor-phthalazin-6-sulfonsäurechlorid
1,4-Dichlor-phthalazin-6-carbonsäurechlorid
2-Methylsulfonyl-6-chlor-pyrimidin-4-carbonsäurechlorid
3,6-Dichlorpyridazin-4-carbonsäurechlorid
2,4,6-Tribrom-1,3,5-triazin
2,4,6-Trifluor-1,3,5-triazin
2,4,6-Trisulfo-1,3,5-triazin
2,4-Disulfo-6-chlor-1,3,5-triazin
2-Amino-4,6-dichlor-1,3,5-triazin
2-Methylamino-4,6-dichlor-1,3,5-triazin
2-Phenylamino-4,6-dichlor-1,3,5-triazin
2-2'-Methyl-phenylamino-4,6-dichlor-1,3,5-triazin
2-2'-Methyl-4'-sulfophenylamino-4,6-dichlor-1,3,5-triazin
2-2'-Carboxy-4'-sulfophenylamino-4,6-dichlor-1,3,5-triazin
2-2'-Sulfophenylamino-4,6-dichlor-1,3,5-triazin
2-3'-Sulfophenylamino-4,6-dichlor-1,3,5-triazin
2-4'-Sulfophenylamino-4,6-dichlor-1,3,5-triazin
2-Methoxy-4,6-dichlor-1,3,5-triazin
2-Äthoxy-4,6-dichlor-1,3,5-triazin
2-i-Propoxy-4,6-dichlor-1,3,5-triazin
2-Phenoxy-4,6-dichlor-1,3,5-triazin
2-N-Methyl-N-phenylamino-4,6-dichlor-1,3,5-triazin
2-Butylmercapto-4,6-dichlor-1,3,5-triazin
2-β-Methoxyäthoxy-4,6-dichlor-1,3,5-triazin
2-(2'-Carboxyphenoxy)-4,6-dichlor-1,3,5-triazin
Kondensationsprodukt aus Cyanurchlorid und
4-Aminophenyl-β-sulfatoäthylsulfon (Molverhältnis 1 : 1)
Kondensationsprodukt aus 1 Mol Cyanurchlorid und
1 Mol 2-β-Amino-äthylamino-4-(2',5'-disulfophenylamino)-6-chlortriazin-1-3-5
Kondensationsprodukt aus 1 Mol Cyanurchlorid und
1 Mol 2-4'-Amino-3'-sulfo-phenylamino-4-(2''-carboxyphenylamino)-6-chlortriazin-1-3-5

Kondensationsprodukt aus 1 Mol Cyanurchlorid und
1 Mol 2-3'-Amino-4'-sulfo-phenylamino-4-n-butoxy-6-chlortriazin-1-3-5
Tetrachlorpyrimidin
2,4,6-Trichlorpyrimidin
5-Cyan-2,4,6-trichlorpyrimidin
5-Nitro-2,4,6-trichlorpyrimidin
2,4-Difluor-6-chlorpyrimidin
2-Methylsulfonyl-4-methyl-6-chlorpyrimidin
2-Methylsulfonyl-4,6-dichlorpyrimidin
2,3-Dichlorchinoxalin-5-carbonsäurechlorid
2,3-Dichlorchinoxalin-5-sulfonsäurechlorid
2,4-Dichlorchinazolin-6-carbonsäurechlorid
2,4-Dichlorchinazolin-6-sulfonsäurechlorid
2,4-Dichlorchinazolin-7-sulfonsäurechlorid
2,4-Difluorpyrimidin-6-carbonsäurechlorid
2-Methylsulfonyl-6-chlor-pyrimidin-5-carbonsäurechlorid
2,6-Bis-(methylsulfonyl)-pyrimidin-5-carbonsäurechlorid

Verwendet man zur Herstellung der Kupplungskomponente anstelle des obengenannten Kondensationsproduktes aus Nickelphthalocyaninsulfochlorid und 1,3-Diaminobenzolsulfonsäure das Kondensationsprodukt aus Nickelphthalocyaninsulfochlorid und einem der im folgenden genannten Amine und verfährt im übrigen wie beschrieben, so erhält man ebenfalls wertvolle grüne Reaktivfarbstoffe:

1,4-Phenylendiamin-2-sulfonsäure
1,3-Phenylendiamin-4,6-disulfonsäure
1,4-Phenylendiamin-2,5-disulfonsäure
1,4-Phenylendiamin-2,6-disulfonsäure
2,4-Diaminotoluol-6-sulfonsäure
2,6-Diaminotoluol-4-sulfonsäure
2,4-Diamino-1,3,5-trimethylbenzol-6-sulfonsäure
2,6-Diaminonaphthalin-4,8-disulfonsäure
1,5-Diaminonaphthalin-2-sulfonsäure
2,6-Diaminonaphthalin-8-sulfonsäure
1-Amino-4-aminomethyl-benzol-3-sulfonsäure
2-Amino-5-aminomethyl-naphthalin-1-sulfonsäure
4,4'-Diamino-diphenylamin-3-sulfonsäure
3,3'-Diamino-4-methyl-diphenylsulfon-5-sulfonsäure
1,3-Phenylendiamin(Acetylderivat, anschließend verseift)
1,2-Diaminoäthan
1,2-Diamino-2,2-dimethyl-äthan
1,6-Diaminohexan
1,2-Diaminoäthan(Acetylderivat, anschließend verseift)
4,4'-Diaminostilbendisulfonsäure-2,2'
4,4'-Diamino-3,3'-disulfo-phenyl-harnstoff
4-4'-Aminobenzoylamino-2-sulfo-anilin

Ersetzt man die 1,3-Diaminobenzolsulfonsäure bei der Kondensationsreaktion mit der 3-(3-Dichlortriazinylamino-4-sulfo-phenyl)-amino-sulfonyl-Ni-Pc-3',3'',3'''-trisulfonsäure durch eines der im folgenden genannten Amine, so erhält man ebenfalls wertvolle Phthalocyaninpyrazolone:

1,4-Phenylendiamin-2-sulfonsäure,
1,3-Phenylendiamin-4,6-disulfonsäure,
1,4-Phenylendiamin-2,5-disulfonsäure,
1,4-Phenylendiamin-2,6-disulfonsäure,
2,4-Diaminotoluol-6-sulfonsäure,
2,6-Diaminotoluol-4-sulfonsäure,
2,4-Diamino-1,3,5-trimethylbenzol-6-sulfonsäure
2,6-Diaminonaphthalin-4,8-disulfonsäure
1,5-Diaminonaphthalin-2-sulfonsäure
2,6-Diaminonaphthalin-8-sulfonsäure
1-Amino-4-aminomethyl-benzol-3-sulfonsäure
2-Amino-5-aminomethyl-naphthalin-1-sulfonsäure
4,4'-Diamino-diphenylamin-3-sulfonsäure
3,3'-Diamino-4-methyl-diphenylsulfon-5-sulfonsäure

4,4'-Diaminostilbendisulfonsäure-2,2'
4,4'-Diamino-3,3'-disulfo-phenyl-harnstoff
4-4'-Aminobenzoylamino-2-sulfo-anilin
4,4'-Diamino-2,2'-disulfo-diphenyl-harnstoff

Beispiel 2

Verwendet man anstelle des in Beispiel 1 angegebenen Amins 3-[(3-Amino-4-sulfo-phenyl)-amino-sulfonyl-]nickelphthalocyanin-3',3'',3'''-trisulfonsäure die molar entsprechende Menge eines der in der folgenden Tabelle genannten Amine und verfährt im übrigen wie dort angegeben, so erhält man ebenfalls wertvolle, als Kupplungskomponenten geeignete, entsprechend substituierte Pyrazolone.

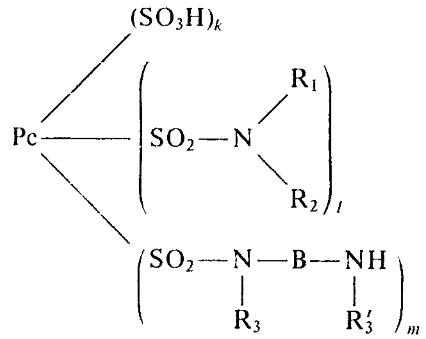

| $R_1$ | $R_2$ | $R_3$ | $R'_3$ | B | k | g | m |
|---|---|---|---|---|---|---|---|
| —H | —H | —H | —H | 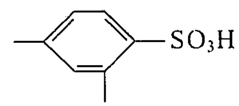 | 2 | 1 | 1 |
| —H | $—CH_2—COOH$ | —H | —H | 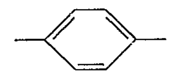 | 2 | 1 | 1 |
| —H | $—C_2H_4—SO_3H$ | $—CH_3$ | $—CH_3$ | 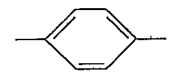 | 1 | 1 | 2 |
| —H | —H | —H | $—CH_3$ | 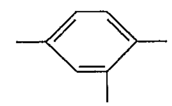 | 2 | 1 | 1 |
| —H | $—C_2H_4OH$ | $—C_2H_5$ | —H | 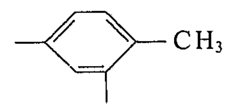 | 2 | 1 | 1 |
| —H | $—C_2H_4—O—C_2H_5$ | $—C_2H_5$ | —H | 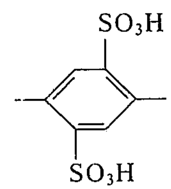 | 2 | 1 | 1 |
| —H | —H | —H | —H | 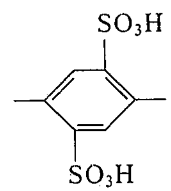 | 2 | 1 | 1 |

Fortsetzung

| $R_1$ | $R_2$ | $R_3$ | $R_3'$ | B | k | g | m |
|---|---|---|---|---|---|---|---|
| $-H$ | $-CH_3$ | $-H$ | $-C_2H_5$ | 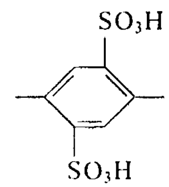 | 2 | 1 | 1 |
| $-H$ | $-H$ | $-H$ | $-H$ | 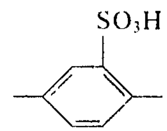 | 2 | 1 | 1 |
| $-H$ | $-C_3H_6-COOH$ | $-H$ | $-H$ | 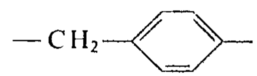 | 2 | 1 | 1 |
| $-H$ | $-C_6H_{13}$ | $-H$ | $-H$ | 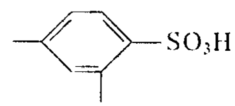 | 2 | 1 | 1 |
| $-H$ | $-C_9H_{19}$ | $-H$ | $-H$ | 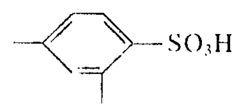 | 2 | 1 | 1 |
| $-H$ | $C_{15}H_{31}$ | $C_4H_9$ | H | 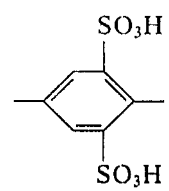 | 2 | 1 | 1 |
| $-H$ | $-C_{20}H_{41}$ | $-H$ | $-H$ | 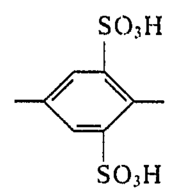 | 2 | 1 | 1 |

Fortsetzung

| $R_1$ | $R_2$ | $R_3$ | $R_3'$ | B | k | g | m |
|---|---|---|---|---|---|---|---|
| $-H$ | $-C_4H_9$ | $-H$ | $-C_4H_9$ | 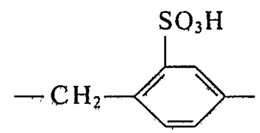 | 2 | 1 | 1 |
| $-H$ | $-C_3H_7$ | $-H$ | $-H$ | 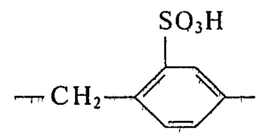 | 2 | 1 | 1 |
| $-H$ | $-C_2H_5$ | $-H$ | $-C_3H_7$ | 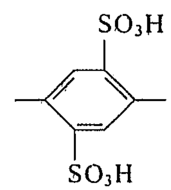 | 2 | 1 | 1 |
| $-CH_3$ | $-C_2H_5$ | $-H$ | $-H$ | 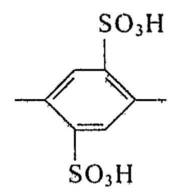 | 2 | 1 | 1 |
| $-C_2H_5$ | $-C_2H_5$ | $-CH_3$ | $-H$ | 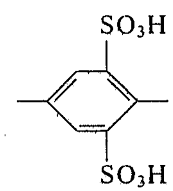 | 2 | 1 | 1 |

Fortsetzung

| $R_1$ | $R_2$ | $R_3$ | $R_3'$ | B | k | g | m |
|---|---|---|---|---|---|---|---|
| $-C_3H_7$ | $-C_2H_5$ | $-CH_2-SO_3H$ | $-H$ | 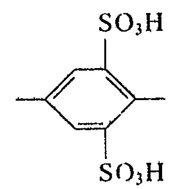 | 2 | 1 | 1 |
| $-C_2H_4Br$ | $-C_2H_5$ | $-CH_2-SO_3H$ | $-H$ | 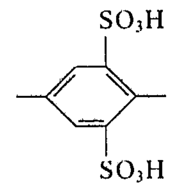 | 2 | 1 | 1 |
| $-C_2H_4-O-CH_3$ | $-C_2H_5$ | $-CH_2-COOH$ | $-H$ | 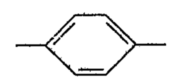 | 2 | 1 | 1 |
| $-C_2H_4-SO_3H$ | $-C_2H_5$ | $-CH_2-COOH$ | $-H$ | 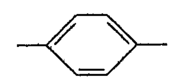 | 2 | 1 | 1 |
| $-C_4-H_8-COOH$ | $-C_2H_5$ | $-CH_3$ | $-H$ | 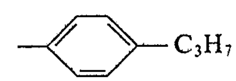 | 2 | 1 | 1 |
| $-C_2H_4OH$ | $-C_2H_5$ | $-CH_3$ | $-H$ | 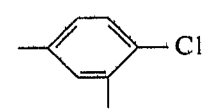 | 2 | 1 | 1 |
| $-C_2H_4OH$ | $-C_2H_4OH$ | $-CH_3$ | $-H$ | 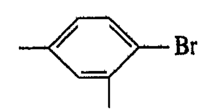 | 2 | 1 | 1 |

Fortsetzung

| $R_1$ | $R_2$ | $R_3$ | $R_3'$ | B | k | g | m |
|---|---|---|---|---|---|---|---|
| $-C_2H_4OH$ | $-C_2H_4OH$ | $-H$ | $-H$ | 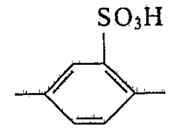 | 1 | 1 | 1 |
| $-C_2H_4OH$ | $-C_2H_4OH$ | $-H$ | $-H$ | 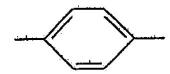 | 1 | 1 | 2 |
| $-H$ | $-C_2H_4-SO_3H$ | $-H$ | $-H$ | 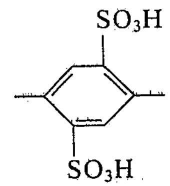 | 1 | 2 | 1 |
| $-H$ | $-C_2H_4-SO_3H$ | $-H$ | $-H$ | 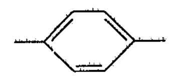 | 1 | 1 | 1 |
| $-H$ | $-C_2H_4OH$ | $-H$ | $-H$ | 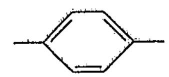 | 1 | 2 | 1 |
| | | $-H$ | $-H$ | 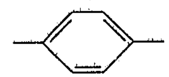 | 0 | 0 | 3 |
| | | $-C_2H_5$ | $-H$ | 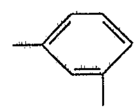 | 1 | 0 | 2 |

Fortsetzung

| $R_1$ | $R_2$ | $R_3$ | $R_3'$ | B | k | g | m |
|---|---|---|---|---|---|---|---|
| $-H$ | $-CH_2-COOH$ | $-H$ | $-H$ | 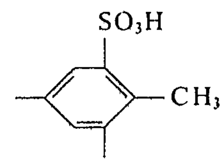 | 1 | 1 | 2 |
| | | $-H$ | $-H$ | 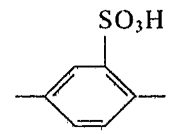 | 1 | 0 | 3 |
| $-H$ | $-H$ | $-H$ | $-H$ | 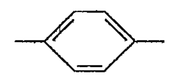 | 1 | 1 | 2 |
| $-CH_3$ | $-CH_3$ | $-H$ | $-H$ | 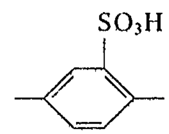 | 1 | 1 | 2 |
| $-H$ | $-H$ | $-H$ | $-H$ | 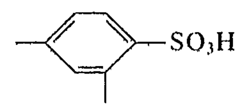 | 1 | 1 | 2 |
| $-H$ | $-H$ | $-H$ | $-H$ | 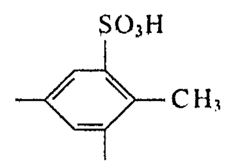 | 1 | 1 | 2 |
| $-H$ | $-H$ | $-H$ | $-H$ | $-C_2H_4$ | 1 | 1 | 2 |

Beispiel 3

Ersetzt man den in Beispiel 1 für die Herstellung der Kupplungskomponente 3-[4-Sulfo-3{4-chlor-6-[4-sulfo-3-(3-carboxy-5-hydroxy-1-pyrazolyl)-phenylamino]-s-triazinylamino}-phenyl]-aminosulfonyl-nickelphthalocyanin-3',3'',3'''-trisulfonsäure eingesetzten Acetylbernsteinsäuredimethylester durch eines der folgenden Derivate der Bernsteinsäure, so erhält man ebenfalls Arylpyrazolone, die erfindungsgemäß zu wertvollen Azophthalocyaninfarbstoffen verarbeitet werden können:

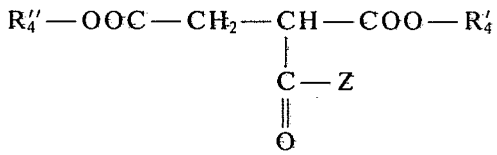

| $R_4'$ | $R_4''$ | Z |
|---|---|---|
| $-C_2H_5$ | $-C_2H_5$ | $-CH_3$ |
| $-CH_3$ | $-CH_3$ | $-H$ |
| $-CH_3$ | $-C_2H_4Cl$ | $-CH_3$ |
| $-CH_3$ | $-i\text{-}C_3H_7$ | $-CH_3$ |
| $-CH_3$ | $-i\text{-}C_4H_9$ | $-COO-CH_3$ |
| $-CH_3$ | $-i\text{-}C_6H_{11}$ | $-COO-C_2H_5$ |
| $-CH_3$ | $-C_2H_4-OH$ | $-CH_3$ |
| $-CH_3$ | $-C_3H_6-OCH_3$ | $-COO-C_3H_7$ |
| $-CH_3$ | $-C_2H_5$ | $-COO-C_3H_7$ |
| $-C_3H_7$ | $-C_2H_5$ | $-C_2H_5$ |
| $-C_5H_{11}$ | $-C_2H_5$ | $-CH_3$ |
| $-C_2H_5$ | $-C_2H_5$ | $-CH_3$ |
| $-C_2H_5$ | $-C_2H_5$ | $-C_6H_5$ |
| $-C_2H_4-O-C_2H_5$ | $-C_2H_5$ | $-CH_3$ |

Beispiel 4

Versetzt man den nach Beispiel 1 hergestellten Farbstoff mit einer mindestens molaren Menge einer der im folgenden genannten, eine acylierbare Aminogruppe enthaltenden Verbindungen und erwärmt dann je eine Stunde auf 30°, 40° und 50°, wobei man den pH durch Zugabe von Alkali wie Natriumbicarbonat, Soda oder Natronlauge zwischen 4 und 7 hält, so erhält man ebenfalls wertvolle grüne Reaktivfarbstoffe. Dabei kann im Falle von Ammoniak oder aliphatischen Aminen das Alkali durch ein zweites Mol des Amins ersetzt werden.

Ammoniak
Methylamin
Diäthylamin
iso-Propylamin
Äthanolamin
Diäthanolamin
4-Aminophenyl-β-sulfato-äthylsulfon
Anilin
o,m,p-Toluidin
N-Methylanilin
Anilin-2,3,4-sulfosäure
2,3,4-Aminobenzoesäure
Anilin-ω-methansulfosäure
β-Aminoäthansulfosäure

N-Methyltaurin
Bis-β-(β-chloräthylsulfonyl-)äthylamin
2-Aminotoluol-5-sulfonsäure
Aminoessigsäure
Anilin-2,4- oder 2,5-disulfosäure
Kondensationsprodukt aus je einem Mol
p-Phenylendiamin, Cyanurchlorid und Anilin-3-sulfonsäure;
Äthylendiamin, Cyanurchlorid und Anilin-2,4-disulfonsäure;
1,4-Phenylendiamin 2,5-disulfonsäure und iso-Propoxydichlortriazin;
1,3-Phenylendiamin-4-sulfonsäure, Cyanurchlorid und Anilin-4-sulfonsäure;
1-3-Phenylendiamin-4-sulfonsäure und β-Äthoxyäthoxydichlortriazin;
p-Phenylendiaminsulfonsäure und Methoxydichlortriazin;
p-Phenylendiaminsulfonsäure und Tetrachlorpyrimidin;
p-Phenylendiaminsulfonsäure und 2,3-Dichlorchinoxalin-carbonsäurechlorid;
p-Phenylendiaminsulfonsäure und 2,6-Dichlorpyrimidin-4-carbonsäurechlorid;
p-Phenylendiaminsulfonsäure und 3,6-Dichlorpyridazin-4-carbonsäurechlorid.

## Beispiel 5

281 g 4-Aminophenyl-β-sulfatoäthyl-sulfon werden neutral in etwa 6000 ml Wasser gelöst. Die neutrale Lösung wird mit 70 g Natriumnitrit versetzt und dann bei 0–3° in 250 ml 10n Salzsäure eingerührt. Ist die Diazotierung beendet, gibt man die Diazosuspension zu einer neutralen Lösung von 1473 g 3-[4-Sulfo-3{4-chlor-6-[4-sulfo-3-(3-carboxy-5-hydroxy-1-pyrazolyl)-phenylamino]-s-triazinyl-amino}-phenyl]-aminosulfonyl-nickelphthalocyanin-3′,3″,3‴-trisulfonsäure in etwa 9000 ml Wasser, der zuvor 100 g Bicarbonat zugesetzt worden waren. Die Kupplung ist in wenigen Minuten beendet.

Der entstandene grüne Phthalocyanin-azo-farbstoff kann durch Aussalzen oder Sprühtrocknen isoliert werden. Die Herstellung der zur Kupplung benötigten Lösung des Phthalocyaninpyrazolons ist in Beispiel 1 beschrieben.

Zu Farbstoffen mit ähnlichen Eigenschaften gelangt man, wenn man anstelle des 4-Aminophenyl-β-sulfatoäthyl-sulfons äquivalente Mengen der folgenden Amine verwendet:

3-Aminophenyl-β-sulfatoäthyl-sulfon,
3-Amino-4-methoxyphenyl-β-sulfatoäthyl-sulfon,
4-Amino-3-methoxyphenyl-β-sulfatoäthyl-sulfon,
3-Amino-4-methylphenyl-β-sulfatoäthyl-sulfon,
3-Amino-4-sulfophenyl-β-sulfatoäthyl-sulfon,
4-Amino-3-bromphenyl-β-sulfatoäthyl-sulfon,
4-Amino-3,5-dichlorphenyl-β-sulfatoäthyl-sulfon,
3-Amino-4-carboxyphenyl-β-sulfatoäthyl-sulfon,
4-Aminophenyl-β-(N,N-dimethylamino)-äthyl-sulfon,
4-Aminophenyl-β-(N,N-diäthylamino)-äthyl-sulfon,
4-Aminophenyl-β-phosphatoäthylsulfon,
4-Aminophenyl-β-thiosulfatoäthyl-sulfon,
4-Aminophenyl-vinyl-sulfon,
4-(4′-Aminophenylsulfonyl)-phenyl-β-sulfatoäthylsulfon,
3-(4′-Aminobenzoyl)-amino-phenyl-β-sulfatoäthylsulfon,
3-(3′-Aminophenylsulfonyl)-aminophenyl-β-sulfatoäthylsulfon,
4-Aminonaphthyl-(1)-β-sulfatoäthylsulfon,
5-Aminonaphthyl-(1)-β-sulfatoäthylsulfon,
6-Aminonaphthyl-(1)-β-sulfatoäthylsulfon,
6-Aminonaphthyl-(2)-β-sulfatoäthylsulfon,
6-Amino-4-sulfonaphthyl-(2)-β-sulfatoäthylsulfon,
8-Amino-naphthyl-(2)-β-sulfatoäthylsulfon,
8-Amino-6-sulfo-naphthyl-(2)-β-sulfatoäthylsulfon,
Anilin,
p-Toluidin,
p-Chloranilin,
o-Amino-benzoesäure,
p-Amino-benzoesäure,
Anilin-2-sulfonsäure,
Anilin-3-sulfonsäure,
Anilin-4-sulfonsäure,
Anilin-2,4-disulfonsäure,
Anilin-2,5-disulfonsäure,

2-Naphthylamin-1-sulfonsäure,
2-Naphthylamin-1,5-disulfonsäure.

Beispiel 6

268 g m-Phenylendiamin-4,6-disulfonsäure werden bei 35—45°C mit 183 g Methoxy-dichlortriazin umgesetzt. Die Lösung des erhaltenen Kondensationsproduktes läßt man nach Zugabe von 70 g Natriumnitrit in 250 ml 10n Salzsäure einfließen und gibt die so erhaltene Diazosuspension anschließend, wie in Beispiel 1 beschrieben, zu einer Lösung des wie weiter unten beschrieben aus 535 g 3,3'-Bis-[(4-aminophenyl)-aminosulfonyl]-nickelphthalocyanin-3'',3'''-disulfonsäure hergestellten Bispyrazolons 3,3'-Bis-[4-{4-chlor-6-[3,5-disulfo-4-(3-carboxy-5-hydroxy-1-pyrazolyl)-phenylamino]-s-triazinylamino}-phenyl]-aminosulfonyl-NiPc-3'',3'''-disulfonsäure. Anschließend wird der pH-Wert mit 4n Sodalösung auf 7—7,2 gestellt und der entstandene grüne Farbstoff durch Aussalzen oder Sprühtrocknen isoliert.

Das als Kupplungskomponente eingesetzte Bispyrazolon wurde auf folgende Weise hergestellt:

535 g 3,3'-Bis-[(4-aminophenyl)-amino-sulfonyl)]-nickelphthalocyanin-3'',3'''-disulfosäure, hergestellt in üblicher Weise durch Kondensation von 0,5 Mol Nickelphthalocyanintetrasulfochlorid mit 1 Mol Acetyl-p-phenylendiamin und Verseifung des Kondensationsproduktes werden mit 3500 ml Wasser verrührt und durch Zugabe von 200 ml 10n Natronlauge gelöst. Zu dieser Lösung gibt man bei 0—5°C 190 g Cyanurchlorid, gelöst in Aceton, und hält gleichzeitig mit etwa 100 ml 10n Natronlauge den pH-Wert zwischen 6 und 7. Wenn keine freien Aminogruppen mehr nachweisbar sind, wird die neutrale Lösung mit einer neutralen Lösung von 275 g p-Phenylendiamin-2,6-disulfonsäure in etwa 3000 ml Wasser versetzt und auf etwa 45° erwärmt. Gleichzeitig hält man mit weiteren 100 ml 10n Natronlauge den pH-Wert zwischen 6 und 7. Wenn der pH-Wert konstant bleibt, ist die Reaktion beendet und nicht umgesetzte p-Phenylendiamindisulfonsäure läßt sich in einem Chromatogramm nur noch spurenweise nachweisen. Das entstandene Amin entspricht der allgemeinen Formel X. Es wird durch Zugabe von Steinsalz abgeschieden und durch Waschen mit 20%igem Salzwasser von eventuell nicht umgesetzter p-Phenylendiamindisulfonsäure befreit. Es wird dann erneut mit etwa 8000 ml Wasser neutral gelöst, mit 72 g Natriumnitrit versetzt und in eine Mischung aus 300 ml 10n Salzsäure und 2000 g Eis bei 0—5° eingerührt. Nach kurzer Zeit wird ein eventueller Überschuß von Nitrit durch Zugabe von Aminosulfosäure zerstört. In die so erhaltene Diazosuspension werden 240 g Acetylbernsteinsäure Diäthylester eingegossen. Anschließend wird der pH-Wert zunächst durch Einstreuen von ca. 130 g Soda auf 5,5 gestellt und dann mit ca. 84 g Natriumbicarbonat bei 5 bis 6 gehalten. Man rührt anschließend ca. 1 Stunde nach. Das Ende der Reaktion erkennt man daran, daß der pH konstant bleibt und daß beim Versetzen einer Probe mit einer Lösung von H-Säure in 2n Soda keine Farbtonveränderung eintritt.

Die so erhaltene Lösung des Oxalessigsäuredimethylesterhydrazons wird mit 350 ml 10n Lauge versetzt, wodurch der pH auf Werte von 12 bis 13 ansteigt. Man rührt einige Stunden, am besten über Nacht, bei Raumtemperatur. Der Ringschluß zum entsprechenden 3-Carboxy-pyrazolon-5 ist dann abgeschlossen. Der pH-Wert wird mit etwas Salzsäure auf 8 zurückgestellt und die erhaltene Rohlösung direkt zur Kupplung eingesetzt.

Beispiel 7

281 g 4-Aminophenyl-$\beta$-sulfatoäthyl-sulfon werden neutral in etwa 6000 ml Wasser gelöst. Die Lösung läßt man nach Zugabe von 70 g Natriumnitrit in 250 ml 10n Salzsäure einfließen und gibt die so erhaltene Diazosuspension anschließend, wie in Beispiel 5 beschrieben, zu einer Lösung des in Beispiel 6 beschriebenen, aus 535 g 3,3'-Bis-[(4-aminophenyl)-amino-sulfonyl]-nickelphthalocyanin-3'',3'''-disulfonsäure hergestellten Bispyrazolons. Die Kupplung ist in wenigen Minuten beendet. Der entstandene Farbstoff kann durch Sprühtrocknung isoliert werden.

Beispiel 8

173 g Sulfanilsäure werden in 1000 ml Wasser neutral gelöst und auf 0° gekühlt. 190 g Cyanurchlorid werden eingerührt und unter Zusatz von 55 g Soda bei pH 6 eine Stunde gehalten. Dann wird eine neutrale Lösung von 188 g m-Phenylendiaminsulfonsäure zugegeben und auf 40° bei pH 6 erwärmt. Nach etwa 1 Stunde wird auf 0—5° gekühlt, 70 g Nitrit zugegeben und auf 1000 g Eis und 250 ml 10n Salzsäure laufenlassen. Dann wird eine neutrale Lösung von 299 g 1-(4'-Amino-2'-sulfophenyl)-pyrazolon-(5)-3-carbonsäure eingegossen und mit Soda auf pH 6—7 gestellt.

1060 g 3-[(3-Amino-4-sulfo-phenyl)-amino-sulfonyl]-nickel-phthalocyanin-3',3'',3'''-trisulfonsäure, hergestellt in üblicher Weise durch Kondensation von Nickelphthalocyanintetrasulfochlorid mit 1,3-Diaminobenzol-4-sulfonsäure, werden mit 7000 ml Wasser verrührt und durch Zugabe von 400 ml

10n Natronlauge gelöst.

Zu dieser Lösung gibt man bei 0 – 5° C 190 g Cyanurchlorid, gelöst in Aceton, und hält gleichzeitig mit etwa 100 ml 10n Natronlauge den pH-Wert zwischen 6 und 7. Wenn keine freien Aminogruppen mehr nachweisbar sind, wird die neutrale Lösung mit der neutralen Lösung des obigen Azofarbstoffes versetzt und das Gemisch auf etwa 50° erwärmt, wobei gleichzeitig mit etwa 85 g Natriumbikarbonat der pH-Wert zwischen 5,5 und 7,5 gehalten wird. Der entstandene Phthalocyanin-azofarbstoff kann durch Aussalzen oder Sprühtrocknung isoliert werden.

Ersetzt man bei der Herstellung des Azofarbstoffes die dort eingesetzte 1-(4'-Amino-2'-sulfophenyl)-pyrazolon-(5)-3-carbonsäure durch eine der folgenden Pyrazoloncarbonsäuren und verfährt man im übrigen wie oben angegeben, so erhält man ebenfalls wertvolle, erfindungsgemäße Farbstoffe.

1-3'-Aminophenyl-pyrazolon-(5)-3-carbonsäure
1-4'-Aminophenyl-pyrazolon-(5)-3-carbonsäure
1-2'-Sulfo-5'-aminophenyl-pyrazolon-(5)-3-carbonsäure
1-2'-Methyl-3'-amino-5'-sulfophenyl-pyrazolon-(5)-3-carbonsäure
1-2'-Methyl-3'-sulfo-5'-amino-pyrazolon-(5)-3-carbonsäure
1-2',5'-Disulfo-4'-aminophenyl-pyrazolon-(5)-3-carbonsäure
1-2',6'-Disulfo-4'-aminophenyl-pyrazolon-(5)-3-carbonsäure
1-(4'-Amino-2,2'-disulfo-stilbenyl)-pyrazolon-(5)-3-carbonsäure.

## Beispiel 9

281 g 4-Aminophenyl-β-sulfatoäthyl-sulfon werden neutral in etwa 5000 ml Wasser gelöst. Die neutrale Lösung wird mit 70 g Natriumnitrit versetzt und dann bei 0 – 3° in 1000 g Eis und 250 ml 10n Salzsäure eingerührt. Ist die Diazotierung beendet, gibt man die Diazosuspension zu einer neutralen Lösung von 313 g 1-(2'-Methyl-3'-sulfo-5'-aminophenyl)-pyrazolon-(5)-3-carbonsäure in etwa 3000 ml Wasser, der zuvor 100 g Bicarbonat zugesetzt worden waren. Die Kupplung ist in wenigen Minuten beendet.

Anschließend werden 190 g Cyanurchlorid, gelöst in 500 ml Aceton, zugegeben. Die Mischung wird bei 0 – 5° und pH 5 – 6 unter Zusatz von etwa 90 g Natriumbicarbonat so lange gerührt, bis keine Aminogruppen mehr nachweisbar sind.

1060 g 3-[(3-Amino-4-sulfo-phenyl)-amino-sulfonyl-]nickelphthalocyanin-3',3'',3'''-trisulfonsäure, hergestellt in üblicher Weise durch Kondensation von Nickelphthalocyanintetrasulfochlorid mit 1,3-Diaminobenzol-4-sulfonsäure, werden mit 7000 ml Wasser verrührt und durch Zugabe von 400 ml 10n Natronlauge gelöst.

Zu dieser Lösung gibt man den obigen Azofarbstoff, erwärmt auf 45 – 55° und rührt bei pH 4,5 – 5,5 unter Zusatz von etwa 85 g Natriumbicarbonat so lange, bis keine freien Aminogruppen mehr nachweisbar sind.

## Beispiel 10

932 g 3-(β-Aminoäthyl)-aminosulfonyl-nickel-Phthalocyanin-3',3'',3'''-trisulfonsäure, hergestellt in üblicher Weise durch Kondensation von Nickelphthalocyanintetrasulfochlorid mit 1-Amino-2-acetylamino-äthan und anschließender alkalischer Verseifung, werden in 7000 ml Wasser verrührt und durch Zugabe von 400 ml 10n Natronlauge gelöst. Zu dieser Lösung gibt man bei 0 – 5° C 190 g Cyanurchlorid, gelöst in Aceton, und hält gleichzeitig mit etwa 100 ml 10n Natronlauge den pH-Wert zwischen 8 und 10. Wenn kein Alkali mehr verbraucht wird, wird die neutrale Lösung mit einer neutralen Lösung von 275 g 1,3-Diaminobenzol-4,6-disulfonsäure in etwa 3000 ml Wasser versetzt und auf etwa 45°C erwärmt. Gleichzeitig hält man mit weiteren 100 ml 10n Natronlauge den pH-Wert zwischen 6 und 7. Wenn der pH-Wert konstant bleibt, ist die Reaktion beendet und nicht umgesetzte 1,3-Diaminobenzol-4,6-disulfonsäure läßt sich in einem Chromatogramm nur noch spurenweise nachweisen. Das entstandene Amin entspricht der allgemeinen Formel X. Es wird, wie im Beispiel 1 beschrieben, durch Diazotieren, Kuppeln auf Acetylbernsteinsäuredimethylester und nachfolgende Umlagerung in das entsprechend substituierte Pyrazolon überführt.

Zu dem so erhaltenen erfindungsgemäßen Pyrazolon gibt man dann, wie im Beispiel 1 beschrieben, das diazotierte Kondensationsprodukt aus 1,3-Phenylendiamin-4-sulfonsäure und Cyanurchlorid und kuppelt entsprechend den dort gemachten Angaben.

Ersetzt man die 1,3-Diaminobenzol-4,6-disulfonsäure bei der Kondensationsreaktion mit der 3-(β-Dichlortriazinylaminoäthyl)-aminosulfonyl-Ni-Pc-3',3'',3'''-trisulfonsäure durch eines der im folgenden genannten Amine, so erhält man ebenfalls wertvolle Phthalocyaninpyrazolone:

1,4-Phenylendiamin-2-sulfonsäure
1,3-Phenylendiamin-4-sulfonsäure

1,4-Phenylendiamin-2,5-disulfonsäure
1,4-Phenylendiamin-2,6-disulfonsäure
2,4-Diaminotoluol-6-sulfonsäure

Ersetzt man das diazotierte Kondensationsprodukt aus Cyanurchlorid und 1,3-Phenylendiamin-4-sulfonsäure durch die Diazoverbindung eines der folgenden Amine, so erhält man ebenfalls wertvolle, erfindungsgemäße Farbstoffe:

4-Aminophenyl-$\beta$-sulfatoäthyl-sulfon
6-Amino-4-sulfonaphthyl-(2)-$\beta$-sulfatoäthylsulfon
Kondensationsprodukt aus 1,3-Phenylendiamin-4,6-disulfonsäure und Cyanurchlorid
Kondensationsprodukt aus 1,3-Phenylendiamin-4-sulfonsäure und 2,4-Dichlor-6-(2',5'-disulfophenyl)-amino-1,3,5-triazin.

**Patentansprüche**

1. Wasserlösliche faserreaktive Phthalocyanin-Azofarbstoffe der Formel I

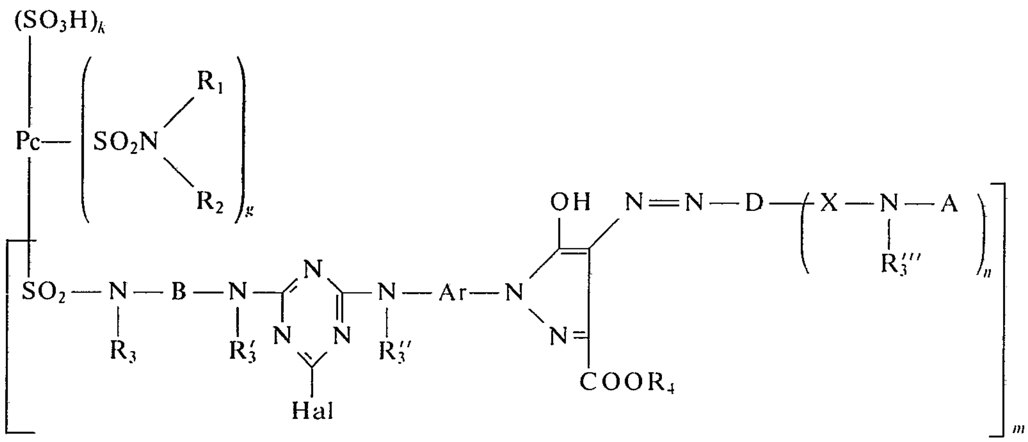

(I)

worin n = 0 oder 1, Pc den Rest eines metallhaltigen oder metallfreien Phthalocyanins, D für n = 0 einen Rest aus der Reihe: Phenyl, Naphthyl,

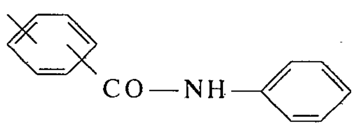

und für n = 1 einen Rest aus der Reihe Phenylen, Naphthylen,

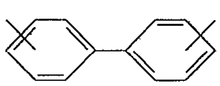
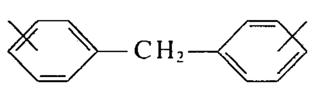
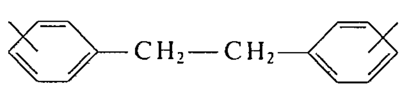
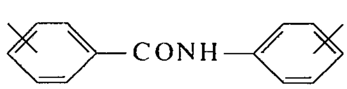
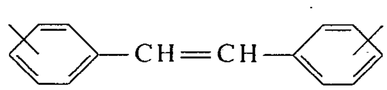
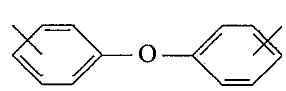
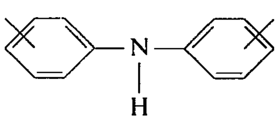
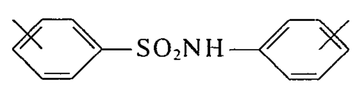
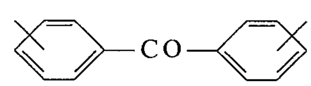
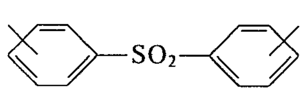

und

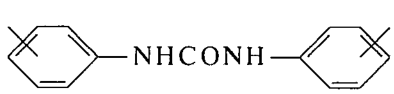

wobei der Rest D gegebenenfalls auch durch eine $SO_3H$-Gruppe substituiert sein kann und pro Kern auch noch zusätzlich durch einen Substituenten der Gruppe Alkoxy mit 1 bis 2 C-Atomen, $-SO_2R_5$ oder eine zusätzliche $-SO_3H$-Gruppe, durch einen oder zwei gleiche oder verschiedene Substituenten der

Gruppen Halogen,

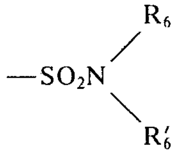 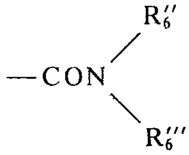 $-COOH$

oder durch ein bis drei gleiche oder verschiedene Alkylreste mit 1 bis 2 C-Atomen substituiert sein kann, oder einen durch eine Vinylsulfon-, β-Sulfatoäthylsulfon-, β-Phosphatoäthylsulfon- oder β-Thiosulfatoäthylsulfongruppe sowie gegebenenfalls zusätzlich durch eine $-SO_3H$-Gruppe, eine Alkoxygruppe mit 1 oder 2 C-Atomen, einen Alkylrest mit 1 oder 2 C-Atomen oder eine $-COOH$-Gruppe substituierten Rest der Formel

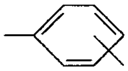 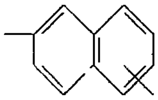 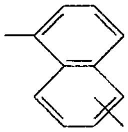 oder 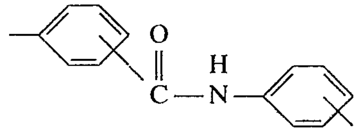

ar einen Rest aus der Reihe Phenylen, Naphthylen,

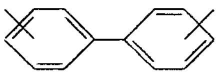 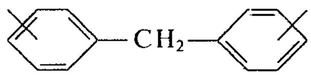 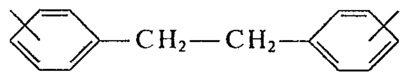

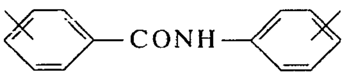 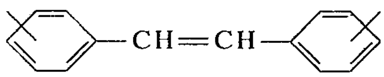 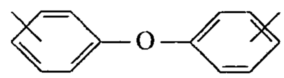

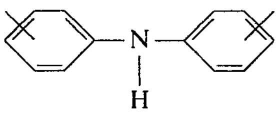 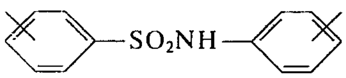 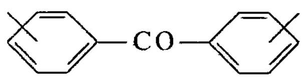

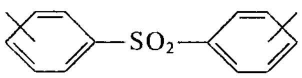 und 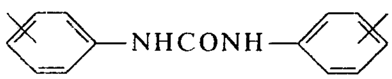

oder 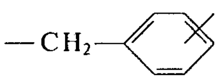 oder 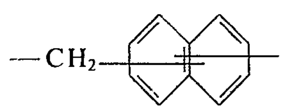

wobei jeder der beiden zuletzt genannten Reste über seine Methylenbrücke an die Gruppe

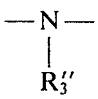

des Cyanurhalogenids gebunden ist und jeder der vorstehend genannten Reste durch eine $-SO_3H$-Gruppe substituiert sein kann und auch noch zusätzlich pro Kern durch einen Substituenten der Gruppen Alkoxy mit 1 bis 2 C-Atomen, $-SO_2R_5$ oder eine zusätzliche $-SO_3H$-Gruppe, durch einen oder zwei gleiche oder verschiedene Substituenten der Gruppen Halogen,

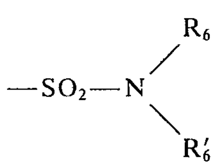 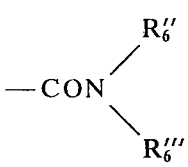 $-COOH$

oder durch ein bis drei gleiche oder verschiedene Alkylreste mit 1 bis 2 C-Atomen substituiert sein kann,

B den Rest eines aliphatischen Kohlenwasserstoffes mit 2 bis 6 C-Atomen, einen gegebenenfalls durch eine $-SO_3H$-Gruppe substituierten Rest aus der Reihe Phenylen, Naphthylen,

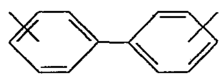
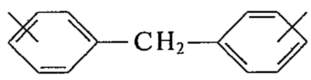
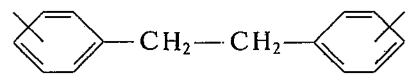

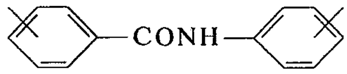
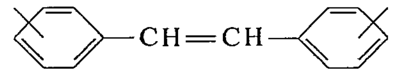
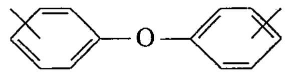

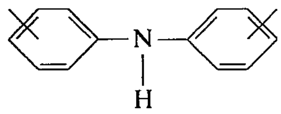
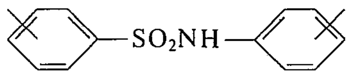
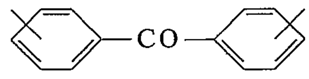

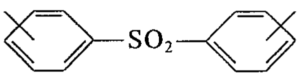
und
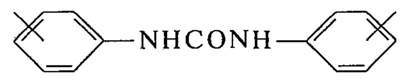

oder
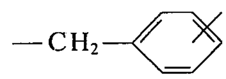
oder
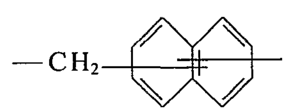

der pro Kern durch einen Substituenten der Gruppen Alkoxy mit 1 bis 2 C-Atomen, $-SO_2R_5$ oder eine zusätzliche $-SO_3H$-Gruppe, durch einen oder zwei gleiche oder verschiedene Substituenten der Gruppen Halogen,

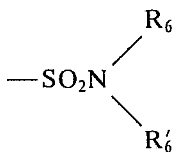
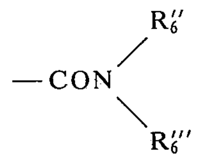
$-COOH$

oder durch ein bis drei gleiche oder verschiedene Alkylreste mit 1 bis 2 C-Atomen substituiert sein kann,

A den Acylrest einer gesättigten oder ungesättigten, gegebenenfalls durch Halogenatome substituierten aliphatischen Carbonsäure mit 2 bis 6 C-Atomen, den Acylrest der Cyclohexancarbonsäure, den gegebenenfalls durch ein bis drei Halogenatome, durch ein bis zwei Alkoxygruppen mit 1 bis 2 C-Atomen oder durch ein bis drei Alkylgruppen mit 1 bis 4 C-Atomen substituierten Acylrest der Benzoesäure oder Benzolsulfonsäure oder insbesondere den Rest einer faserreaktiven Acylierungskomponente aus der Reihe der Triazine, Chinoxaline, Phthalazine, Pyridazine, Pyrimidine oder $\alpha,\beta$-ungesättigten aliphatischen Carbonsäure,

$R_1$ Wasserstoff, Methyl, Carboxymethyl, Sulfomethyl, einen gegebenenfalls durch Cl, Br, OH, Alkoxy mit 1 bis 2 C-Atomen, Alkanoylamino mit 1 bis 2 C-Atomen, vorzugsweise Acetylamino, $-COOH$ oder $-SO_3H$ substituierten Alkylrest mit 2 bis 6 C-Atomen oder Phenyl, wobei der aromatische Kern durch Cl, Alkyl und/oder Alkoxy mit 1 bis 2 C-Atomen, Alkanoylamino mit 1 bis 2 C-Atomen, $-COOH$, $-CONH_2$, $-SO_2NH_2$, $-SO_2R_5$ oder $-SO_3H$ substituiert sein kann,

$R_2$ Wasserstoff, Methyl, Carboxymethyl, Sulfomethyl, einen gegebenenfalls durch Cl, Br, OH, Alkoxy mit 1 bis 2 C-Atomen, Alkanoylamino mit 1 bis 2 C-Atomen, Benzoylamino, $-COOH$ oder $-SO_3H$ substituierten Alkylrest mit 2 bis 6 C-Atomen oder einen unsubstituierten Alkylrest mit 6 bis 20 C-Atomen,

$R_3$, $R_3'$, $R_3''$ und $R_3'''$ unabhängig voneinander Wasserstoff, Methyl, Carboxymethyl, Sulfomethyl oder einen gegebenenfalls durch OH, Alkoxy mit 1 bis 2 C-Atomen, $-COOH$ oder $-SO_3H$ substituierten Äthylrest,

$R_4$ Wasserstoff, Methyl, gegebenenfalls durch OH, Halogen oder Alkoxy mit 1 bis 2 C-Atomen substituiertes Äthyl, Propyl, n- oder iso-Butyl, Pentyl oder Hexyl,

$R_5$ Alkyl mit 1 bis 3 C-Atomen, Carboxymethyl, $\beta$-Hydroxyäthyl oder Phenyl, wobei der Phenylrest durch Alkoxy- oder Alkylgruppen mit 1 bis 2 C-Atomen substituiert sein kann und

$R_6$, $R_6'$, $R_6''$ und $R_6'''$ Wasserstoff, Methyl, Carboxymethyl, Sulfomethyl oder einen gegebenenfalls durch OH, Alkoxy mit 1 bis 2 C-Atomen, $-COOH$ oder $-SO_3H$ substituierten Äthylrest, hal Chlor, Brom oder Fluor,

X eine direkte Bindung, oder für den Fall, daß D einen sich vom Benzol oder Naphthalin ableitenden Rest bedeutet, auch Methylen oder Äthylen,

$k = 1, 2$ oder 3, $g = 0$ oder 1, $m = 1, 2$ oder 3 bedeuten und wobei die Summe von $k + g + m$ 3 oder 4 ist, und ihre Alkali-, Ammonium- oder Erdalkalisalze.

2. Wasserlösliche faserreaktive Phthalocyanin-Azofarbstoffe nach Anspruch 1, dadurch gekennzeichnet, daß unabhängig voneinander der Rest D und/oder ar und/oder B außer Carbon- und/oder

Sulfonsäureresten keine weiteren Substituenten enthält.

3. Wasserlösliche faserreaktive Phthalocyanin-Azofarbstoffe nach den Ansprüchen 1 oder 2, dadurch gekennzeichnet, daß unabhängig voneinander D und/oder ar einen Rest aus der Reihe

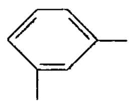 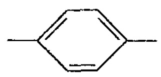 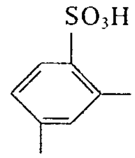 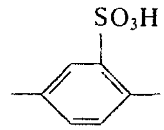 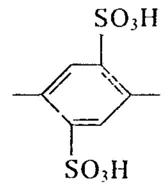

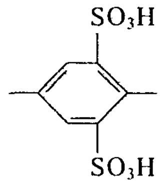 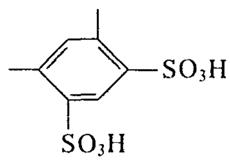 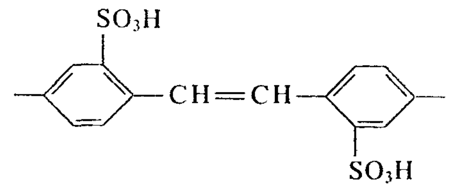

und

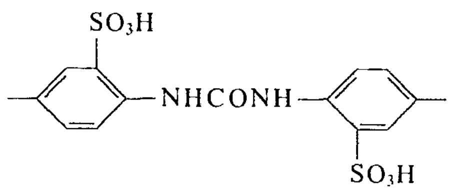

bedeuten.

4. Wasserlösliche faserreaktive Phthalocyanin-Azofarbstoffe nach den Ansprüchen 1 bis 3, dadurch gekennzeichnet, daß B einen Rest aus der Reihe

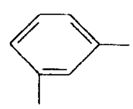 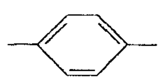 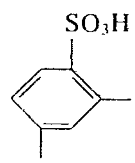 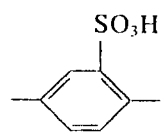 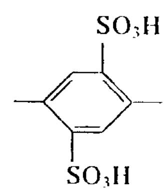

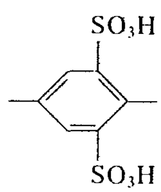 $-CH_2CH_2-$ 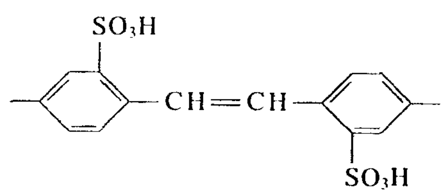

und

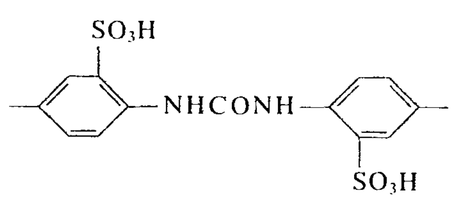

bedeutet.

5. Wasserlösliche faserreaktive Phthalocyanin-Azofarbstoffe nach den Ansprüchen 1 bis 4, dadurch gekennzeichnet, daß $R_5$ Methyl, Äthyl oder Hydroxyäthyl ist.

6. Wasserlösliche faserreaktive Phthalocyanin-Azofarbstoffe nach den Ansprüchen 1 bis 5, dadurch gekennzeichnet, daß $R_6$, $R_6'$, $R_6''$ und $R_6'''$ für Wasserstoff stehen.

7. Verfahren zur Herstellung wasserlöslicher faserreaktiver Phthalocyanin-Azofarbstoffe der Formel I, worin Pc, D, ar, B, A, $R_1$, $R_2$, $R_3$, $R_3'$, $R_3''$, $R_3'''$, $R_4$, hal, X, k, g, m und n die obengenannten Bedeutungen haben und die Summe von k, g und m 3 oder 4 ist und ihrer Alkali-, Ammonium- oder Erdalkalisalze,

dadurch gekennzeichnet, daß man m-Mole eines Amins der Formel II

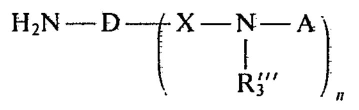

(II)

in der D, A, X, $R_3'''$ und n die oben angegebene Bedeutung haben, diazotiert und auf 1 Mol eines Pyrazolons der allgemeinen Formel III

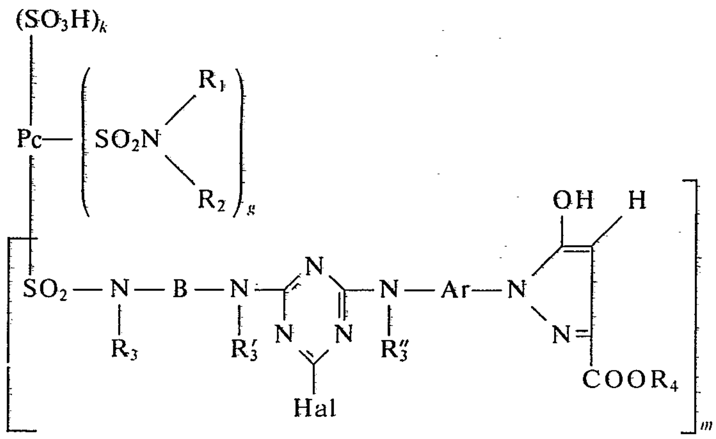

(III)

worin Pc, B, ar, $R_1$, $R_2$, $R_3$, $R_3'$, $R_3''$, $R_4$, k, g, m und hal die oben angegebene Bedeutung haben, kuppelt.

8. Verfahren zur Herstellung wasserlöslicher faserreaktiver Phthalocyanin-Azofarbstoffe der Formel I

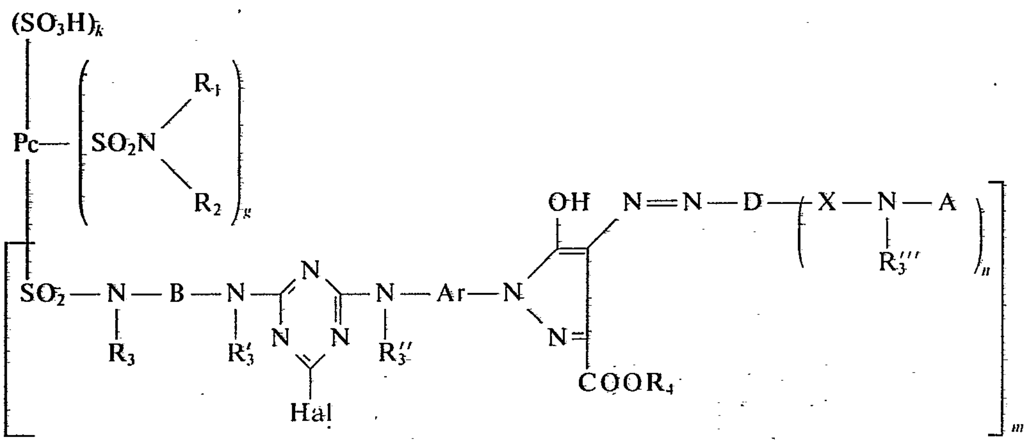

(I)

worin Pc, D, ar, B, A, $R_1$, $R_2$, $R_3$, $R_3'$, $R_3''$, $R_3'''$, $R_4$, hal, X, k, g, m und n die obengenannten Bedeutungen haben und die Summe von k, g und m 3 oder 4 ist und ihrer Alkali-, Ammonium- oder Erdalkalisalze, dadurch gekennzeichnet, daß man m-Mole eines Aminoazofarbstoffes der allgemeinen Formel VI

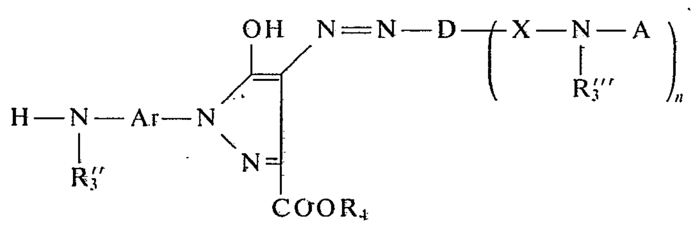

(VI)

in der ar, D, A, $R_3''$, $R_3'''$, $R_4$, X und n die oben angegebene Bedeutung haben, mit der Ausnahme, daß A

nicht die Bedeutung eines Dihalogentriazinrestes hat, mit 1 Mol eines Dihalogentriazinderivats der Formel VII

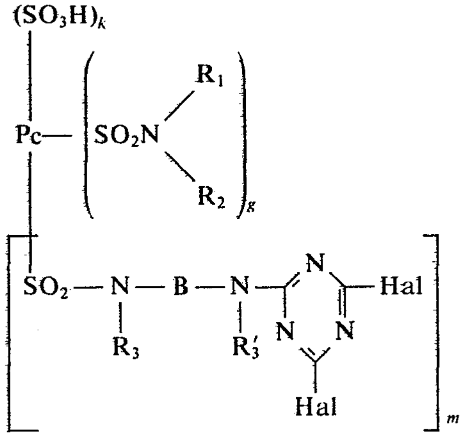

(VII)

worin Pc, B, $R_1$, $R_2$, $R_3$, $R_3'$, hal, k, g und m die oben angegebene Bedeutung haben, kondensiert.

9. Verfahren zur Herstellung wasserlöslicher faserreaktiver Phthalocyanin-Azofarbstoffe der Formel I

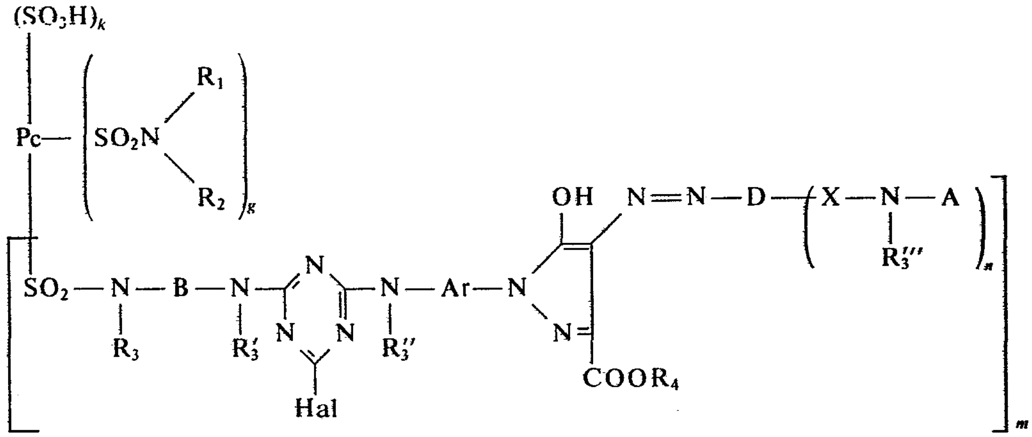

(I)

worin Pc, D, ar, B, A, $R_1$, $R_2$, $R_3$, $R_3'$, $R_3''$, $R_3'''$, $R_4$, hal, X, k, g, m und n die obengenannten Bedeutungen haben und die Summe von k, g und m 3 oder 4 ist und ihrer Alkali-, Ammonium- oder Erdalkalisalze, dadurch gekennzeichnet, daß man m-Mole eines dihalogentriazinhaltigen Azofarbstoffes der allgemeinen Formel IV

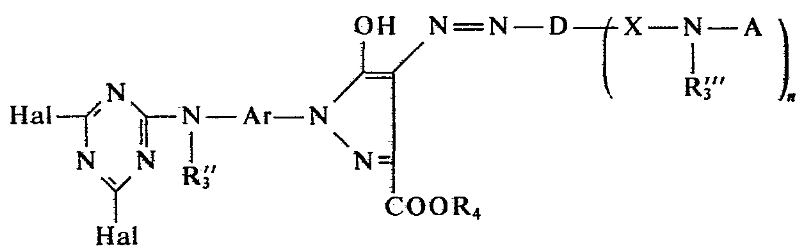

(IV)

in der ar, D, A, $R_3''$, $R_3'''$, $R_4$, hal, X und n die oben angegebene Bedeutung haben, mit der Ausnahme, daß A nicht die Bedeutung eines Dihalogentriazinrestes hat, mit einem Phthalocyaninderivat der

Formel V

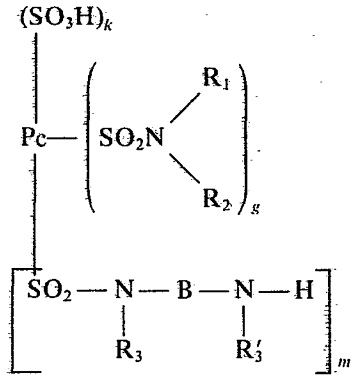

(V)

worin Pc, B, $R_1$, $R_2$, $R_3$, $R_3'$, k, l und m die oben angegebene Bedeutung haben, kondensiert.

10. Verwendung von wasserlöslichen faserreaktiven Phthalocyanin-Azofarbstoffen nach den Ansprüchen 1 bis 6 der Formel I zum Färben und Bedrucken von Zellulose und Zellulose enthaltenden Textilmaterialien.

**Claims**

1. Water-soluble fibre-reactive phthalocyanine azo dyestuff of the formula

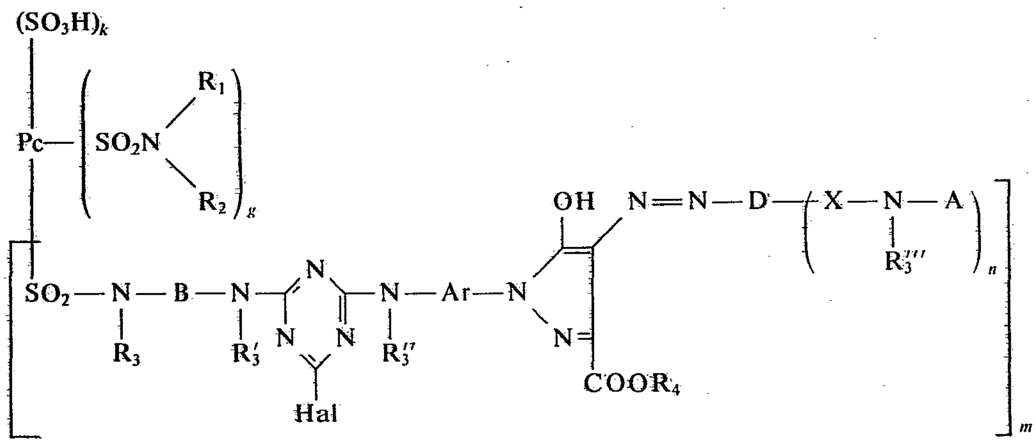

(I)

wherein
n denotes 0 or 1,
Pc is a radical of a metal-containing or metal free phthalocyanine,
D is a radical selected from the series comprising phenyl, naphthyl,

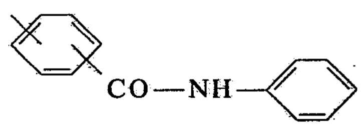

if n denotes 0,
if n denotes 1, a radical selected from the series comprising phenylene, naphthylene,

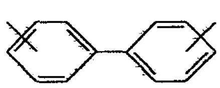
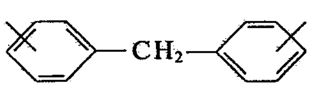
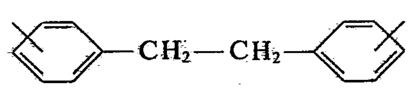
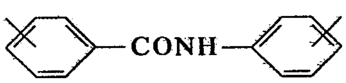
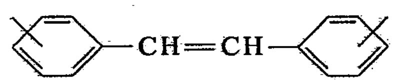
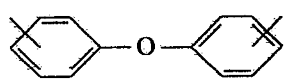
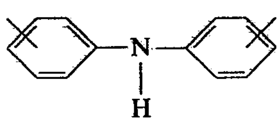
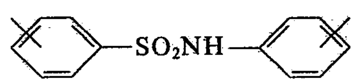
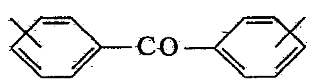

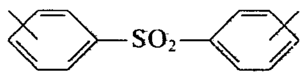 and 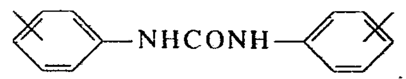

it being possible for the radical D to be substituted by a $-SO_3H$ group and, per nucleus, to be additionally substituted by a substituent of the group alkoxy with 1 to 2 carbon atoms, $-SO_2R_5$ or an additional $-SO_3H$ group, by one or two substituents, which may be the same or different, of the groups halogen,

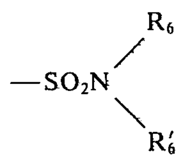 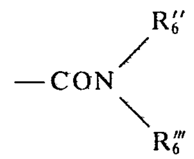 $-COOH$

or by one to three alkyl radicals with 1 to 2 carbon atoms, which may be the same or different, or a radical of the formula

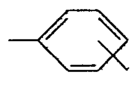 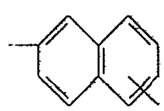 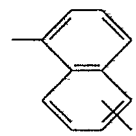 or 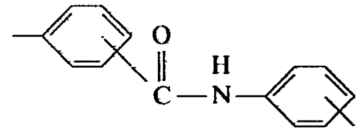

substituted by a vinylsulphone, β-sulphatoethylsulphone, β-phosphatoethylsulphone or β-thiosulphatoethylsulphone group and, optionally additionally substituted by a $-SO_3H$, an alkoxy group with 1 or 2 carbon atoms, an alkyl radical with 1 or 2 carbon atoms or a $-COOH$ group;
ar denotes a radical selected from the series consisting of phenylene, naphthylene,

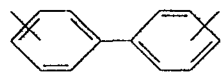 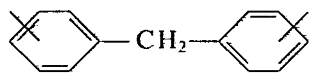 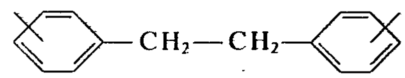

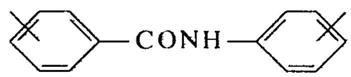 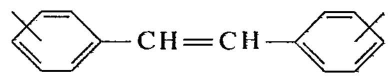 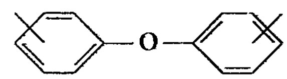

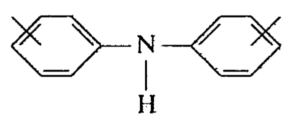 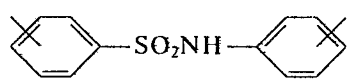 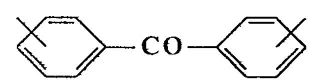

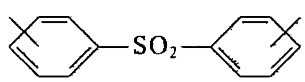 and 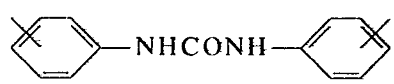

or 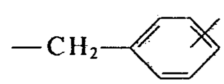 or 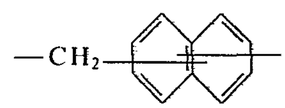

each of the two last-mentioned radicals being bonded to the

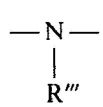

group of the cyanuric halide via its methylene bridge, and it being possible for each of the before-mentioned radicals to be substituted by a $-SO_3H$ group and, additionally per nucleus, to be substituted by a substituent of the group alkoxy with 1–2 carbon atoms, $-SO_2R_5$ or an additional $-SO_3H$ group, by 1 or 2 substituents of the groups halogen,

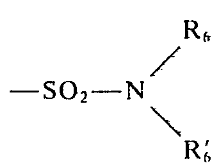 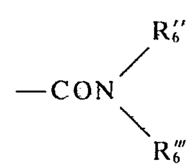 $-COOH$

which substituents may be the same of different, or by 1 to 3 alkyl radicals with 1 to 2 carbon atoms, which may be the same or different; denotes the radical of an aliphatic hydrocarbon with 2 to 6 carbon atoms, a radical which may be substituted by an $-SO_3H$ group, said radical being selected from the series comprising phenylene, naphthylene,

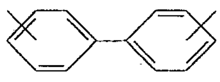 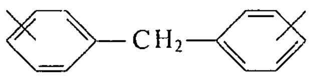 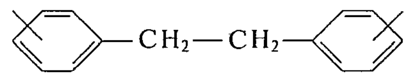

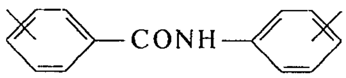 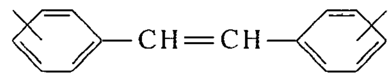 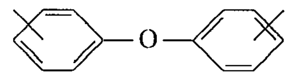

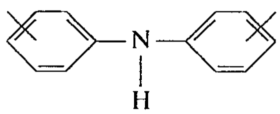 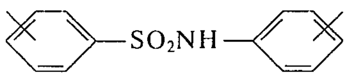 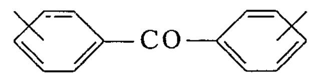

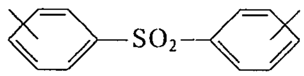 and 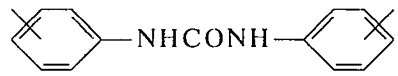

or 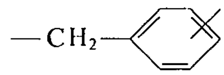 or 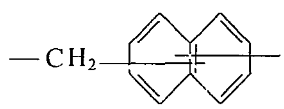

it being possible for said radical to be substituted, per nucleus, by a substituent of the groups comprising alkoxy with 1 to 2 carbon atoms, $-SO_2R_5$ or an additional $-SO_3H$ group by 1 or 2 substituents of the groups comprising halogen,

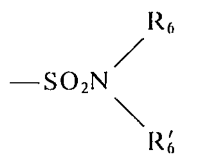 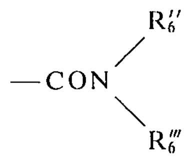 $-COOH$

which substituents may be the same or different, or by 1 to 3 alkyl radicals with 1 to 2 carbon atoms, which may be the same or different;

A denotes the acyl radical of a saturated or unsaturated aliphatic carboxylic acid with 2 to 6 carbon atoms which may be substituted by halogen atoms, the acyl radical of cyclohexanecarboxylic acid, the acyl radical of benzoic acid or benzenesulphonic acid, which latter acyl radicals may be substituted by 1 to 3 halogen atoms, by 1 to 1 alkoxy groups with 1 to 2 carbon atoms or by 1 to 3 alkyl groups with 1 to 4 carbon atoms, or especially the radical of a fibre-reactive acylation component selected from the series comprising the triazines, quinoxalines, phthalazines, pyridazines, pyrimidines of $\alpha,\beta$-unsaturated aliphatic carboxylic acid;

$R_1$ denotes hydrogen, methyl, carboxymethyl, sulphomethyl, an alkyl radical with 2 to 6 carbon atoms which may be substituted by Cl, Br, OH, alkoxy with 1 to 2 carbon atoms, alkanoylamino with 1 to 2 carbon atoms, preferably acetylamino, $-COOH$ or $-SO_3H$, or phenyl, it being possible for the aromatic nucleus to be substituted by Cl, alkyl and/or alkoxy with 1 to 2 carbon atoms, alkanoylamino with 1 to 2 carbon atoms, $-COOH$, $-CONH_2$, $-SO_2NH_2$, $-SO_2R_5$ or $SO_3H$;

$R_2$ denotes hydrogen, methyl, carboxymethyl, sulphomethyl, an alkyl radical with 2 to 6 carbon atoms which may be substituted by Cl, Br, OH, alkoxy with 1 to 2 carbon atoms, alkanoylamino with 1 to 2 carbon atoms, benzoylamino, $-COOH$ or $-SO_3H$, or an unsubstituted alkyl radical with 6 to 20 carbon atoms;

$R_3$, $R_3'$, $R_3''$ and $R_3'''$ denote, independently of one another hydrogen, methyl, carboxymethyl, sulphomethyl or an ethyl radical which may be substituted by OH, alkoxy with 1 to 2 carbon atoms, $-COOH$ or $-SO_3H$;

$R_4$ denotes hydrogen, methyl, ethyl which may be substituted by OH, halogen or alkoxy with 1 to 2 carbon atoms, propyl, n- or iso-butyl, pentyl or hexyl,

$R_5$ denotes alkyl with 1 to 3 carbon atoms, carboxymethyl, $\beta$-hydroxy-ethyl or phenyl, it being possible for the phenyl radical to be substituted by alkoxy groups or alkyl groups with 1 to 2 carbon atoms and

$R_6$, $R_6'$, $R_6''$ and $R_6'''$ denote hydrogen, methyl, carboxymethyl, sulphomethyl or an ethyl radical which may be substituted by OH, alkoxy with 1 to 2 carbon atoms, $-COOH$ or $-SO_3H$;

hal denotes chlorine, bromine or fluorine;

X is a direct bond or, if D is a radical derived from benzene or naphthalene, also methylene or ehtylene;

k denotes 1, 2 or 3, g denotes 0 or 1, m denotes 1, 2 or 3, the sum of k, g and m being 3 or 4, and alkali

metal, ammonium and alkaline earth metal salts thereof.

2. Water-soluble fibre-reactive phthalocyanine azo dyestuffs as claimed in claim 1, characterised in that, independently of one another, the radical D and/or ar and/or B contains no substituents other than carboxylic and/or sulphonic acid radicals.

3. Water-soluble fibre-reactive phthalocyanine azo dyestuffs as claimed in claim 1 or 2, characterised in that, independently of one another, D and/or ar denote a radical selected from the series comprising

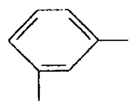
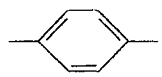
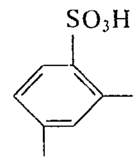
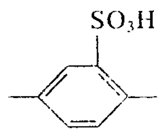
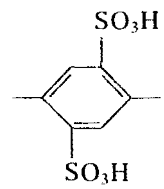
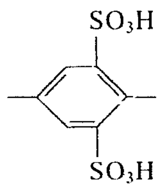
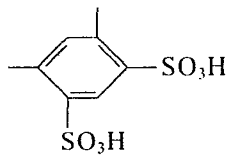
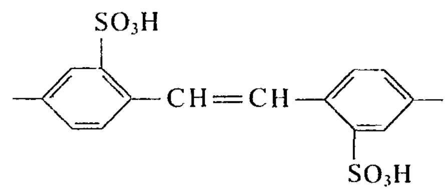

and

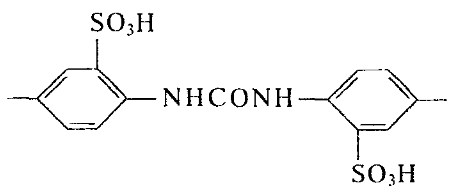

4. Water-soluble fibre-reactive phthalocyanine azo dyestuffs as claimed in claims 1 to 3, characterised in that B denotes a radical selected from the series comprising

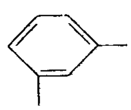
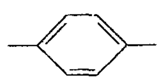
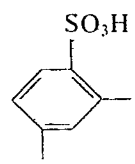
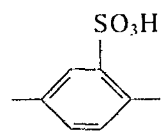
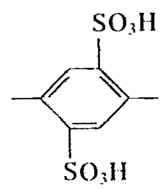
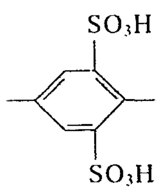
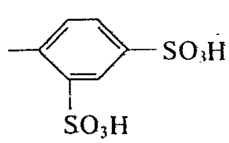
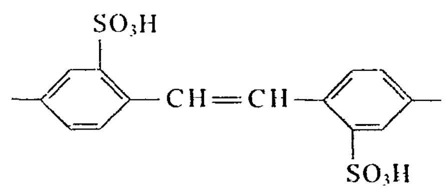

and

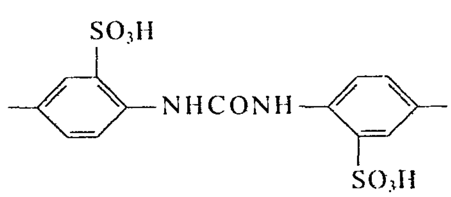

5. Water-soluble fibre-reactive phthalocyanine azo dyestuffs as claimed in claims 1 to 4, characterised in that $R_5$ is methyl, ethyl or hydroxyethyl.

6. Water-soluble fibre-reactive phthalocyanine azo dyestuffs as claimed in claims 1 to 5, characterised in that $R_6$, $R_6'$, $R_6''$ and $R_6'''$ denote hydrogen.

7. Process for producing water-soluble fibre-reactive phthalocyanine azo dyestuffs of the formula I, wherein Pc, D, ar, B, A, $R_1$, $R_2$, $R_3$, $R_3'$, $R_3''$, $R_3'''$, $R_4$, hal, k, g, m and n have the meanings given above and wherein the sum of k, g and m is 3 or 4, and alkali metal, ammonium and alkaline earth metal salts, characterised in that m moles of an amine of the formula II

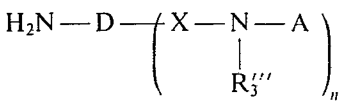

(II)

wherein D, A, X, $R_3'''$ and n have the meanings given above, are diazotised and the product is coupled with 1 mole of a pyrazolone of the general formula III

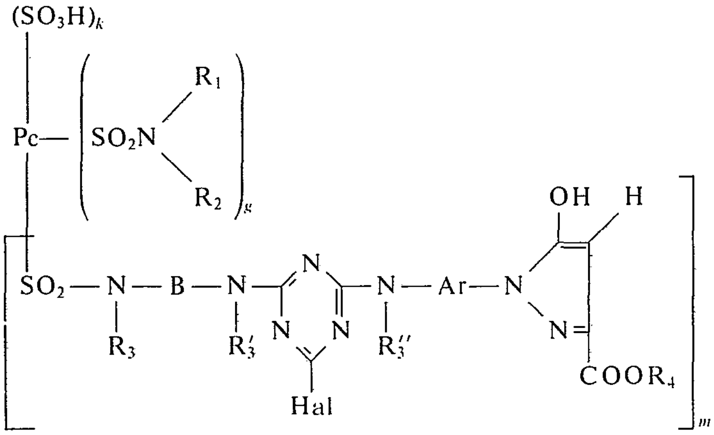

(III)

wherein Pc, B, ar, $R_1$, $R_2$, $R_3$, $R_3'$, $R_3''$, $R_4$, k, g, m and hal have the meanings given above.

8. Process for producing water-soluble fibre-reactive phthalocyanine azo dyestuffs of the formula I

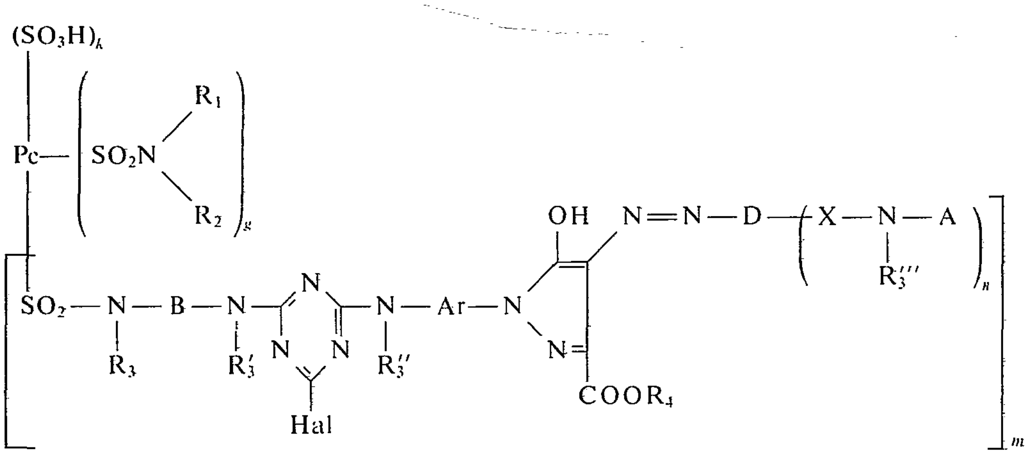

(I)

wherein Pc, D, ar, B, A, $R_1$, $R_2$, $R_3$, $R_3'$, $R_3''$, $R_3'''$, $R_4$, hal, X, k, g, m and n have the meanings given above and wherein the sum of k, g and m is 3 or 4, and alkali metal, ammonium or alkaline earth metal salts thereof, characterised in that m moles of an aminoazo dyestuff of the general formula VI

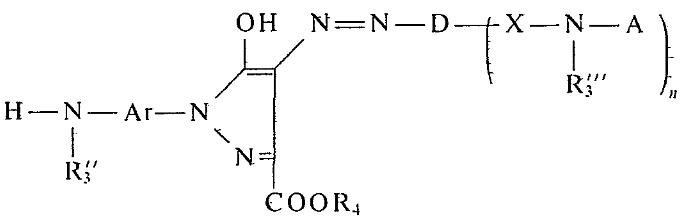

(VI)

wherein ar, D, A, $R_3''$, $R_3'''$, $R_4$, X and n have the meanings given above, with the proviso that A does not

represent a dihalogentriazine radical, are condensed with one mole of a diahalogentriazine derivative of the formula VII

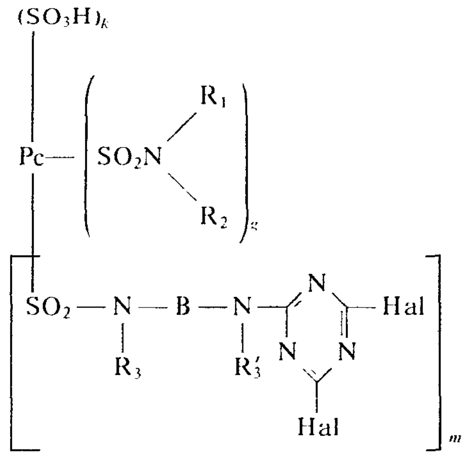

(VII)

wherein Pc, B, $R_1$, $R_2$, $R_3$, $R_3'$, hal, k, g and m have the meanings given above.

9. Process for producing water-soluble fibre-reactive phthalocyanine azo dyestuffs of the formula I

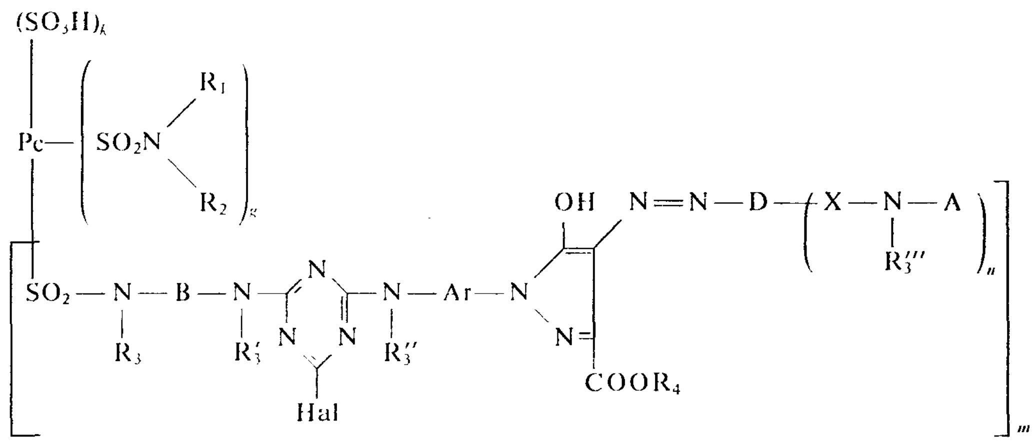

(I)

wherein Pc, D, ar, B, A, $R_1$, $R_2$, $R_3$, $R_3'$, $R_3''$, $R_3'''$, $R_4$, hal, X, k, g, m and n have the meanings given above and wherein the sum of k, g and m is 3 or 4, and alkali metal, ammonium or alkaline earth metal salts thereof, characterised in that m moles of a dihalogentriazine-containing azo dyestuff of the general formula IV

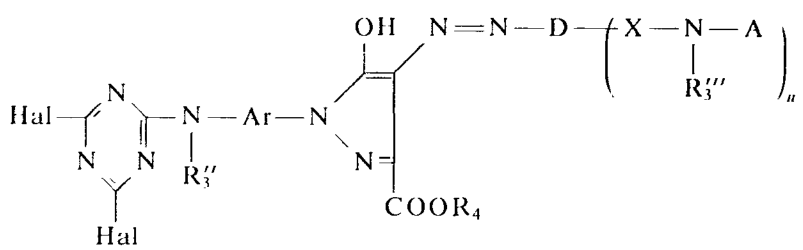

(IV)

wherein ar, D, A, $R_3''$, $R_3'''$, $R_4$, hal, X and n have the meanings given above, with the proviso that A does not represent a dihalogentriazine radical, is condensed with a phthalcyanine derivative of the formula V

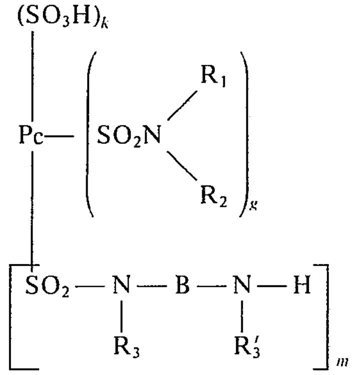

(V)

wherein Pc, B, $R_1$, $R_2$, $R_3$, $R_3'$, k, g and m have the meanings given above.

10. Use of water-soluble fibre-reactive phthalcyanine dyestuffs of the formula I as claimed in claims 1 to 6 for the dyeing of printing of cellulose and cellulose-containing textile materials.

**Revendications**

1. Colorants azoïques phthalocyaniques, solubles dans l'eau et réactifs à l'égard des fibres, qui répondent à la formule I

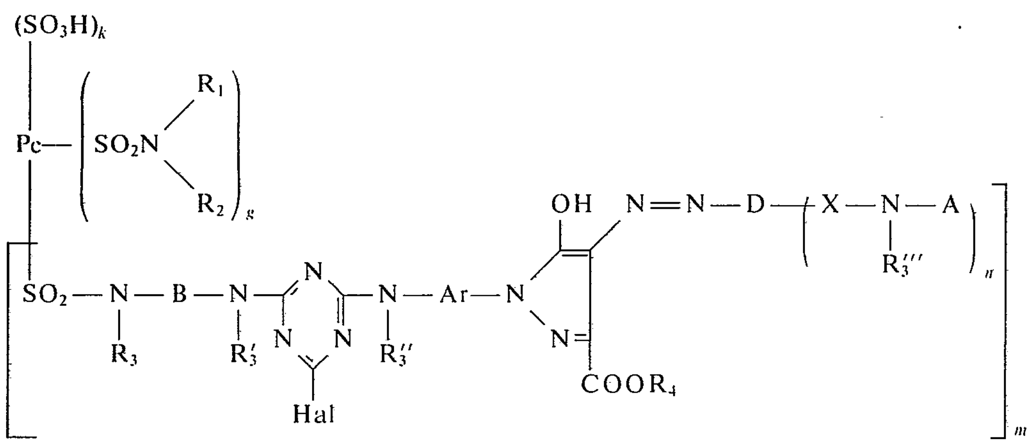

(I)

dans laquelle:
n est égal à 0 ou à 1,
Pc représente le radical d'une phthalocyanine métallisée ou non,
D représente, lorsque n est égal à 0, un radical phényle ou naphtyle ou un radical:

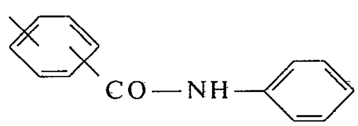

et, lorsque n est égal à 1, un radical phénylène ou naphtylène ou l'un des radicaux suivants:

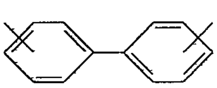 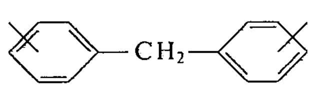 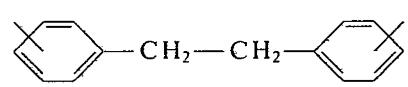

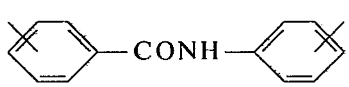 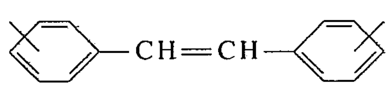 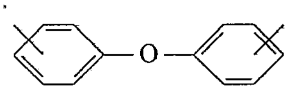

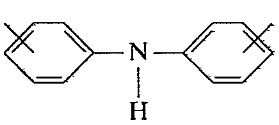 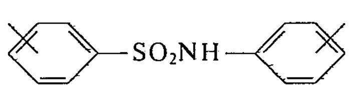 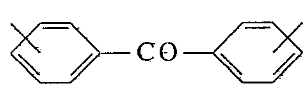

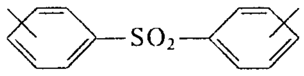 et 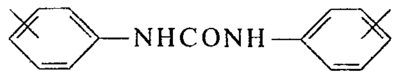

le radical D pouvant éventuellement porter, aussi comme substituant, un groupe $-SO_3H$ et pouvant porter en plus, par noyau, 1 substituant pris dans l'ensemble constitué par les alcoxy en Cl et C2 et les groupes $-SO_2R_5$ ou un groupe $-SO_3H$ supplémentaire, 1 ou 2 substituants, identiques ou différents, pris dans l'ensemble constitué par les halogènes et les groupes suivants:

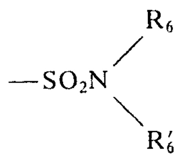 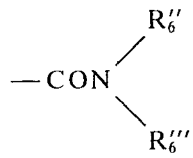 $-COOH$

ou de 1 à 3 substituants, identiques ou différents, pris dans l'ensemble constitué par les alkyles en C1 et C2,
ou représente un radical de formule:

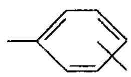 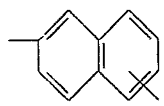 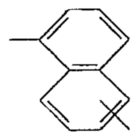 ou 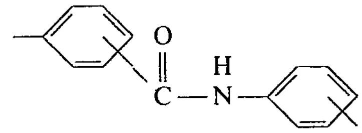

porteur d'un groupe vinylsulfonyle, $\beta$-sulfato-éthylsulfonyle, $\beta$-phosphato-éthylsulfonyle ou $\beta$-thiosulfato-éthylsulfonyle et en plus; éventuellement, d'un groupe $-SO_3H$, d'un alcoxy en C1 ou C2, d'un alkyle en C1 ou C2 ou d'un groupe $-COOH$,
ar représente un radical phénylène ou naphtylène, ou un des radicaux suivants:

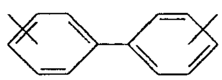 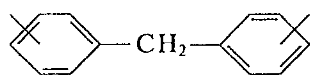 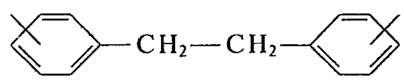

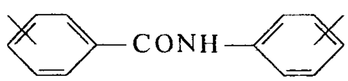 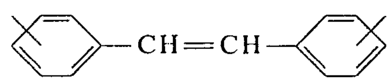 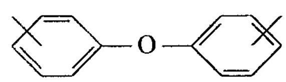

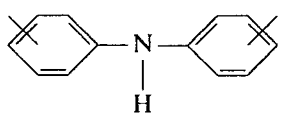 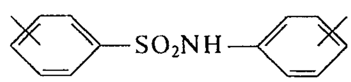 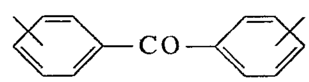

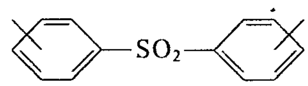 et 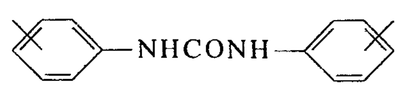

ou l'un des suivants:

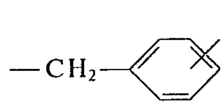 et 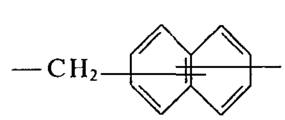

chacun de ces deux derniers radicaux étant relié par son pont méthylène au groupe

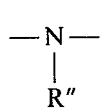

de l'halogénure de cyanuryle et chacun des radicaux qui viennent d'être cités pouvant porter un groupe $-SO_3H$ et, en plus, par noyau, 1 substituant pris dans l'ensemble constitué par les alcoxy en C1

et C2 et les groupes $-SO_2R_5$ ou un groupe $-SO_3H$ supplémentaire, 1 ou 2 substituants, identiques ou différents, pris dans l'ensemble constitué par les halogènes et les groupes suivants:

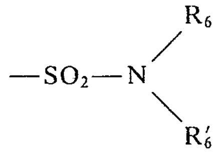 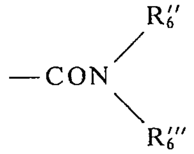 et $-COOH$

ou de 1 à 3 substituants, identiques ou différents, pris dans l'ensemble constitué par les alkyles en C1 et C2,
B représente le radical d'un hydrocarbure aliphatique contenant de 2 à 6 atomes de carbone ou un radical, éventuellement porteur d'un groupe $-SO_3H$, pris dans l'ensemble constitué par les radicaux phénylène et naphtylène, les radicaux:

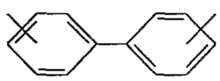 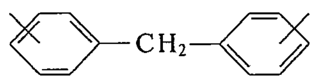 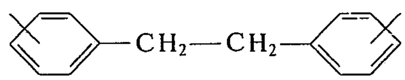

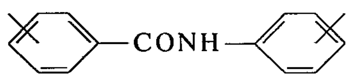 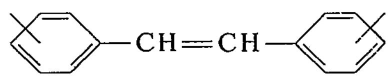 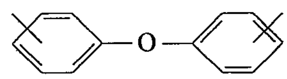

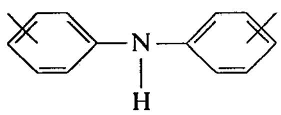 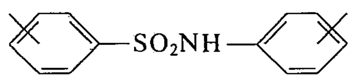 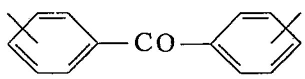

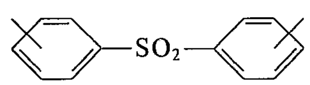 et 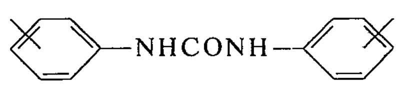

ainsi que:

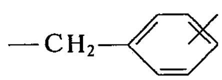 et 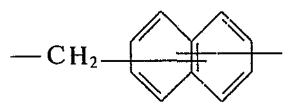

qui peut porter, par noyau, 1 substituant pris dans l'ensemble constitué par les alcoxy en C1 et C2 et les groupes $-SO_2R_5$ ou un groupe $-SO_3H$ supplémentaire, 1 ou 2 substituants, identiques ou différents, pris dans l'ensemble constitué par les halogènes et les groupes:

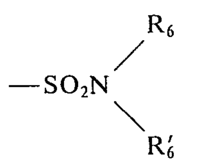 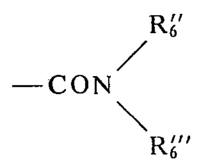 et $-COOH$

ou de 1 à 3 substituants, identiques ou différents, pris dans l'ensemble constitué par les alkyles en C1 et C2,
A représente le radical acyle d'un acide carboxylique aliphatique en C2–C6, saturé ou insaturé, éventuellement porteur d'atomes d'halogènes, le radical acyle de l'acide cyclohexane-carboxylique, le radical acyle de l'acide benzoïque ou benzène-sulfonique éventuellement porteur de 1 à 3 atomes d'halogènes, de 1 ou 2 alcoxy en C1–C2 ou de 1 à 3 alkyles en C1–C4, ou, plus spécialement, le radical d'une composante d'acylation réactive à l'égard des fibres pris dans les séries des triazines, des quinoxalines, des phtalazines, des pyridazines, des pyrimidines ou des acides carboxyliques aliphatiques insaturés en $\alpha,\beta$,
$R_1$ représente l'hydrogène, un radical méthyle, carboxyméthyle ou sulfométhyle, un radical alkyle en C2–C6 éventuellement porteur de Cl, Br, OH, d'un alcoxy en C1 ou C2, d'un alcanoylamino en C1 ou C2, de préférence acétylamino, ou d'un groupe $-COOH$ ou $-SO_3H$, ou un radical phényle, le noyau aromatique pouvant porter comme substituant un atome de chlore, un alkyle et/ou un alcoxy en C1 ou C2, un alcanoylamino en C1 ou C2, ou un groupe $-COOH$, $-CONH_2$, $-SO_2NH_2$, $-SO_2R_5$ ou $-SO_3H$,
$R_2$ représente l'hydrogène, un radical méthyle, carboxyméthyle ou sulfométhyle, un radical alkyle en C1–C6 éventuellement porteur de Cl, Br, OH, d'un alcoxy en C1 ou C2, d'un alcanoylamino en C1 ou C2, d'un benzoylamino ou d'un groupe $-COOH$ ou $-SO_3H$, ou un radical alkyle en C6–C20 non substitué,
$R_3$, $R_3'$, $R_3''$ et $R_3'''$ représentent chacun, indépendamment les uns des autres, l'hydrogène, un radical

méthyle, carboxyméthyle ou sulfométhyle, ou un radical éthyle éventuellement porteur d'un OH, d'un alcoxy en C1 ou C2, d'un $-COOH$ ou d'un $-SO_3H$,

$R_4$ représente l'hydrogène, un méthyle, un éthyle éventuellement porteur d'un OH, d'un halogène ou d'un alcoxy en C1 ou C2, un propyle, un n- ou isobutyle, un pentyle ou un hexyle,

$R_5$ représente un alkyle en C1 – C3, un carboxyméthyle, un $\beta$-hydroxyéthyle ou un phényle, ce dernier pouvant porter un radical alcoxy ou alkyle en C1 ou C2,

$R_6$, $R_6'$, $R_6''$ et $R_6'''$ représentent chacun l'hydrogène, un radical méthyle, carboxyméthyle ou sulfométhyle, ou un radical éthyle éventuellement porteur d'un OH, d'un alcoxy en C1 ou C2, ou d'un groupe $-COOH$ ou $-SO_3H$,

hal désigne le chlore, le brome ou le fluor,

X représente une liaison directe ou, dans le cas ou D est un radical dérivant du benzène ou du naphtalène,

X peut également être un radical méthylène ou éthylène,

k est égal à 1, à 2 ou à 3, g à 0 ou à 1, m à 1, à 2 ou à 3, la somme $(k+g+m)$ étant égale à 3 ou à 4,

ainsi que leurs sels de métaux alcalins, d'ammonium et de métaux alcalino-terreux.

2. Colorants azoïques phthalocyaniques, solubles dans l'eau et réactifs à l'égard des fibres, selon la revendication 1, caractérisés en ce que les radicaux D et/ou ar et/ou B, indépendamment les uns des autres, ne portent pas de substituants supplémentaires hormis des groupes carboxy et/ou sulfo.

3. Colorants azoïques phthalocyaniques, solubles dans l'eau et réactifs à l'egard des fibres, selon l'une des revendications 1 et 2, caractérisés en ce que D et/ou ar représentent chacun, indépendamment l'un de l'autre, un radical de la série:

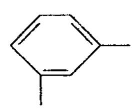

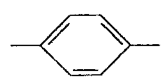

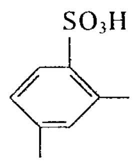

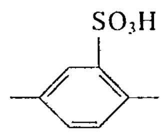

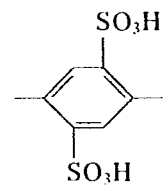

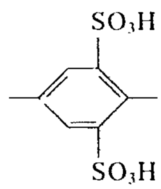

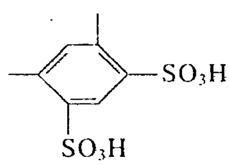

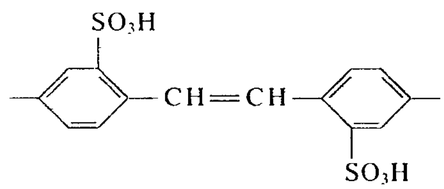

et

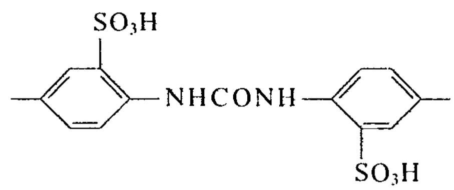

4. Colorants azoïques phtalocyaniques, solubles dans l'eau et réactifs à l'égard des fibres, selon l'une quelconque des revendications 1 à 3, caractérisés en ce que B représente un radical de la série:

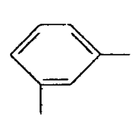

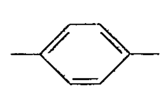

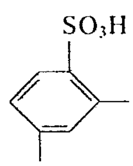

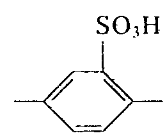

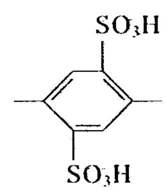

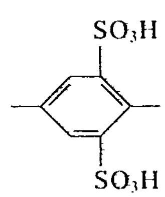

$-CH_2CH_2-$

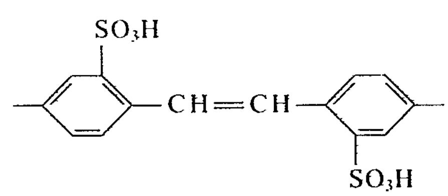

et

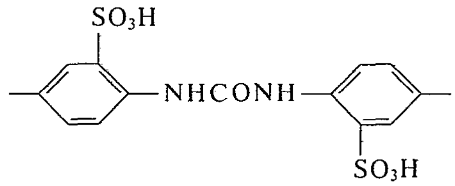

5. Colorants azoïques phtalocyaniques, solubles dans l'eau et réactifs à l'égard des fibres, selon l'une quelconque des revendications 1 à 4, caractérisés en ce que $R_5$ représente un radical méthyle, éthyle ou hydroxyéthyle.

6. Colorants azoïques phtalocyaniques, solubles dans l'eau et réactifs à l'égard des fibres, selon l'une quelconque des revendications 1 à 5, caractérisés en ce que $R_6$, $R_6'$, $R_6''$ et $R_6'''$ représentent chacun l'hydrogène.

7. Procédé de préparation de colorants azoïques phtalocyaniques, solubles dans l'eau et réactifs à l'égard des fibres, qui répondent à la formule I dans laquelle Pc, D, ar, B, A, $R_1$, $R_2$, $R_3$, $R_3'$, $R_3''$, $R_3'''$, $R_4$, hal, X, k, g, m et n ont les significations indiquées ci-dessus et la somme (k + g + m) est égale à 3 ou à 4, ainsi que de leurs sels de métaux alcalins, d'ammoniums ou de métaux alcalino-terreux, procédé caractérisé en ce qu'on diazote m moles d'une amine répondant à la formule II:

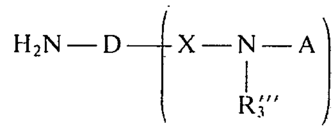 (II)

dans laquelle D, A, X, $R_3'''$ et n ont les significations indiquées ci-dessus, et on copule sur 1 mole d'une pyrazolone répondant à la formule générale III:

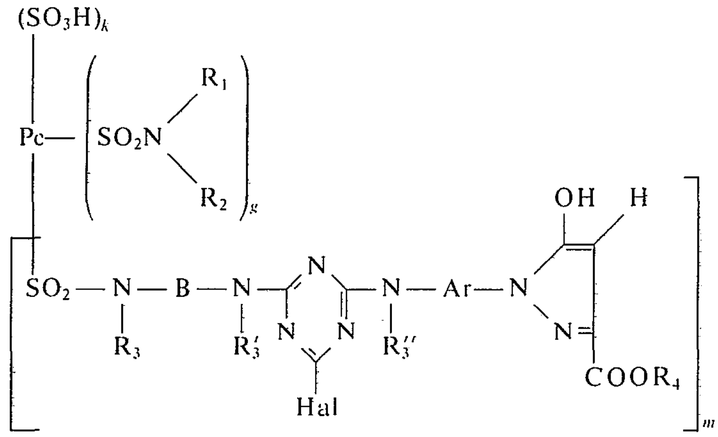 (III)

dans laquelle Pc, B, ar, $R_1$, $R_2$, $R_3$, $R_3'$, $R_3''$, $R_4$, k, g, m et hal ont les significations précédemment données.

8. Procédé de préparation de colorants azoïques phtalocyaniques, solubles dans l'eau et réactifs à l'égard des fibres, qui répondent à la formule I:

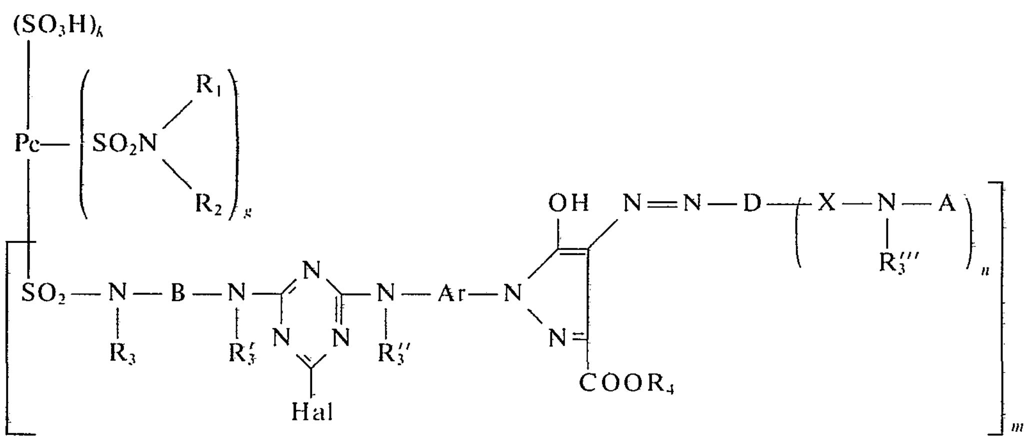 (I)

dans laquelle Pc, D, ar, B, A, $R_1$, $R_2$, $R_3$, $R_3'$, $R_3''$, $R_3'''$, $R_4$, hal, X, k, g, m et n ont les significations indiquées ci-dessus et la somme (k+g+m) est égale à 3 ou à 4, ainsi que de leurs sels de métaux alcalins, d'ammoniums ou de métaux alcalino-terreux, procédé caractérisé en ce qu'on condense m moles d'un colorant amino-azoïque répondant à la formule générale VI:

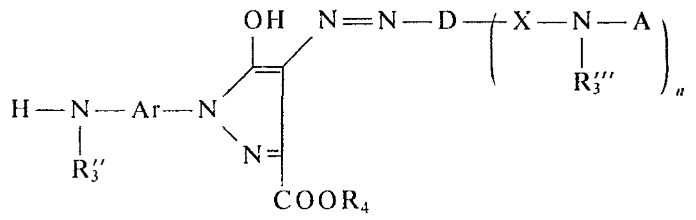
(VI)

dans laquelle ar, D, A, $R_3''$, $R_3'''$, $R_4$, X et n ont les significations précemment données sauf que A ne peut pas être un radical de dihalogéno-triazine, avec 1 mole d'un composé dihalogéno-triazinique répondant à la formule VII:

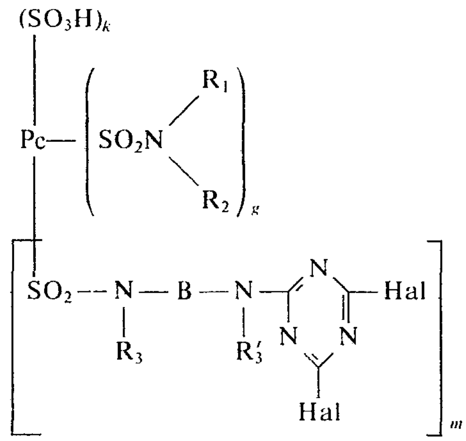
(VII)

dans laquelle Pc, B, $R_1$, $R_2$, $R_3$, $R_3'$, hal, k, g et m ont les significations précédemment données.

9. Procédé de préparation de colorants azoïques phtalocyaniques, solubles dans l'eau et réactifs à l'égard des fibres, qui répondent à la formule I:

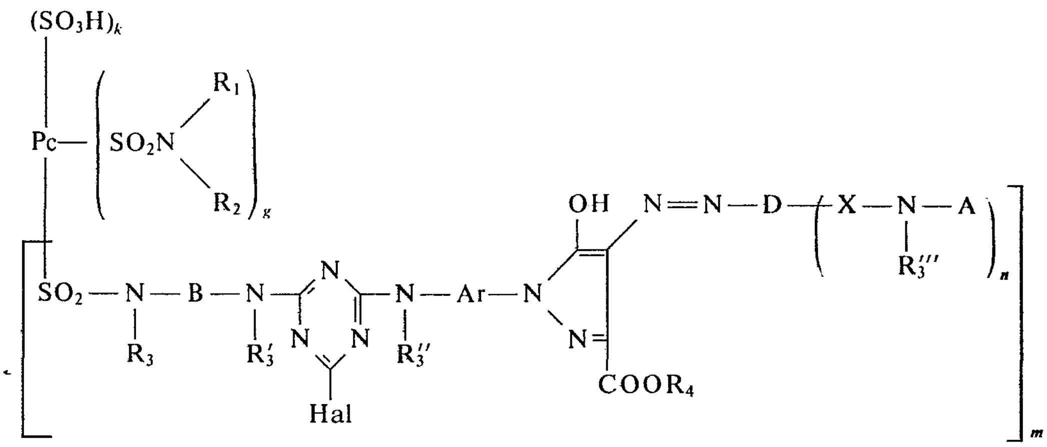
(I)

dans laquelle Pc, D, ar, B, A, $R_1$, $R_2$, $R_3$, $R_3'$, $R_3''$, $R_3'''$, $R_4$, hal, X, k, g, m et n ont les significations précédemment données et la somme (k+g+m) est égale à 3 ou à 4, ainsi que de leurs sels de métaux alcalins, d'ammoniums ou de métaux alcalino-terreux, procédé caractérisé en ce qu'on condense m

moles d'un colorant azoïque renfermant un radical de dihalogéno-triazine et répondant à la formule générale IV:

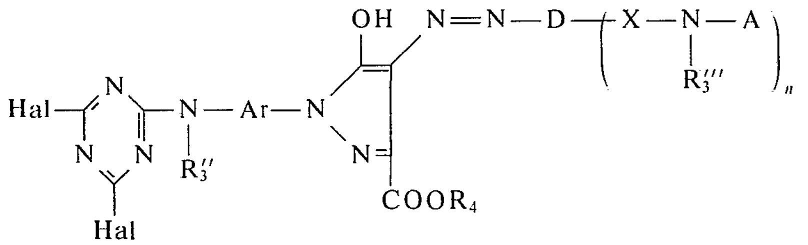

(IV)

dans laquelle ar, D, A, $R_3''$, $R_3'''$, $R_4$, hal, X et n ont les significations précédemment données sauf que A ne peut pas être un radical de dihalogéno-triazine, avec un composé phtalocyanique répondant à la formule V:

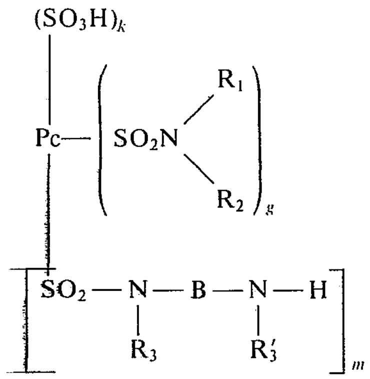

(V)

dans laquelle Pc, B, $R_1$, $R_2$, $R_3$, $R_3'$, k, g et m ont les significations précédemment données.

10. Utilisation de colorants azoïques phtalocyaniques de formule I, solubles dans l'eau et réactifs à l'égard des fibres, selon l'une quelconque des revendications 1 à 6, pour la teinture et l'impression de la cellulose et de matières textiles contenant de la cellulose.